(19) Europäisches Patentamt
European Patent Office
Office européen des brevets

(11) **EP 4 715 639 A1**

(12) **EUROPÄISCHE PATENTANMELDUNG**

(43) Veröffentlichungstag:
**25.03.2026   Patentblatt 2026/13**

(21) Anmeldenummer: **24202084.0**

(22) Anmeldetag: **24.09.2024**

(51) Internationale Patentklassifikation (IPC):
*G06F 21/16* *(2013.01)*

(52) Gemeinsame Patentklassifikation (CPC):
**G06F 21/16**

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**
Benannte Erstreckungsstaaten:
**BA**
Benannte Validierungsstaaten:
**GE KH MA MD TN**

(71) Anmelder: **CompuGROUP Medical Software GmbH**
**56070 Koblenz (DE)**

(72) Erfinder: **RODORFF, Werner**
**64646 Heppenheim / Sonderbach (DE)**

(74) Vertreter: **Richardt Patentanwälte PartG mbB**
**Wilhelmstraße 7**
**65185 Wiesbaden (DE)**

Bemerkungen:
Geänderte Patentansprüche gemäss Regel 137(2) EPÜ.

(54) **SICHERN EINER DATEI UNTER VERWENDUNG EINES WASSERZEICHENS**

(57)   Offenbart ist ein computerimplementiertes Verfahren zum Sichern einer Datei (100) unter Verwendung eines digitalen Wasserzeichens (102). Das Verfahren umfasst ein Empfangen der zu sichernden Datei (100) sowie des einzubettenden Wasserzeichens (102), welches eine Mehrzahl von Bitsequenzen. Die gesamte zu sichernden Datei (100) wird in eine Mehrzahl von Datenblöcke (106) aufgeteilt, welche jeweils unter Verwendung einer diskreten Frequenztransformation in eine Koeffizientenmatrix (112) transformiert und in eine Mehrzahl von Gruppen gruppiert werden. Das Wasserzeichen (102) wird in jede Gruppe der Mehrzahl von Gruppen eingebettet, wozu in jeder Gruppe jeweils ein Koeffizient (116) pro Koeffizientenmatrix (112), die einer Bitsequenz des Wasserzeichens (102) zugeordnet ist, in Abhängigkeit von einem Wert des zugeordneten Bitsequenzen geändert wird. Die geänderten Koeffizientenmatrizen (114) werden jeweils in einen geänderten Datenblock (107) unter Verwendung einer angewendeten inversen diskreten Frequenztransformation rücktransformiert. Die resultierende geänderte Datei (104) wird bereitgestellt.

| | |
|---|---|
| Empfangen zu sichernder Datei | 200 |
| Empfangen einzubettendes Wasserzeichen | 202 |
| Aufteilen in Datenblöcke | 204 |
| Transformieren der Datenblöcke in Koeffizientenmatrizen | 206 |
| Gruppieren der Koeffizientenmatrizen | 208 |
| Einbetten des Wasserzeichens | 210 |
| Rücktransformation geänderter Koeffizientenmatrizen | 212 |
| Bereitstellen resultierender geänderter Datei | 214 |

Fig. 1

**Beschreibung**

**GEBIET DER TECHNIK**

Die Erfindung betrifft ein Verfahren zum Sichern einer Datei unter Verwendung eines digitalen Wasserzeichens und eine entsprechend gesicherte Datei. Ferner betrifft die Erfindung ein Computerprogramm und eine Computervorrichtung zum Sichern einer Datei unter Verwendung eines digitalen Wasserzeichens. Schließlich betrifft die Erfindung ein Verfahren zum Identifizieren eines Ursprungs einer zu prüfenden Datei unter Verwendung eines digitalen Wasserzeichens.

**STAND DER TECHNIK**

Digitale Daten, welche in Form von Dateien bereitgestellt werden, finden in unserer modernen informationsbasierten Gesellschaft bzw. Informationsgesellschaft immer mehr Anwendung. Dabei verwendet die moderne Informationsgesellschaft in nahezu allen Lebensbereichen Informations- und Kommunikationstechnologien, welche sich auf eine Verarbeitung von Dateien stützen. Solche Dateien zeichnen sich unter anderem dadurch aus, dass Reproduktionskosten gering sind. Entsprechende digitale Daten bzw. Dateien können theoretisch ohne Mehrkosten beliebig oft zur Verfügung gestellt werden, wobei durch das Vervielfältigen bzw. Kopieren nahezu keine Qualitätsverluste auftreten. Dateien lassen sich mithin ungehindert vervielfältigen und teilen. Zudem lassen sich digitale Dateien im Allgemeinen einfach bearbeiten und ändern.

Vor diesem Hintergrund stellt ein Sichern solcher Dateien und insbesondere ein sicherer Nachweis der Herkunft entsprechender Dateien eine Herausforderung dar.

**ZUSAMMENFASSUNG**

Es ist eine Aufgabe der Erfindung, ein verbessertes Verfahren zum Sichern einer Datei unter Verwendung eines digitalen Wasserzeichens bereitzustellen. Ferner ist es eine Aufgabe der Erfindung, ein verbessertes Computerprogramm und eine verbesserte Computervorrichtung zum Sichern einer Datei unter Verwendung eines digitalen Wasserzeichens bereitzustellen. Schließlich ist es eine Aufgabe der Erfindung ein verbessertes Verfahren zum Identifizieren eines Ursprungs einer zu prüfenden Datei unter Verwendung eines digitalen Wasserzeichens bereitzustellen.

Die der Erfindung zugrunde liegenden Aufgaben werden durch die Merkmale der unabhängigen Ansprüche gelöst.

In einem Aspekt ist ein computerimplementiertes Verfahren offenbart zum Sichern einer Datei unter Verwendung eines digitalen Wasserzeichens. Das Verfahren umfasst ein Empfangen der zu sichernden Datei. Ferner wird das in die zu sichernde Datei einzubettende Wasserzeichen empfangen, welches als ein Herkunftsnachweis der zu sichernden Datei konfiguriert ist und einen der zu sichernden Datei zugeordneten Ursprung identifiziert. Das Wasserzeichen umfasst eine Mehrzahl von Bitsequenzen. Die gesamte zu sichernde Datei wird in eine Mehrzahl von Datenblöcke aufgeteilt. Die Datenblöcke werden transformiert und in eine Mehrzahl von Gruppen gruppiert. Das Transformieren umfasst ein Transformieren der Datenblöcke jeweils in eine Koeffizientenmatrix mit einer Mehrzahl von Koeffizienten einer auf den entsprechenden Datenblock angewendeten diskreten Frequenztransformation. Bei der diskreten Frequenztransformation handelt es sich um eine der folgenden diskreten Transformationen: eine diskrete Kosinustransformation, eine diskrete Sinustransformation. Allen Gruppen wird jeweils für jede Bitsequenz des Wasserzeichens eine Koeffizientenmatrix zugeordnet.

Das Wasserzeichen wird in jede Gruppe der Mehrzahl von Gruppen eingebettet. In jeder Gruppe der Mehrzahl von Gruppen wird jeweils ein Koeffizient pro zugeordneter Koeffizientenmatrix in Abhängigkeit von einem Wert der der entsprechenden Koeffizientenmatrix zugeordneten Bitsequenz des Wasserzeichens geändert. Die geänderten Koeffizientenmatrizen werden unter Verwendung einer auf die entsprechende Koeffizientenmatrix angewendeten inversen diskreten Frequenztransformation, d.h. einer zu der zuvor angewendeten Frequenztransformation inversen Frequenztransformation, jeweils in einen geänderten Datenblock rücktransformiert. Die resultierende geänderte Datei wird bereitgestellt.

Die resultierende geänderte Datei ist mit dem mehrfach in redundanter Form eingebetteten Wasserzeichen gesichert, das als Herkunftsnachweis den der Datei zugeordneten Ursprung identifiziert.

Eine solche Sicherung der Datei kann den Vorteil haben, dass sie ein hohe Maß an Sicherheit bieten und zugleich eine Verwendung der gesicherten Datei durch das eingebettete Wasserzeichen nicht beeinträchtigen wird.

Ein digitales Wasserzeichen bezeichnet eine Information, welche in eine Datei, etwa eine Bild-, Video-, Audio- oder Textdatei, eingebracht wird und in eingebetteter Form beispielsweise nicht-wahrnehmbar ist. Im Gegensatz zu Metadaten werden digitale Wasserzeichen mithilfe steganographischer Methoden direkt mit dem zu markierenden Inhalt der entsprechenden Dateien verflochten.

Ein diskrete Kosinustransformation ist eine reellwertige, diskrete, lineare, orthogonale Transformation, die ein zeitdiskretes Signal im Falle eines Zeitsignals von einem Zeitbereich in einen Frequenzbereich oder ein ortsdiskretes Signal im Falle eines räumlichen Signals von einem Ortsbereich in den Frequenzbereich transformiert. Ein diskrete Sinustransformation ist ebenfalls eine reellwertige, diskrete, lineare, orthogonale Transformation, die ein zeitdiskretes Signal im Falle eines Zeitsignals von einem Zeitbereich in einen Frequenzbereich oder ein ortsdiskretes Signal im Falle eines räumlichen Signals von einem Ortsbereich in den Frequenzbereich transformiert.

Beispielsweise umfasst das Wasserzeichen eine Ursprungs-ID des der zu sichernden Datei zugeordneten Ursprungs. Anhand dieser Ursprungs-ID kann der Ursprung der entsprechenden Datei eindeutig bestimmt werden. Beispielsweise handelt es sich bei der Ursprungs-ID um einen Identifikator eines Rechteinhabers der entsprechenden zu sichernden Datei.

Beispielsweise werden die Koeffizientenmatrizen der Reihe nach fortlaufend in die Gruppen gruppiert, sodass das Wasserzeichen fortlaufend wiederholt in die zu sichernde Datei eingebettet wird. Beispielsweise werden die Koeffizientenmatrizen einem vordefinierten Muster folgen in die Gruppen gruppiert, sodass Koeffizientenmatrizen aus unterschiedlichen Bildbereichen zur selben Gruppe gehören können. Beispielsweise wird das entsprechende vordefinierte Muster fortlaufend wiederholt.

Beispielsweise entspricht eine Größe der Gruppen der Mehrzahl von Gruppen, d.h. die Anzahl der von den Gruppen jeweils umfassten Koeffizientenmatrizen, jeweils einer Größe des Wasserzeichens bzw. der Anzahl der von dem Wasserzeichen umfassten Bitsequenzen. Somit kann beispielsweise jeder der Koeffizientenmatrizen der einzelnen Gruppen jeweils eine der Bitsequenzen des Wasserzeichens zugeordnet werden.

Beispielsweise entspricht die Größe der Gruppen jeweils exakt der Größe des Wasserzeichens, sodass jede Koeffizientenmatrix der Gruppen jeweils einer der Bitsequenzen des Wasserzeichens zugeordnet ist. Beispielsweise entspricht eine Anzahl an Koeffizientenmatrizen je Gruppe jeweils einer Anzahl an Bitsequenzen des Wasserzeichens.

Beispielsweise umfasst das Verfahren, falls ein Aufteilen der Koeffizientenmatrizen in die Gruppen im Zuge der Gruppierung nicht aufgeht, ferner ein Bilden einer unvollständigen Restgruppe, mit einer Größe, die kleiner als die Größe des Wasserzeichens ist, sodass die Restgruppe nicht für jede Bitsequenz des Wasserzeichens eine Koeffizientenmatrix umfasst, die der entsprechenden Bitsequenz des Wasserzeichens zugeordnet ist. Beispielsweise wird das Wasserzeichen in unvollständiger Form in die unvollständige Restgruppe eingebettet. Das unvollständige Einbetten des Wasserzeichens in die Restgruppe umfasst beispielsweise, dass jeweils ein Koeffizient pro Koeffizientenmatrix der Restgruppe, die einer Bitsequenz des Wasserzeichens zugeordnet ist, in Abhängigkeit von dem Wert der entsprechenden zugeordneten Bitsequenz des Wasserzeichens geändert wird.

Beispielsweise wird in jeder Gruppe der Mehrzahl von Gruppen jeweils genau ein Koeffizient pro Koeffizientenmatrix in Abhängigkeit von einem Wert der der entsprechenden Koeffizientenmatrix zugeordneten Bitsequenz des Wasserzeichens geändert.

Beispielsweise wird das Wasserzeichens in jede Gruppe der Mehrzahl von Gruppen so eingebettet, dass das Wasserzeichen mehrfach redundant in verschiedene Bereiche der zu sichernden Datei eingebracht wird.

Beispielsweise umfasst das Verfahren ferner ein Erzeugen der zu sichernden Datei. Beispielsweise umfasst das Verfahren ferner ein Erzeugen des einzubettenden Wasserzeichens. Beispielsweise handelt es sich bei dem Wasserzeichen um ein dateiindividuelles Wasserzeichen.

Zum Einbetten des Wasserzeichens in die Datei, beispielsweise eine Bilddatei, wird eine diskrete Frequenztransformation verwendet. Beispielsweise handelt es sich bei dieser diskreten Frequenztransformation um eine diskrete Kosinustransformation. Beispielsweise handelt es sich bei dieser diskreten Frequenztransformation um eine diskrete Sinustransformation.

Bei der Bilddatei handelt es sich beispielsweise um eine Bilddatei eines Graustufenbildes. Beispielsweise wird das Bild mit einem Rand versehen. In den Rand werden beispielsweise keine Bestandteile des Wasserzeichens eingebettet, d.h. der Rand bleibt beispielsweise unverändert. Ein Hinzufügen eines Randes kann beispielsweise den Vorteil haben, dass es für Dritte schwieriger ist Wasserzeichen zu entdecken und zu manipulieren. Beispielsweise wird zu einem Bild einer Größe von 1582 x 1183 Pixel ein 50 Pixel Rand hinzugefügt.

Beispielsweise wird zu dem Bild kein Rand hinzugefügt.

Das Bild wird in Blöcke aufgeteilt. Beispielsweise wird das Bild in Blöcke der Größe 8 x 8 Pixel aufgeteilt. Im Falle eines Bildes der Größe von 1480 x 1080 Pixel wird das Bild in 24.975 Blöcke der Größe 8 x 8 Pixel aufgeteilt. Die Blöcke werden beispielsweise in Gruppen gruppiert. Beispielsweise werden die Blöcke in Gruppen der Größe von 4096 Blöcken gruppiert. Beispielsweise resultieren so sechs Gruppen mit jeweils 4096 Blöcken sowie ein Gruppe mit 399 Blöcken.

Das Gruppieren der Blöcke erfolgt beispielsweise unter Verwendung eines Zufallsgenerator. Der Zufallsgenerator wird dazu verwendet ein oder mehrere Sequenzen von Zufallszahlen zu erzeugen, unter Verwendung derer die Gruppierung der Blöcke erfolgt. Der Zufallsgenerator ist beispielsweise dazu konfiguriert bei jedem Durchlauf unter Verwendung desselben Seeds jeweils dieselbe Sequenz von Zufallszahlen zu erzeugen.

Für jeden der Blöcke wird beispielsweise eine diskrete Kosinustransformation (englisch: "Discrete Cosine Transformation"/DCT) oder eine diskrete Sinustransformation (englisch: "Discrete Sine Transformation"/DST) durchgeführt. Die DCT bzw. DST wandelt jeweils die Pixelwerte des entsprechenden Blocks in Frequenzkoeffizienten um. Dabei werden in einer resultierenden Koeffizientenmatrix, deren Größe beispielsweise der Größe des entsprechenden transformierten Blocks entspricht, verschiedene Frequenzanteile des ursprünglichen Blocks dargestellt. Im Falle eines 8 x 8 Blocks resultiert aus der Anwendung der DCT bzw. DST beispielsweise eine Koeffizientenmatrix, welche 64 verschiedene Frequenzanteile des ursprünglichen 8 x 8 Blocks darstellt.

Das Wasserzeichen wird beispielsweise in Form eines Bildes bereitgestellt. Beispielsweise wird das Wasserzeichen in Form eines Schwarzweißbildes bereitgestellt. Dabei können die Werte der einzelnen Pixel des Wasserzeichens entweder weiß oder schwarz sein. Im Falle eines Binärbildes werden den Pixeln beispielsweise die Pixelwerte 1 oder 0 für Weiß und Schwarz zugeordnet. In diesem Fall handelt es sich bei den grundlegenden Bitsequenzen beispielsweise um einzelne Bits, welche jeweils einen Pixelwert definieren. Beispielsweise kann es sich bei dem Schwarzweißbild auch um ein Schwarzweißbild handeln, welches eine Graustufenformatierung verwendet. In diesem Fall werden beispielsweise nur die Pixelwerte 255 für Weiß und 0 für Schwarz verwendet. In diesem Fall handelt es sich bei den grundlegenden Bitsequenzen zum Beispiel um Sequenzen aus 8 Bits, welche jeweils einen Pixelwert definieren.

Die Koeffizientenmatrizen der einzelnen Gruppen der Mehrzahl von Gruppen werden jeweils Bitsequenzen des Wasserzeichens zugeordnet. Beispielsweise ist eine Anzahl an Blöcken pro Gruppe und damit an Koeffizientenmatrizen pro Gruppe, welche aus der DCT bzw. DST resultieren, gleich oder kleiner der Anzahl an Bitsequenzen des Wasserzeichens. Beispielsweise werden die Koeffizientenmatrizen jeweils Pixeln eines Wasserzeichenbildes zugeordnet. Beispielsweise ist eine Anzahl an Blöcken pro Gruppe und damit an Koeffizientenmatrizen pro Gruppe, welche aus der DCT bzw. DST resultieren, gleich oder kleiner der Anzahl an Pixeln des Wasserzeichens.

Beispielsweise beträgt die Anzahl an Blöcken ein ganzzahliges Vielfaches der Anzahl an Bitsequenzen des Wasserzeichens. In diesem Fall umfasst jede Gruppen beispielsweise eine Anzahl an Blöcken und damit an Koeffizientenmatrizen, welche der Anzahl an Bitsequenzen des Wasserzeichens entspricht. Beispielsweise wird jede der Koeffizientenmatrizen jeweils einer der Bitsequenzen des Wasserzeichens zugeordnet. Somit umfasst jede der Gruppen beispielsweise jeweils für jede der Bitsequenzen des Wasserzeichens eine der entsprechenden Bitsequenz zugeordnete Koeffizientenmatrix.

Beispielsweise ist die Anzahl an Blöcken kein ganzzahliges Vielfaches der Anzahl an Bitsequenzen des Wasserzeichens. Beispielsweise entspricht die Anzahl an Blöcken einem ganzzahligen Vielfachen der Anzahl an Bitsequenzen des Wasserzeichens plus einem Rest, welcher kleiner der Anzahl an Bitsequenzen des Wasserzeichens ist. In diesem Fall können die Blöcke beispielsweise derart gruppiert werden, dass eine Mehrzahl von Gruppen resultiert, deren Anzahl an Blöcken und damit an Koeffizientenmatrizen, jeweils der Anzahl an Bitsequenzen des Wasserzeichens entspricht, plus eine Restgruppe, welche die Blöcke des Rests umfasst. Die Anzahl der von der Restgruppe umfasst Blöcke entspricht dabei dem Rest an Blöcken, welcher kleiner der Anzahl an Bitsequenzen des Wasserzeichens ist. Beispielsweise wird jede der Koeffizientenmatrizen, der Gruppen deren Anzahl an Blöcken der Anzahl an Bitsequenzen des Wasserzeichens entspricht, jeweils einer der Bitsequenzen des Wasserzeichens zugeordnet. Somit umfasst jede dieser Gruppen beispielsweise jeweils für jede der Bitsequenzen des Wasserzeichens eine der entsprechenden Bitsequenz zugeordnete Koeffizientenmatrix. Die Koeffizientenmatrizen der Restgruppe werden beispielweise ebenfalls jeweils einer der Bitsequenzen des Wasserzeichens zugeordnet. Dabei umfasst die Restgruppe aber nur für einen Teil der Bitsequenzen des Wasserzeichens jeweils eine der entsprechenden Bitsequenz zugeordnete Koeffizientenmatrix. Beispielsweise umfasst die Restgruppe N Koeffizientenmatrizen, welche den ersten N Bitsequenzen des Wasserzeichens zugeordnet sind, das M Bitsequenzen umfasst mit N < M und N, $M \in \mathbb{N}$ .

Beispielsweise werden für jede Bitsequenz des Wasserzeichens in den Gruppen der Mehrzahl von Gruppen jeweils diejenigen transformierten Blöcke der Datei, d.h. Koeffizientenmatrizen, modifiziert, die der entsprechenden Bitsequenz zugeordnet sind. Beispielsweise werden für jedes Pixel eines Wasserzeichens in Form eines Schwarzweißbildes in den Gruppen der Mehrzahl von Gruppen jeweils diejenigen transformierten Blöcke der Datei, d.h. Koeffizientenmatrizen, modifiziert, die der entsprechenden Bitsequenz zugeordnet sind. Umfasst beispielsweise jede der Gruppen jeweils eine der entsprechenden Bitsequenz zugeordnete Koeffizientenmatrix, wird in jeder Gruppen eine Koeffizientenmatrix in Abhängigkeit von dieser Bitsequenz modifiziert. Umfasst beispielsweise jede der Gruppen bis auf eine Restgruppe der Mehrzahl von Gruppen jeweils eine der entsprechenden Bitsequenz zugeordnete Koeffizientenmatrix, wird in jeder der entsprechenden Gruppen bis auf die Restgruppe eine Koeffizientenmatrix in Abhängigkeit von dieser Bitsequenz modifiziert.

Beispielsweise beträgt eine Größe des Wasserzeichenbildes, etwa eines Schwarzweißbildes, 64 x 64 Pixel = 4096 Pixel. Beispielsweise wird eine Bilddatei der Größe 1480 x 1080 Pixel in 185 x 135 = 24.975 Blöcke der Größe 8 x 8 Pixel aufgeteilt. Werden diese 24.975 Blöcke in Gruppen der Größe 4096 Blöcke aufgeteilt, resultieren beispielsweise sechs Gruppen mit jeweils 4096 Blöcken sowie ein Restgruppe mit 399 Blöcken. Die sechs Gruppen mit 4096 Blöcken umfassen beispielsweise für jedes Pixel des Wasserzeichenbildes jeweils eine zugeordnete Koeffizientenmatrix. Die Restgruppe umfasst für einen Teil der Pixel des Wasserzeichenbildes jeweils eine zugeordnete Koeffizientenmatrix, genauer gesagt für 399 Pixel. Für 3697 Pixel des Wasserzeichenbildes umfasst die Restgruppe beispielsweise keine zugeordnete Koeffizientenmatrix. Diese bedeutet, dass das Wasserzeichenbild in sechs Gruppen vollständig und in die Restgruppe teilweise eingebettet werden kann.

Für jedes Pixel des 64 x 64 Pixel =4096 Pixel großen Schwarzweiß-Wasserzeichenbildes werden diejenigen DCT-transformierten Blöcke, d.h. Koeffizientenmatrizen, in der Datei, beispielsweise einem Graustufenbild modifiziert, welche dem entsprechenden Pixel zugeordnet sind. Beispielsweise werden in den sechs Gruppen mit 4096 Blöcken jeweils 4096 Blöcke modifiziert, während in der Restgruppe mit 399 Blöcken 399 Blöcke modifiziert werden.

Wenn ein Pixel in dem Schwarzweißwasserzeichenbild weiß ist, wird ein Koeffizient der dem Pixel jeweils zugeordneten Koeffizientenmatrix beispielsweise in einer ersten Weise modifiziert. Weiß bedeutet beispielsweise, dass ein Wert der Bitsequenz, welche das entsprechende Pixel definiert, 1 für ein binärformatiertes Schwarzweißbild oder 255 für ein graustufenformatiertes Schwarzweißbild beträgt. Wenn ein Pixel in dem Schwarzweißwasserzeichenbild schwarz ist, wird ein Koeffizient, der dem Pixel jeweils zugeordneten Koeffizientenmatrix beispielsweise in einer zweiten Weise modifiziert. Schwarz bedeutet beispielsweise, dass ein Wert der Bitsequenz, welche das entsprechende Pixel definiert, 0 beträgt für ein binär- oder graustufenformatiertes Schwarzweißbild.

Beispielsweise wird der betreffende Koeffizient, etwa ein erster Koeffizient der entsprechenden Koeffizientenmatrix, im Falle eines weißen Pixels bzw. eines Pixelwerts für Weiß auf einen geraden Wert gerundet, beispielsweise abgerundet, und im Falle eines schwarzen Pixels bzw. eines Pixelwerts für Schwarz auf einen ungeraden Wert gerundet, beispielsweise abgerundet. Eine solche Rundung kann beispielsweise auch für bzw. ab einer bestimmten Nachkommastellen erfolgen. Es können somit auch Ziffernpositionen einer Zehnerpotenzen $10^{-n}$ mit geeignetem $n \in N$ verwendet werden.

Nach der Modifikation der Koeffizientenmatrizen wird eine inverse DCT bzw. DST durchgeführt. Dabei werden die Blöcke bzw. Koeffizientenmatrizen beispielsweise vom Frequenzbereich zurück zu einem Datenwertbereich, etwa einen Bild- bzw. Pixelwertbereich im Falle einer Bilddatei, transformiert. Die resultierende modifizierte Datei umfasst mithin die modifizierten Blöcke. Beispielsweise umfasst eine resultierende modifizierte Bilddatei, etwa ein modifiziertes Graustufenbild, die modifizierten Blöcke aus Graustufenpixelwerten.

Ein Extrahieren und Prüfen des Wasserzeichens können beispielsweise unter Verwendung eines umgekehrten Verfahrens erfolgen.

Beispielsweise werden für die Bitsequenzen des Wasserzeichens jeweils die zugeordneten Blöcke identifiziert. Da das Wasserzeichen in redundanter Form mehrfach in die modifizierte Datei eingebettet ist, genügt es grundsätzlich beispielsweise für jede der Bitsequenzen des zu prüfenden Wasserzeichens jeweils einen zugeordneten Block zu identifizieren. Beispielsweise werden pro Bitsequenz des zu prüfenden Wasserzeichens mehr als ein zugeordneter Block der modifizierten Datei identifiziert. Beispielsweise werden pro Bitsequenz des zu prüfenden Wasserzeichens jeweils alle zugeordneten Blöcke der modifizierten Datei identifiziert. Die ein oder mehreren zusätzlichen Blöcke können beispielsweise zur Überprüfung verwendet werden.

Falls die Zuordnung der Koeffizienten zu den Bitsequenzen des Wasserzeichens im Zuge des Einbettens zufallsbasiert erfolgt ist, etwa unter Verwendung eines deterministischen Zufallsalgorithmus, wird im Zuge der Prüfung dieselbe zufallsbasierte Zuordnung reproduziert, etwa unter Verwendung desselben deterministischen Zufallsalgorithmus. Beispielsweise wird jeweils derselbe Seedwert zum Bestimmen der zufallsbasierten Zuordnung verwendet.

Die Blöcke der zu prüfenden modifizierten Datei werden einer DCT bzw. DST unterzogen.

Anhand der Koeffizienten der resultierenden Koeffizientenmatrizen, welche den Bitsequenzen des Wasserzeichens zugeordnet sind, wird geprüft, ob das Wasserzeichen bzw. welches Wasserzeichen in diese eingebettet ist. Beispielsweise kann anhand einer Eigenschaft der entsprechenden Koeffizienten, etwa ob sie gerade oder ungerade sind, ein Wert der zugeordneten Bitsequenzen des Wasserzeichens, etwa ein Pixelwert, abgelesen werden. Beispielsweise wird für einen geraden Koeffizienten der zugeordnete Pixelwert eines Wasserzeichens in Form eines Schwarzweißbildes auf weiß gesetzt. Im Falle einer Graustufenformatierung bedeutet dies beispielsweise, dass die zugeordnete Bitsequenz auf den Wert 255 gesetzt wird. Im Falle einer Binärformatierung bedeutet dies beispielsweise, dass die zugeordnete Bitsequenz auf den Wert 1 gesetzt wird. Beispielsweise wird für einen ungeraden Koeffizienten der zugeordnete Pixelwert eines Wasserzeichens in Form eines Schwarzweißbildes auf schwarz gesetzt. Für eine Graustufenformatierung wie auch für eine Binärformatierung bedeutet dies beispielsweise, dass die zugeordnete Bitsequenz auf den Wert 0 gesetzt wird.

Alternativerweise kann eine DCT-transformierte Referenzdatei bereitgestellt werden, wobei die Referenzdatei der zu prüfenden Datei ohne das eingebettete Wasserzeichen entspricht. Beispielsweise werden Unterschiede zwischen den Koeffizientenmatrizen und der DCT-transformierte Referenzdatei bestimmt. Unter Verwendung der Unterschiede wird beispielsweise das Wasserzeichen bestimmt.

Beispielsweise kann das Wasserzeichen unter Verwendung der DCT bzw. DST so eingebettet werden, dass es für das menschliche Auge praktisch unsichtbar ist. Dies kann insbesondere dann der Fall sein, wenn die Änderungen der Koeffizienten in einem Frequenzbereich erfolgen, auf den das menschliche Auge vergleichsweise weniger empfindlich reagiert. Beispielsweise reagiert das menschliche Auge umso weniger, je höher die Frequenz ist. Gleichzeitig ist es möglich, das Wasserzeichen aus dem Bild zu extrahieren, indem man den Prozess umkehrt und die DCT-Koeffizienten analysiert.

Bei Bildern kann die DCT bzw. DST beispielsweise dazu verwendet werden, Pixelwerte eines Blocks von Pixeln, d.h. eines Segments des Bildes, in eine Koeffizientenmatrix mit Frequenzkoeffizienten umzuwandeln. Diese Koeffizienten repräsentieren die Intensität verschiedener Frequenzmuster bzw. Frequenzanteile in dem entsprechenden Block bzw. Bildsegment. Niederfrequente Anteile beschreiben grundlegende, weit verbreitete Muster, während hochfrequente Anteile feine Details und Kanten darstellen.

Die niederwertigen Koeffizienten, d.h. Matrixelemente der Koeffizientenmatrix mit niederwertigen Koeffizienten, repräsentieren niedrige Frequenzanteile der Datei, gefolgt von mittleren Koeffizienten, d.h. Matrixelemente der Koeffizientenmatrix mit mittleren Koeffizienten, die mittlere Frequenzanteile der Datei repräsentieren, und hohen Koeffizienten, d.h. Matrixelemente der Koeffizientenmatrix mit hohem Koeffizienten, die hohe Frequenzanteile der Datei repräsentieren.

Das erste Element bzw. der erst Koeffizient einer DCT-Koeffizientenmatrix, welches bzw. welcher auch als DC-Koeffizient bezeichnet wird, repräsentiert einen durchschnittlichen Pixelwert der Pixels innerhalb eines entsprechenden Blocks. Man kann diesen Koeffizienten auch als den Basispegel oder Gleichanteil des entsprechenden Blocks betrachtet werden.

Die restlichen Koeffizienten der Koeffizientenmatrix repräsentieren Intensität und Phase der verschiedenen kosinusförmigen oder sinusförmigen Wellen, welche benötigt werden, um die Originalpixelwerte des Blocks zu rekonstruieren. Diese Koeffizienten werden auch als AC-Koeffizienten bezeichnet. Die AC-Koeffizienten sind in der Koeffizientenmatrix nach aufsteigender Frequenz angeordnet: Die Koeffizienten nahe an dem DC-Koeffizienten repräsentieren niedrigere Frequenzen, während die weiter entfernten Koeffizienten höhere Frequenzen repräsentieren.

Die DCT bzw. DST hat den Vorteil, dass sie dazu neigt, die Energie eines transformierten Signals, wie etwa eines Bildes, in wenige Koeffizienten zu konzentrieren. Dies bedeutet, dass viele Koeffizienten klein sind. Für das Wasserzeichenverfahren ist dies vorteilhaft, da Änderungen an den DCT-Koeffizienten, insbesondere an hochfrequenten Koeffizienten, für das menschliche Auge schwer zu erkennen sind, sodass das Wasserzeichen versteckt bleibt.

Eine Variation, insbesondere eine zufallsbasierte Variation des Koeffizienten in den Koeffizientenmatrizen, der jeweils modifiziert wird, kann den Vorteil haben, dass das Wasserzeichen damit besser abgesichert werden kann. So kann beispielsweise verhindert werden, dass ein Angreifer das Wasserzeichen entfernt, indem er die modifizierte Datei unter Verwendung einer DCT bzw. DST transformiert und gezielt in allen Koeffizientenmatrizen jeweils denselben Koeffizienten verändern oder auf null setzt.

Ein Einbetten von Daten des Wasserzeichens in alle Blöcke der zu sichernden Datei kann den Vorteil haben, dass das Wasserzeichen über die gesamte Datei verteilt wird und damit weniger anfällig für gezielte Angriffe oder Verlust durch eine Bearbeitung der Datei, beispielsweise eine Bildbearbeitung im Falle einer Bilddatei. Wenn eine Datei, etwa eine Bilddatei skaliert, zugeschnitten und/oder oder anderweitig manipuliert wird, können sich dadurch die Positionen einzelner Blöcke, innerhalb der Datei ändern. Falls nur diese einzelnen Blöcke Daten des Wasserzeichens enthalten, kann dadurch das Wasserzeichen verloren gehen oder unleserlich werden, da etwa die für eine Rekonstruktion des Wasserzeichens notwendigen Informationen nicht mehr korrekt zugeordnet werden können. Dieses Risiko kann beispielsweise verringert werden, indem alle Blöcke der zu sichernden Datei Daten des Wasserzeichens umfassen.

Eine Verwendung eines reproduzierbaren Zufallsgenerators, um die zu modifizierenden Koeffizienten auszuwählen, kann den Vorteil haben, dass ein Entfernen des Wasserzeichens aus der modifizierten Datei erschwert werden kann, da ohne Kenntnis des Seedwerts nicht bestimmt werden kann, welche Koeffizienten modifiziert wurden und mithin die Daten des Wasserzeichens tragen.

Ein Verwenden von Koeffizienten aus dem Bereich niedriger bis mittlerer Frequenzen, kann den Vorteil haben, dass die Einbettung des Wasserzeichens in diesem Fall weniger anfällig für Veränderungen durch Rauschen oder Glättungsfilter. Koeffizienten, die niedrige bis mittlere Frequenzen repräsentieren, sind im Allgemeinen weniger anfällig für Veränderungen durch Rauschen oder Glättungsfilter. Entsprechende Veränderungen betreffen vorrangig hochfrequente Koeffizienten. Durch ein Einbetten des Wasserzeichens in die Koeffizienten aus dem Bereich niedriger bis mittlerer Frequenzen kann mithin verhindert werden, dass das Wasserzeichen durch ein gezieltes Verändern hochfrequenter Koeffizienten, etwa mittels Rauschen oder Glättung, aus der modifizierten Datei entfernt werden kann.

Ebenso kann dadurch ein Stören oder Entfernen des Wasserzeichens durch Kompressionsalgorithmen und andere Bildbearbeitungsprozesse verhindert werden. Bei solchen Kompressionsalgorithmen und anderen Bildbearbeitungsprozessen sind hochfrequente Koeffizienten oft die ersten Koeffizienten, die verändert oder verworfen werden. Durch ein Einbetten des Wasserzeichens in die Koeffizienten aus dem Bereich niedriger bis mittlerer Frequenzen kann mithin verhindert werden, dass das Wasserzeichen durch ein gezieltes Verändern hochfrequenter Koeffizienten, etwa mittels eines Kompressionsalgorithmus oder eines anderen Bildbearbeitungsprozesses, aus der modifizierten Datei entfernt werden kann.

Ein Verwenden von Koeffizienten aus dem Bereich niedriger bis mittlerer Frequenzen kann mithin die Robustheit der Einbettung des Wasserzeichens in die Datei gegenüber gezielten Angriffen ebenso wie gegen gewöhnliche Bildbearbeitungsverfahren erhöhen. Durch die Verteilung des Wasserzeichens über die gesamte Datei mittels einer mehrfachen redundanten Einbettung und die Verwendung eines reproduzierbaren, aber zufälligen Auswahlprozesses für die modifizierten Koeffizienten, d.h. die Koeffizienten, in welche Daten des Wasserzeichens eingebettet werden, wird es für Angreifer schwieriger, das Wasserzeichen zu entfernen, ohne die mit dem Wasserzeichen gesicherte Datei selbst signifikant zu beschädigen. Somit kann beispielsweise insbesondere eine Nutzung der Datei nach dem Entfernen des Wasserzeichens erschwert und/oder verhindert werden.

Das Wasserzeichen wird mehrfach in der zu schützenden Datei verteilt eingebettet, was Redundanz schafft. Durch die mehrfache Einbettung des Wasserzeichens steigt die Chance, dass zumindest ein Teil des Wasserzeichens, selbst nach einer Manipulation der Datei, wie etwa einer Bildbearbeitung, intakt bleibt. Dies kann selbst dann gelten, wenn ganze Teile der Datei verändert oder gar gelöscht werden.

Bei der Einbettung des Wasserzeichens können entsprechende zusätzliche vordefinierte Bitsequenzen als Marker bzw. Kennungen dazu verwendet werden, den Anfang und/oder das Ende der Wasserzeicheninformation innerhalb der Datei zu identifizieren. Diese Marker können als spezielle Bitsequenzen realisiert sein, welche beispielsweise spezielle Textkennungen oder zweidimensionale Muster codieren und das Wasserzeichen einrahmen. Im Falle eines Wasserzeichens im Form einer Textsequenz können die Marker beispielsweise den Anfang und das Ende des entsprechenden Textes markieren, d.h. eindimensional einrahmen. Im Falle eines Wasserzeichen im Form einer Bilddatei können die Marker beispielsweise einen zweidimensionalen Rahmen der entsprechenden Bilddatei bilden und das Wasserzeichen mithin zweidimensional einrahmen.

Eine Verwendung von Start- und Endsequenzen kann den Vorteil haben, dass diese einen Anfang und ein Ende des Wasserzeichens markieren können, wodurch ein korrektes Extrahieren der Wasserzeicheninformationen erleichtert werden kann.

Selbst wenn die modifizierte Datei nach dem Einbetten des Wasserzeichens bearbeitet wird, beispielsweise beschnitten und/oder skaliert wird, bleiben zumindest Teile des mehrfach eingebetteten Wasserzeichens erhalten. Ein Verwenden von Kennungen, welche jeweils Anfang und Ende des mehrfach in die Datei eingebetteten Wasserzeichens kennzeichnen, können es ermöglichen, die verbliebenen Teile des Wasserzeichens leichter zu erkennen und zuzuordnen. Selbst wenn nur Fragmente des Wasserzeichens vorhanden sind, kann durch das Erkennen der Kennungen eine Rekonstruktion des vollständigen Wasserzeichens erleichtert werden.

Beispiele ermöglichen es verschiedene erhaltene Fragmente des mehrfach in redundanter Form in die Datei eingebetteten Wasserzeichens, die über das Bild verteilt sind, das entsprechende Wasserzeichen zu kombinieren. So kann ein komplettes Wasserzeichen rekonstruiert werden, selbst wenn kein einzelnes Fragment des Wasserzeichens vollständig ist.

Dieser Ansatz kann die Robustheit der Einbettung des Wasserzeichens gegen Manipulationen erhöhen, da er nicht auf die physische Unversehrtheit des gesamten Wasserzeichens angewiesen ist, sondern bereits Teile bzw. Fragmente davon nutzbar macht, um das Wasserzeichen zu rekonstruieren.

Beispiele ermöglichen es nicht nur, ein Wasserzeichen so in eine Datei einzubetten, dass es für das menschliche Auge nahezu unsichtbar ist, sondern dass die Einbettung gleichzeitig robust gegen Bildmanipulationen ist. Insbesondere kann die Einbettung beispielsweise robust Skalieren und/oder Beschneiden der Datei sein. Somit kann ein robusteres Verfahren zum Einbetten eines Wasserzeichens in eine zu sichernde Datei bereitgestellt werden.

Beispielsweise kann eine Positionierung des Wasserzeichens im Zuge der Einbettung in die zu sichernde Datei flexibel erfolgen, um die Einbettung gegen Veränderungen widerstandsfähiger zu gestalten.

Beispielsweise umfasst die Mehrzahl von Bitsequenzen ein oder mehrere Kennungen in Form von ein oder mehreren Sätzen von ein oder mehreren vorbestimmten Bitsequenzen, welche das Wasserzeichen einrahmen und einen Anfang sowie ein Ende des Wasserzeichens kennzeichnen.

Beispiele können den Vorteil haben, dass anhand der Kennungen in Form der vorbestimmten Bitsequenzen die Grenzen der in die Datei eingebetteten Kopien des Wasserzeichens bestimmt werden können. Es kann also beispielsweise bestimmt werden, wo eine Kopie des Wasserzeichens beginnt und eine andere endet. Insbesondere wenn die Datei bearbeitet wurde, sodass sich Positionen von Wasserzeichens innerhalb der Datei verschoben haben und/oder die Datei beschnitten wurde, und die bearbeitete Datei unvollständige Kopien des Wasserzeichens umfasst, können anhand der Kennungen unterschiedliche Fragmente des Wasserzeichens identifiziert und gegebenenfalls voneinander unterschieden werden.

Im Falle einer linear Datenstruktur des Wasserzeichens, etwa im Fall einer Textsequenz, einer Tonsequenz und/oder Videosequenz, welche mehrfach hintereinander in die zu sichernde Datei eingefügt wird, welche beispielsweise ebenfalls eine lineare Datenstruktur aufweist, rahmen die Kennungen die Kopien des Wasserzeichens ein, indem sie jeweils am Anfang und am Ende des Wasserzeichens angeordnet werden. Beispielsweise handelt es sich bei der zu sichernden Datei mit der linearen Datenstruktur um eine Textdatei, Audiodatei oder Videodatei.

Im Falle einer zweidimensionalen Datenstruktur des Wasserzeichens, etwa im Fall einer Bilddatei oder einer eine Mehrzahl von Frames umfassende Videosequenz, welche mehrfach hintereinander in die zu sichernde Datei eingefügt wird, welche beispielsweise ebenfalls eine zweidimensionale Datenstruktur aufweist, rahmen die Kennungen die Kopien des Wasserzeichens ein. Hierzu bilden die Kennungen beispielsweise einen zweidimensionalen Rahmen, welcher einen Rand des Wasserzeichens bildet und sich um diesen herumerstreckt. Beispielsweise handelt es sich bei der zu sichernden Datei mit der zweidimensionalen Datenstruktur um eine Textdatei oder Videodatei.

Eine Videosequenz oder Videodatei kann im Hinblick auf ihren zeitlichen Verlauf als linear betrachtet werden. Im Hinblick auf die einzelnen Frames kann eine Videosequenz oder Videodatei auch als Datenstruktur betrachtet werden, die aus einer Mehrzahl von zweidimensionalen Einzelstrukturen zusammengesetzt und damit selbst ebenfalls eine zweidimensionale Datenstruktur ist.

Eine Textsequenz oder Textdatei kann im Hinblick auf die Schreibrichtung als linear betrachtet werden. Im Hinblick auf die Anordnung des Textes beispielsweise in einem Seitenformat kann eine Textsequenz oder Textdatei auch als zweidimensionale Datenstruktur betrachtet werden.

Beispielsweise umfasst das Wasserzeichen ferner einen Prüfwert, etwa eine Prüfsumme. Beispielsweise umfasst das Wasserzeichen den Prüfwert an seinem Ende. Beispielsweise umfasst das Wasserzeichen den Prüfwert an seinem Ende vor einer Kennung, welche das entsprechende Ende des Wasserzeichens kennzeichnet. Der Prüfwert ermöglicht beispielsweise ein Erkennen einer fehlerhaften Extraktion des Wasserzeichens aus der gesicherten Datei, d.h. aus der resultierenden geänderten Datei mit dem mehrfach in redundanter Form eingebetteten Wasserzeichen.

Beispielsweise werden innerhalb der Gruppen jeweils diejenigen Koeffizienten der Koeffizientenmatrizen der entsprechenden Gruppe, welche in Abhängigkeit von dem Wert der der entsprechenden Koeffizientenmatrix zugeordneten Bitsequenz des Wasserzeichens geändert werden, gemäß einer vordefinierten ersten Verteilung variiert.

Beispiele können den Vorteil haben, dass nicht in jeder der Koeffizientenmatrizen jeweils derselbe Koeffizient geändert wird. Vielmehr wird innerhalb der Gruppen jeweils variiert, welche Koeffizienten in den Koeffizientenmatrizen jeweils geändert werden. Dadurch, dass innerhalb einer Gruppe von Koeffizientenmatrizen nicht jeweils derselbe Koeffizient geändert wird, wird es einem Angreifer erschwert die Einbettung des Wasserzeichens durch eine gezielte Manipulation eines bestimmten Koeffizienten pro Koeffizientenmatrix zu stören oder zu entfernen.

Beispielsweise handelt es sich bei der vordefinierten ersten Verteilung um eine unter Verwendung jeweils derselben ersten Initialisierungsdaten reproduzierbare erste Zufallsverteilung.

Beispiele können den Vorteil haben, dass die erste Zufallsverteilung unter Verwendung der ersten Initialisierungsdaten reproduzierbar ist. Somit können für eine Prüfung des eingebetteten Wasserzeichens beispielsweise die erste Zufallsverteilung unter Verwendung der ersten Initialisierungsdaten reproduziert und somit die geänderten Koeffizienten in den Koeffizientenmatrizen, welche aus einer DCT bzw. DST der geänderten Datei resultieren, bestimmt werden. Bei diesen geänderten Koeffizienten handelt es sich um diejenigen Koeffizienten der Koeffizientenmatrizen, in welche im Zuge der Einbettung die Daten des Wasserzeichens einkodiert werden.

Bei den ersten Initialisierungsdaten handelt es sich beispielsweise um einen ersten Seedwert. Dieser erste Seedwert ermöglicht es beispielsweise unter Verwendung eines deterministischen Zufallsgenerators bzw. eines deterministischen Zufallsalgorithmus die erste Zufallsverteilung zu reproduzieren.

Beispielsweise sind die ersten Initialisierungsdaten einem bestimmungsmäßigen Empfänger der zu sichernden Datei zugeordnet. Beispielsweise umfassen die ersten Initialisierungsdaten eine Empfänger-ID des bestimmungsgemäßen Empfängers der zu sichernden Datei.

Beispielsweise ist damit auch die erste Zufallsverteilung empfängerabhängig. So ergeben sich für unterschiedliche Empfänger von zu sichernden Dateien mit unterschiedlichen Empfänger-IDs unterschiedliche Initialisierungsdaten. Diese unterschiedlichen Initialisierungsdaten für die unterschiedlichen Empfänger führen zu unterschiedlichen Zufallsverteilungen, welche zum Einbetten von Wasserzeichen in zu sichernde Dateien für die entsprechenden Empfänger verwendet werden.

Beispielsweise wird innerhalb der Gruppen jeweils eine Art der Änderung der Koeffizienten der Koeffizientenmatrizen der entsprechenden Gruppe, welche in Abhängigkeit von dem Wert der der entsprechenden Koeffizientenmatrix zugeordneten Bitsequenz des Wasserzeichens geändert werden, gemäß einer vordefinierten zweiten Verteilung variiert.

Beispielsweise handelt es sich bei der vordefinierten zweiten Verteilung um eine unter Verwendung jeweils derselben zweiten Initialisierungsdaten reproduzierbare zweite Zufallsverteilung.

Beispielsweise sind die zweiten Initialisierungsdaten dem bestimmungsmäßigen Empfänger der zu sichernden Datei zugeordnet. Beispielsweise umfassen die zweiten Initialisierungsdaten die Empfänger-ID des bestimmungsgemäßen Empfängers der zu sichernden Datei.

Beispielsweise sind die Koeffizienten der Koeffizientenmatrizen unterschiedlichen Frequenzen zuordnet. Die Frequenzen sind jeweils zumindest in Frequenzen eines niedrigen Frequenzbereichs und eines hohen Frequenzbereichs aufgeteilt. Koeffizienten der Koeffizientenmatrizen, welche Frequenzen des hohen Frequenzbereichs zugeordnet sind, werden jeweils von dem Ändern in Abhängigkeit von dem Wasserzeichen ausgeschlossen.

Beispielsweise sind die Frequenzen jeweils in Frequenzen eines niedrigen Frequenzbereichs, eines mittleren Frequenzbereichs und eines hohen Frequenzbereichs aufgeteilt.

Beispielsweise ist das Wasserzeichen ferner einem bestimmungsmäßigen Empfänger der zu sichernden Datei zugeordnet und dazu konfiguriert, den bestimmungsmäßigen Empfänger zu identifizieren.

Beispielsweise umfasst das Wasserzeichen die Empfänger-ID des bestimmungsgemäßen Empfängers der zu sichernden Datei.

Beispielsweise umfasst das Verfahren ferner ein Empfangen der Empfänger-ID, ein Erzeugen des Wasserzeichens unter Verwendung der Empfänger-ID. Ferner umfasst das Verfahren beispielsweise ein Senden der bereitgestellten Datei an den Empfänger. Die gesendete Datei ist mit dem Wasserzeichen, welches die Empfänger-ID umfasst, in empfängerspezifischer Weise gesichert.

Beispielsweise werden Parameter in einem Register gespeichert, welche das Einbetten des Wasserzeichens in die zu sichernde Datei beschreiben und dazu konfiguriert sind, eine Prüfung der resultierenden geänderten Datei auf ein Vorhandensein des Wasserzeichens in der entsprechenden Datei zu ermöglichen.

Beispielsweise umfassen die Parameter ein oder mehrere der folgenden Parameter: die Ursprungs-ID, die Empfänger-ID, die ersten Initialisierungsdaten, eine erste ID eines zum Erzeugen der ersten Zufallsverteilung zu verwendenden ersten Algorithmus, die zweiten Initialisierungsdaten, eine zweite ID eines zum Erzeugen der zweiten Zufallsverteilung zu verwendenden zweiten Algorithmus.

Beispielsweise umfasst das Ändern der Koeffizienten der Koeffizientenmatrizen in Abhängigkeit von den Bitsequenzen des Wasserzeichens ein oder mehrere der folgenden Arten von Änderungen: ein bitsequenzabhängiges Ändern eines Bits der Koeffizienten, eine bitsequenzabhängige Auswahl einer zu ändernden Dezimalstelle der Koeffizienten, ein bitsequenzabhängiges Hinzuaddieren und Subtrahieren eines vordefinierten Werts von den Koeffizienten, ein bitsequenzabhängiges Aufrunden und Abrunden der Koeffizienten, ein bitsequenzabhängiges Aufrunden der Koeffizienten auf gerade und ungerade Werte, ein bitsequenzabhängiges Abrunden der Koeffizienten auf gerade und ungerade Werte.

Beispielsweise umfasst das Ändern der Koeffizienten der Koeffizientenmatrizen in Abhängigkeit von den Bitsequenzen des Wasserzeichens ein bitsequenzabhängiges Ändern eines Bits der Koeffizienten.

Beispielsweise umfasst das Ändern der Koeffizienten der Koeffizientenmatrizen in Abhängigkeit von den Bitsequenzen des Wasserzeichens eine bitsequenzabhängige Auswahl einer zu ändernden Dezimalstelle der Koeffizienten.

Beispielsweise umfasst das Ändern der Koeffizienten der Koeffizientenmatrizen in Abhängigkeit von den Bitsequenzen des Wasserzeichens ein bitsequenzabhängiges Hinzuaddieren und Subtrahieren eines vordefinierten Werts von den Koeffizienten.

Beispielsweise umfasst das Ändern der Koeffizienten der Koeffizientenmatrizen in Abhängigkeit von den Bitsequenzen des Wasserzeichens ein bitsequenzabhängiges Aufrunden und Abrunden der Koeffizienten.

Beispielsweise umfasst das Ändern der Koeffizienten der Koeffizientenmatrizen in Abhängigkeit von den Bitsequenzen des Wasserzeichens ein bitsequenzabhängiges Aufrunden der Koeffizienten auf gerade und ungerade Werte.

Beispielsweise umfasst das Ändern der Koeffizienten der Koeffizientenmatrizen in Abhängigkeit von den Bitsequenzen des Wasserzeichens ein bitsequenzabhängiges Abrunden der Koeffizienten auf gerade und ungerade Werte.

Beispielsweise handelt es sich bei der zu sichernden Datei um eine digitale Datei. Beispielsweise handelt es sich bei der zu sichernden Datei um eine der folgenden Arten von Dateien: eine Bilddatei, eine Audiodatei, eine Videodatei, eine Textdatei.

Beispielsweise handelt es sich bei dem Wasserzeichen um eines der folgenden Arten: eine Zeichenfolge, eine Textdatei, eine Bilddatei, eine Audiosequenz.

Beispielsweise handelt es sich bei der Bitsequenz um eine grundlegende Bitsequenz, welche ein Zeichen einer Zeichenfolge definiert.

Beispielsweise handelt es sich bei der Bitsequenz um eine grundlegende Bitsequenz, welche ein Textzeichen einer Textdatei definiert.

Beispielsweise handelt es sich bei der Bitsequenz um eine grundlegende Bitsequenz, welche ein Sample bzw. einen Abtastwert einer Audiosequenz definiert.

Beispielsweise handelt es sich bei der Bitsequenz um eine grundlegende Bitsequenz, welche ein Pixel einer Audiodatei definiert.

In einem weiteren Aspekt ist ein computerimplementiertes Verfahren offenbart zum Identifizieren eines Ursprungs einer zu prüfenden Datei unter Verwendung eines digitalen Wasserzeichens, das unter Verwendung eines Verfahrens nach einem der vorangehend beschriebenen Beispiele mehrfach in redundanter Form in die Datei eingebettet ist und den zu identifizierenden Ursprung angibt. Das Verfahren umfasst ein Empfangen der zu prüfenden Datei. Die zu prüfende Datei wird in eine Mehrzahl von Datenblöcke aufgeteilt. Zumindest ein Teil der Datenblöcke wird jeweils in eine Koeffizientenmatrix mit einer Mehrzahl von Koeffizienten einer auf den entsprechenden Datenblock angewendeten diskreten Frequenztransformation, etwa einer Kosinustransformation oder Sinustransformation, transformiert.

Das in die zu prüfende Datei eingebettete Wasserzeichen wird unter Verwendung der aus den transformierten Datenblöcken resultierenden Koeffizientenmatrizen bestimmt. In den Koeffizientenmatrizen wird jeweils ein in Abhängigkeit von einem Wert einer der entsprechenden Koeffizientenmatrix zugeordneten Bitsequenz des Wasserzeichens geänderter Koeffizient bestimmt. Unter Verwendung des entsprechenden Koeffizienten wird die jeweilige zugeordnete Bitsequenz bestimmt. Unter Verwendung des bestimmten Wasserzeichens wird der Ursprung identifiziert, welcher der zu prüfenden Datei zugeordnet ist.

Beispielsweise umfasst das Verfahren ferner ein Empfangen einer unter Verwendung einer diskreten Frequenztransformation, etwa einer Kosinustransformation oder Sinustransformation, transformierten Referenzdatei. Die Referenzdatei entspricht der zu prüfenden Datei ohne eingebettetes Wasserzeichen. Beispielsweise werden im Zuge des Bestimmens des in die zu prüfende Datei eingebetteten Wasserzeichens Unterschiede zwischen den aus den transformierten Datenblöcken der zu prüfenden Datei resultierenden Koeffizientenmatrizen und der unter Verwendung der diskreten Frequenztransformation, etwa einer Kosinustransformation oder Sinustransformation, transformierten Referenzdatei bestimmt.

Beispielsweise umfasst das Verfahren zunächst ein Sichern einer Datei unter Verwendung eines digitalen Wasserzeichens. Dazu wird die zu sichernde Datei empfangen. Ferner wird das in die zu sichernde Datei einzubettende Wasserzeichen empfangen, welches als ein Herkunftsnachweis der zu sichernden Datei konfiguriert ist und einen der zu sichernden Datei zugeordneten Ursprung identifiziert. Das Wasserzeichen umfasst eine Mehrzahl von Bitsequenzen. Die gesamte zu sichernde Datei wird in eine Mehrzahl von Datenblöcke aufgeteilt. Die Datenblöcke werden jeweils in eine Koeffizientenmatrix mit einer Mehrzahl von Koeffizienten einer auf den entsprechenden Datenblock angewendeten diskreten Frequenztransformation, etwa einer Kosinustransformation oder Sinustransformation, transformiert. Die Koeffizientenmatrizen werden in eine Mehrzahl von Gruppen gruppiert. Dabei werden allen Gruppen jeweils für jede Bitsequenz des Wasserzeichens eine Koeffizientenmatrix zugeordnet.

Das Wasserzeichen wird in jede Gruppe der Mehrzahl von Gruppen eingebettet. In jeder Gruppe der Mehrzahl von Gruppen wird jeweils ein Koeffizient pro zugeordneter Koeffizientenmatrix in Abhängigkeit von einem Wert der der entsprechenden Koeffizientenmatrix zugeordneten Bitsequenz des Wasserzeichens geändert. Die geänderten Koeffizientenmatrizen werden unter Verwendung einer auf die entsprechende Koeffizientenmatrix angewendeten inversen diskreten Frequenztransformation, etwa einer Kosinustransformation oder einer Sinustransformation, jeweils in einen geänderten Datenblock rücktransformiert. Die resultierende geänderte Datei wird bereitgestellt.

Ferner umfasst das Verfahren, insbesondere zu einem späteren Zeitpunkt, beispielsweise ein Identifizieren eines Ursprungs einer zu prüfenden Datei unter Verwendung eines digitalen Wasserzeichens. Bei der zu prüfenden Datei handelt es sich um die bereitgestellte geänderte Datei und bei dem Wasserzeichen um das in die bereitgestellte geänderte Datei mehrfach in redundanter Form eingebettete Wasserzeichen, welches den zu identifizierenden Ursprung der Datei angibt. Zum Identifizieren des Ursprungs wird die zu prüfende Datei empfangen. Ferner wird eine unter Verwendung einer diskreten Frequenztransformation transformierte Referenzdatei empfangen. Bei der diskreten Frequenztransformation handelt es sich um eine der folgenden diskreten Transformationen: eine diskrete Kosinustransformation, eine diskrete Sinustransformation. Die Referenzdatei entspricht der zu prüfenden Datei ohne eingebettetes Wasserzeichen. Die zu prüfende Datei wird in eine Mehrzahl von Datenblöcke aufgeteilt. Die Datenblöcke werden jeweils in eine Koeffizientenmatrix mit einer Mehrzahl von Koeffizienten einer auf den entsprechenden Datenblock angewendeten diskreten Frequenztransformation transformiert. Bei der diskreten Frequenztransformation handelt es sich um eine der folgenden diskreten Transformationen: eine diskrete Kosinustransformation, eine diskrete Sinustransformation.

Es werden Unterschiede zwischen den aus den transformierten Datenblöcken der zu prüfenden Datei resultierenden Koeffizientenmatrizen und der unter Verwendung der diskreten Frequenztransformation, etwa einer Kosinustransformation oder einer Sinustransformation, transformierten Referenzdatei bestimmt. Das in die zu prüfende Datei eingebettete Wasserzeichen wird unter Verwendung der bestimmten Unterschiede bestimmt. Unter Verwendung des bestimmten Wasserzeichens wird der Ursprung identifiziert, welcher der zu prüfenden Datei zugeordnet ist.

Beispielsweise werden das Sichern der Datei unter Verwendung des Wasserzeichens und das Identifizieren des Ursprungs der zu prüfenden Datei unter Verwendung ein und derselben Computervorrichtung ausgeführt. Beispielsweise werden das Sichern der Datei unter Verwendung des Wasserzeichens und das Identifizieren des Ursprungs der zu prüfenden Datei unter Verwendung verschiedener Computervorrichtungen ausgeführt.

In einem weiteren Aspekt ist eine gesicherte Datei offenbart, in welche zur Sicherung ein Wasserzeichen, das als Herkunftsnachweis einen der Datei zugeordneten Ursprung identifiziert, unter Verwendung eines der vorangehenden Beispiele für ein Verfahren zum Sichern einer Datei unter Verwendung eines digitalen Wasserzeichens mehrfach in redundanter Form eingebettet ist.

In einem weiteren Aspekt ist ein Computerprogramm offenbart zum Sichern einer Datei unter Verwendung eines digitalen Wasserzeichens. Das Computerprogramm umfasst maschinenlesbare Programminstruktionen. Ein Ausführen der maschinenlesbaren Programminstruktionen durch eine Prozessoreinheit einer Computervorrichtung veranlasst die Computervorrichtung zum Empfangen der zu sichernden Datei. Ferner wird das in die zu sichernde Datei einzubettende Wasserzeichen empfangen, welches als ein Herkunftsnachweis der zu sichernden Datei konfiguriert ist und einen der zu sichernden Datei zugeordneten Ursprung identifiziert. Das Wasserzeichen umfasst eine Mehrzahl von Bitsequenzen. Die gesamte zu sichernde Datei wird in eine Mehrzahl von Datenblöcke aufgeteilt. Die Datenblöcke werden transformiert und in eine Mehrzahl von Gruppen gruppiert. Das Transformieren umfasst ein Transformieren der Datenblöcke jeweils in eine Koeffizientenmatrix mit einer Mehrzahl von Koeffizienten einer auf den entsprechenden Datenblock angewendeten diskreten Frequenztransformation. Bei der diskreten Frequenztransformation handelt es sich um eine der folgenden diskreten Transformationen: eine diskrete Kosinustransformation, eine diskrete Sinustransformation. Allen Gruppen wird jeweils für jede Bitsequenz des Wasserzeichens eine Koeffizientenmatrix zugeordnet.

Das Wasserzeichen wird in jede Gruppe der Mehrzahl von Gruppen eingebettet. In jeder Gruppe der Mehrzahl von Gruppen wird jeweils ein Koeffizient pro zugeordneter Koeffizientenmatrix in Abhängigkeit von einem Wert der der entsprechenden Koeffizientenmatrix zugeordneten Bitsequenz des Wasserzeichens geändert. Die geänderten Koeffizientenmatrizen werden unter Verwendung einer auf die entsprechende Koeffizientenmatrix angewendeten inversen diskreten Frequenztransformation jeweils in einen geänderten Datenblock rücktransformiert. Die resultierende geänderte Datei wird bereitgestellt.

Beispielsweise sind die maschinenlesbaren Programminstruktionen des Computerprogramms dazu konfiguriert bei einem Ausführen durch eine Prozessoreinheit einer Computereinheit die Computereinheit dazu zu steuern, jedes der hier beschriebenen Beispiele eines Verfahrens zum Sichern einer Datei unter Verwendung eines digitalen Wasserzeichens auszuführen.

Beispielsweise sind die maschinenlesbaren Programminstruktionen des Computerprogramms dazu konfiguriert bei einem Ausführen durch eine Prozessoreinheit einer Computereinheit die Computereinheit ferner dazu zu steuern, jedes der hier beschriebenen Beispiele eines Verfahrens zum Identifizieren eines Ursprungs einer zu prüfenden Datei unter Verwendung eines digitalen Wasserzeichens auszuführen.

Beispielsweise umfasst ein Computerprogrammprodukt zum Sichern einer Datei unter Verwendung eines digitalen Wasserzeichens ein computerlesbares Speichermedium mit darin verkörperten maschinenlesbaren Programminstruktionen. Ein Ausführen der maschinenlesbaren Programminstruktionen durch eine Prozessoreinheit einer Computervorrichtung veranlasst die Computervorrichtung zum Empfangen der zu sichernden Datei. Ferner wird das in die zu sichernde Datei einzubettende Wasserzeichen empfangen, welches als ein Herkunftsnachweis der zu sichernden Datei konfiguriert ist und einen der zu sichernden Datei zugeordneten Ursprung identifiziert. Das Wasserzeichen umfasst eine Mehrzahl von Bitsequenzen. Die gesamte zu sichernde Datei wird in eine Mehrzahl von Datenblöcke aufgeteilt. Die Datenblöcke werden transformiert und in eine Mehrzahl von Gruppen gruppiert. Das Transformieren umfasst ein Transformieren der Datenblöcke jeweils in eine Koeffizientenmatrix mit einer Mehrzahl von Koeffizienten einer auf den entsprechenden Datenblock angewendeten diskreten Frequenztransformation. Bei der diskreten Frequenztransformation handelt es sich um eine der folgenden diskreten Transformationen: eine diskrete Kosinustransformation, eine diskrete Sinustransformation. Allen Gruppen wird jeweils für jede Bitsequenz des Wasserzeichens eine Koeffizientenmatrix zugeordnet.

Das Wasserzeichen wird in jede Gruppe der Mehrzahl von Gruppen eingebettet. In jeder Gruppe der Mehrzahl von Gruppen wird jeweils ein Koeffizient pro zugeordneter Koeffizientenmatrix in Abhängigkeit von einem Wert der der entsprechenden Koeffizientenmatrix zugeordneten Bitsequenz des Wasserzeichens geändert. Die geänderten Koeffizientenmatrizen werden unter Verwendung einer auf die entsprechende Koeffizientenmatrix angewendeten inversen diskreten Frequenztransformation jeweils in einen geänderten Datenblock rücktransformiert. Die resultierende geänderte Datei wird bereitgestellt.

Beispielsweise sind die in dem computerlesbaren Speichermedium des Computerprogrammprodukts verkörperten maschinenlesbaren Programminstruktionen dazu konfiguriert bei einem Ausführen durch eine Prozessoreinheit einer Computereinheit die Computereinheit dazu zu steuern, jedes der hier beschriebenen Beispiele eines Verfahrens zum Sichern einer Datei unter Verwendung eines digitalen Wasserzeichens auszuführen.

Beispielsweise sind die in dem computerlesbaren Speichermedium des Computerprogrammprodukts verkörperten maschinenlesbaren Programminstruktionen ferner dazu konfiguriert bei einem Ausführen durch eine Prozessoreinheit einer Computereinheit die Computereinheit dazu zu steuern, jedes der hier beschriebenen Beispiele eines Verfahrens zum Identifizieren eines Ursprungs einer zu prüfenden Datei unter Verwendung eines digitalen Wasserzeichens auszuführen.

In einem weiteren Aspekt ist eine Computervorrichtung offenbart zum Sichern einer Datei unter Verwendung eines digitalen Wasserzeichens. Die Computervorrichtung umfasst eine Prozessoreinheit und eine Speichereinheit mit maschinenlesbare Programminstruktionen. Ein Ausführen der maschinenlesbaren Programminstruktionen durch die Prozessoreinheit veranlasst die Computervorrichtung zum Empfangen der zu sichernden Datei. Ferner wird das in die zu sichernde Datei einzubettende Wasserzeichen empfangen, welches als ein Herkunftsnachweis der zu sichernden Datei konfiguriert ist und einen der zu sichernden Datei zugeordneten Ursprung identifiziert. Das Wasserzeichen umfasst eine Mehrzahl von Bitsequenzen. Die gesamte zu sichernde Datei wird in eine Mehrzahl von Datenblöcke aufgeteilt. Die Datenblöcke werden transformiert und in eine Mehrzahl von Gruppen gruppiert. Das Transformieren umfasst ein Transformieren der Datenblöcke jeweils in eine Koeffizientenmatrix mit einer Mehrzahl von Koeffizienten einer auf den entsprechenden Datenblock angewendeten diskreten Frequenztransformation. Bei der diskreten Frequenztransformation handelt es sich um eine der folgenden diskreten Transformationen: eine diskrete Kosinustransformation, eine diskrete Sinustransformation. Allen Gruppen wird jeweils für jede Bitsequenz des Wasserzeichens eine Koeffizientenmatrix zugeordnet.

Das Wasserzeichen wird in jede Gruppe der Mehrzahl von Gruppen eingebettet. In jeder Gruppe der Mehrzahl von Gruppen wird jeweils ein Koeffizient pro zugeordneter Koeffizientenmatrix in Abhängigkeit von einem Wert der der entsprechenden Koeffizientenmatrix zugeordneten Bitsequenz des Wasserzeichens geändert. Die geänderten Koeffizientenmatrizen werden unter Verwendung einer auf die entsprechende Koeffizientenmatrix angewendeten inversen diskreten Frequenztransformation jeweils in einen geänderten Datenblock rücktransformiert. Die resultierende geänderte Datei wird bereitgestellt.

Beispielsweise sind die maschinenlesbaren Programminstruktionen der Speichereinheit der Computervorrichtung dazu konfiguriert bei einem Ausführen durch die Prozessoreinheit der Computereinheit die Computereinheit dazu zu steuern, jedes der hier beschriebenen Beispiele eines Verfahrens zum Sichern einer Datei unter Verwendung eines digitalen Wasserzeichens auszuführen.

Beispielsweise sind die maschinenlesbaren Programminstruktionen der Speichereinheit der Computervorrichtung ferner dazu konfiguriert bei einem Ausführen durch die Prozessoreinheit der Computereinheit die Computereinheit dazu zu steuern, jedes der hier beschriebenen Beispiele eines Verfahrens zum Identifizieren eines Ursprungs einer zu prüfenden Datei unter Verwendung eines digitalen Wasserzeichens auszuführen.

Es versteht sich, dass eine oder mehrere der vorgenannten Ausführungsformen miteinander kombiniert werden können, solange sich die Ausführungsformen nicht gegenseitig ausschließen.

## KURZE BESCHREIBUNG DER ZEICHNUNGEN

Im Folgenden werden Beispiele anhand der Zeichnungen näher erläutert. Es zeigen:

Fig. 1 ein Flussdiagramm eines exemplarischen Verfahrens zum Sichern einer Datei unter Verwendung eines digitalen Wasserzeichens,

Fig. 2 ein Flussdiagramm eines exemplarischen Verfahrens zum Identifizieren eines Ursprungs einer zu prüfenden Datei unter Verwendung eines digitalen Wasserzeichens,

Fig. 3 ein Flussdiagramm eines exemplarischen Verfahrens zum Identifizieren eines Ursprungs einer zu prüfenden Datei unter Verwendung eines digitalen Wasserzeichens,

Fig. 4 ein Flussdiagramm eines exemplarischen Verfahrens zum Identifizieren eines Ursprungs einer zu prüfenden Datei unter Verwendung eines digitalen Wasserzeichens,

Fig. 5 eine exemplarische Koeffizientenmatrix,

Fig. 6 eine exemplarische Koeffizientenmatrix,

Fig. 7 ein exemplarisches digitales Wasserzeichen in Form einer Bilddatei,

Fig. 8 eine exemplarische Bilddatei in Form eines Thoraxröntgenbildes,

Fig. 9 eine exemplarische Bilddatei in Form eines Thoraxröntgenbildes mit eingebettetem Wasserzeichen,

Fig. 10 exemplarische Datenblöcke einer zu sichernden Datei

Fig. 11 exemplarische geänderte Datenblöcke einer gesicherten Datei,

Fig. 12 einen exemplarischen Datenblock einer zu sichernden Datei,

Fig. 13 einen exemplarischen geänderten Datenblock einer gesicherten Datei,

Fig. 14 einen exemplarischen Datenblock einer zu sichernden Datei,

Fig. 15 einen exemplarischen geänderten Datenblock einer gesicherten Datei,

Fig. 16 exemplarische Amplitudenverteilungen,

Fig. 17 exemplarische geänderte Datenblöcke einer gesicherten Datei,

Fig. 18 einen exemplarischen Datenblock einer zu sichernden Datei,

Fig. 19 einen exemplarischen geänderten Datenblock einer gesicherten Datei,

Fig. 20 einen exemplarischen geänderten Datenblock einer gesicherten Datei,

Fig. 21 exemplarische Amplitudenverteilungen,

Fig. 22 eine exemplarische Übersicht über eine Auswirkung einer Einbettung eines digitalen Wasserzeichens auf eine Analyse von Dateien unter Verwendung eines Moduls zum maschinellen Lernen,

Fig. 23 ein exemplarisches System zum Sichern von Dateien und zum Identifizieren von Ursprüngen der gesicherten Dateien,

Fig. 24 ein Blockdiagramm einer exemplarischen Computervorrichtung zum Sichern einer Datei unter Verwendung eines digitalen Wasserzeichens und

Fig. 25 ein Blockdiagramm einer exemplarischen Computervorrichtung zum Identifizieren eines Ursprungs einer zu prüfenden Datei unter Verwendung eines digitalen Wasserzeichens.

## DETAILLIERTE BESCHREIBUNG

Im Folgenden werden einander ähnliche Elemente mit den gleichen Bezugszeichen gekennzeichnet.

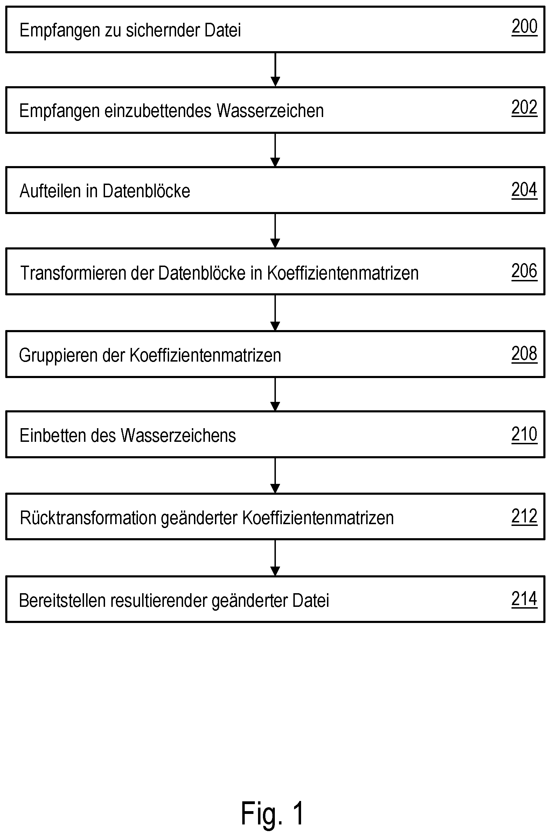

Figur 1 zeigt ein exemplarisches Verfahren zum Sichern einer Datei unter Verwendung eines digitalen Wasserzeichens. In Block 200 wird die zu sichernde Datei empfangen. In Block 202 wird das in die zu sichernde Datei einzubettende Wasserzeichen empfangen. Dieses Wasserzeichen ist als ein Herkunftsnachweis der zu sichernden Datei konfiguriert und identifiziert einen der zu sichernden Datei zugeordneten Ursprung. Das Wasserzeichen umfasst eine Mehrzahl von Bitsequenzen. In Block 204 wird die gesamte zu sichernde Datei in eine Mehrzahl von Datenblöcke aufgeteilt. In Block 206 werden die Datenblöcke jeweils in eine Koeffizientenmatrix mit einer Mehrzahl von Koeffizienten einer auf den entsprechenden Datenblock angewendeten diskreten Frequenztransformation transformiert. Bei der diskreten Frequenztransformation handelt es sich um eine der folgenden diskreten Transformationen: eine diskrete Kosinustransformation, eine diskrete Sinustransformation. In Block 208 werden die Koeffizientenmatrizen in eine Mehrzahl von Gruppen gruppiert. Dabei werden allen Gruppen jeweils für jede Bitsequenz des Wasserzeichens eine Koeffizientenmatrix zugeordnet.

In Block 210 wird das Wasserzeichen in jede Gruppe der Mehrzahl von Gruppen eingebettet. Zu diesem Zweck wird in jeder Gruppe der Mehrzahl von Gruppen jeweils ein Koeffizient pro zugeordneter Koeffizientenmatrix in Abhängigkeit von einem Wert der der entsprechenden Koeffizientenmatrix zugeordneten Bitsequenz des Wasserzeichens geändert. In Block 212 werden die geänderten Koeffizientenmatrizen unter Verwendung einer auf die entsprechende Koeffizientenmatrix angewendeten inversen diskreten Frequenztranstransformation, beispielsweise einer inversen Kosinustransformation oder einer inversen Sinustransformation, jeweils in einen geänderten Datenblock rücktransformiert. In Block 214 wir die resultierende geänderte Datei bereitgestellt.

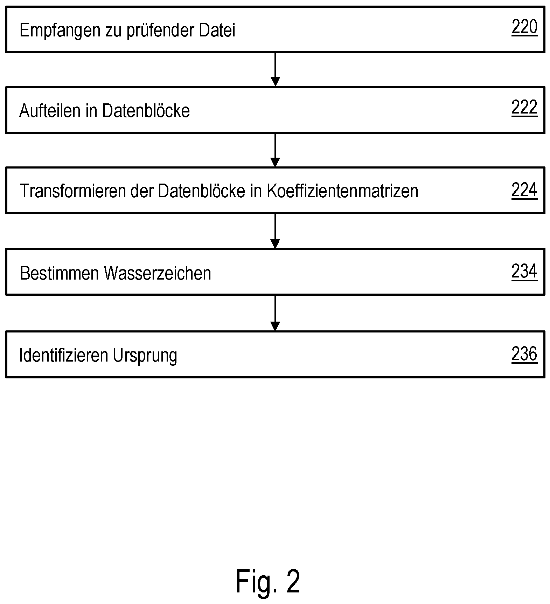

Fig. 2 zeigt ein exemplarisches Verfahren zum Identifizieren eines Ursprungs einer zu prüfenden Datei unter Verwendung eines digitalen Wasserzeichens. Dieses Wasserzeichen ist in die zu prüfende Datei mehrfach in redundanter Form, beispielsweise gemäß dem Verfahren der Fig. 1, eingebettet. Dieses mehrfach eingebettete Wasserzeichen gibt den zu identifizierenden Ursprung der Datei an. In Block 220 wird die prüfenden Datei empfangen. In Block 222 wird die zu prüfende Datei in eine Mehrzahl von Datenblöcke aufgeteilt. In Block 224 werden die Datenblöcke jeweils in eine Koeffizientenmatrix mit einer Mehrzahl von Koeffizienten einer auf den entsprechenden Datenblock angewendeten diskreten Frequenztransformation transformiert. Bei der diskreten Frequenztransformation handelt es sich um eine der folgenden diskreten Transformationen: eine diskrete Kosinustransformation, eine diskrete Sinustransformation.

In Block 234 wird das in die zu prüfende Datei eingebettete Wasserzeichen unter Verwendung der Koeffizientenmatrizen bestimmt. Beispielsweise wird je Bitsequenz des Wasserzeichens eine zugeordnete Koeffizientenmatrix sowie der in Abhängigkeit von der zugeordneten Bitsequenz geänderte Koeffizienten bestimmt. Unter Verwendung der so bestimmten Koeffizienten wird das Wasserzeichen rekonstruiert. Beispielsweise wurden die Koeffizienten so modifiziert, dass ihre Werte in Abhängigkeit von den Werten der Bitsequenzen gerade oder ungerade sind. Somit kann aus dem Umstand, dass die Koeffizienten gerade oder ungerade sind, beispielsweise ein Wasserzeichen in Form eines Schwarzweißbildes rekonstruiert werden. In Block 236 wird unter Verwendung des bestimmten Wasserzeichens der Ursprung identifiziert, welcher der zu prüfenden Datei zugeordnet ist.

Beispielsweise umfasst ein Verfahren zunächst ein Sichern der Datei unter Verwendung des Wasserzeichens, etwa mit dem Verfahren gemäß Fig. 1. Beispielsweise umfasst das Verfahren ferner ein Prüfen der Datei unter Verwendung des in die gesicherte Datei eingebetteten Wasserzeichens. Das Prüfung umfasst ein Identifizieren des Ursprungs der Datei unter Verwendung des eingebettete Wasserzeichens bzw. anhand des eingebetteten Wasserzeichens. Dieses Identifizieren des Ursprungs der zu prüfenden Datei erfolgt beispielsweise mit dem Verfahren gemäß Fig. 2.

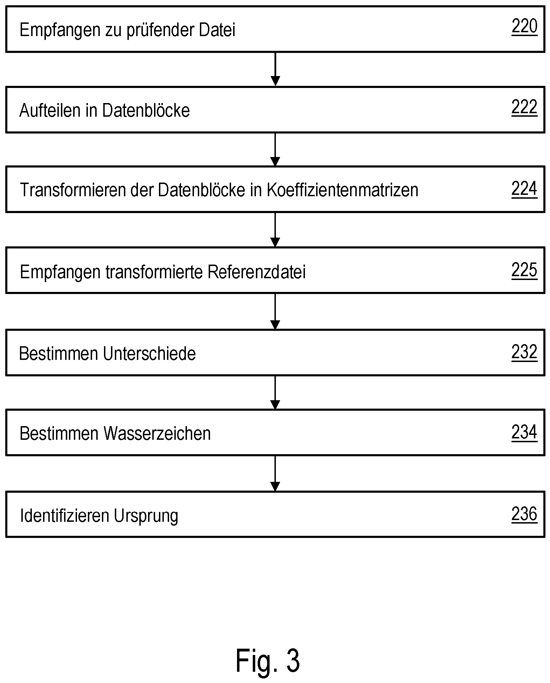

Fig. 3 zeigt ein weiteres exemplarisches Verfahren zum Identifizieren eines Ursprungs einer zu prüfenden Datei unter Verwendung eines digitalen Wasserzeichens. Dieses Wasserzeichen ist in die zu prüfende Datei mehrfach in redundanter Form, beispielsweise gemäß dem Verfahren der Fig. 1, eingebettet. Dieses mehrfach eingebettete Wasserzeichen gibt den zu identifizierenden Ursprung der Datei an. In Block 220 wird die prüfenden Datei empfangen. In Block 222 wird die zu prüfende Datei in eine Mehrzahl von Datenblöcke aufgeteilt. In Block 224 werden die Datenblöcke jeweils in eine Koeffizientenmatrix mit einer Mehrzahl von Koeffizienten einer auf den entsprechenden Datenblock angewendeten diskreten Frequenztransformation transformiert. Bei der diskreten Frequenztransformation handelt es sich um eine der folgenden diskreten Transformationen: eine diskrete Kosinustransformation, eine diskrete Sinustransformation.

In Block 225 wird eine unter Verwendung einer diskreten Frequenztransformation, beispielsweise einer Kosinustransformation oder einer Sinustransformation, transformierte Referenzdatei empfangen. Die Referenzdatei entspricht der zu prüfenden Datei ohne eingebettetes Wasserzeichen.

In Block 232 werden Unterschiede zwischen den aus den transformierten Datenblöcken der zu prüfenden Datei resultierenden Koeffizientenmatrizen und der unter Verwendung der diskreten Frequenztransformation transformierten Referenzdatei bestimmt. In Block 234 wird das in die zu prüfende Datei eingebettete Wasserzeichen unter Verwendung der bestimmten Unterschiede bestimmt. In Block 236 wird unter Verwendung des bestimmten Wasserzeichens der Ursprung identifiziert, welcher der zu prüfenden Datei zugeordnet ist.

Beispielsweise umfasst ein Verfahren zunächst ein Sichern der Datei unter Verwendung des Wasserzeichens, etwa mit dem Verfahren gemäß Fig. 1. Beispielsweise umfasst das Verfahren ferner ein Prüfen der Datei unter Verwendung des in die gesicherte Datei eingebetteten Wasserzeichens. Die Prüfung umfasst ein Identifizieren des Ursprungs der Datei unter Verwendung des eingebettete Wasserzeichens bzw. anhand des eingebetteten Wasserzeichens. Dieses Identifizieren des Ursprungs der zu prüfenden Datei erfolgt beispielsweise mit dem Verfahren gemäß Fig. 3.

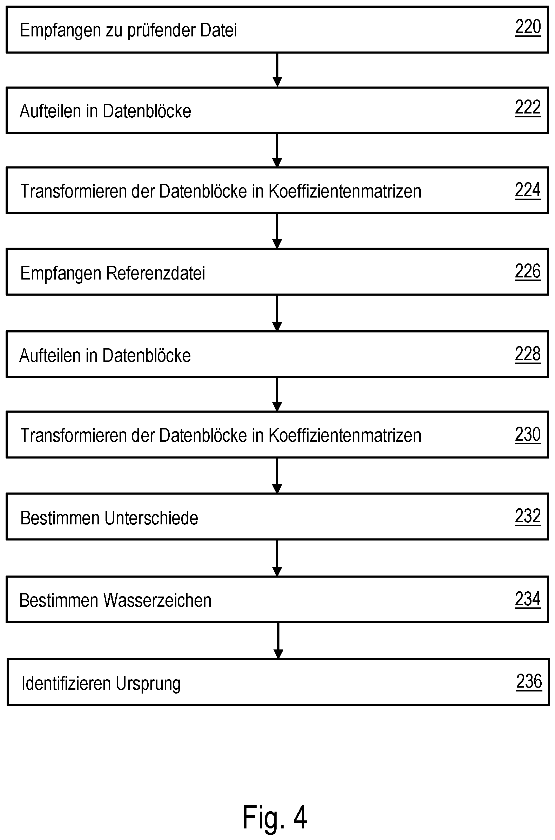

Fig. 4 zeigt ein weiteres Beispiel eines Verfahrens zum Identifizieren eines Ursprungs einer zu prüfenden Datei unter Verwendung eines digitalen Wasserzeichens. Dieses Wasserzeichen ist in die zu prüfende Datei mehrfach in redundanter Form, beispielsweise gemäß dem Verfahren der Fig. 1, eingebettet. Dieses mehrfach eingebettete Wasserzeichen gibt den zu identifizierenden Ursprung der Datei an. In Block 220 wird die zu prüfende Datei empfangen. In Block 222 wird die zu prüfende Datei in eine Mehrzahl von Datenblöcke aufgeteilt. In Block 224 werden die Datenblöcke jeweils in eine Koeffizientenmatrix mit einer Mehrzahl von Koeffizienten einer auf den entsprechenden Datenblock angewendeten diskreten Frequenztransformation transformiert. Bei der diskreten Frequenztransformation handelt es sich um eine der folgenden diskreten Transformationen: eine diskrete Kosinustransformation, eine diskrete Sinustransformation.

In Block 226 wird eine Referenzdatei empfangen, welche der zu prüfenden Datei ohne eingebettetes Wasserzeichen entspricht. In Block 228 wird die empfangene Referenzdatei in eine Mehrzahl von Datenblöcke aufgeteilt. In Block 230 werden die Datenblöcke jeweils in eine Koeffizientenmatrix mit einer Mehrzahl von Koeffizienten einer auf den entsprechenden Datenblock angewendeten diskreten Frequenztransformation, etwa einer Kosinustransformation oder einer Sinustransformation, transformiert. Das Ergebnis ist eine unter Verwendung einer diskreten Frequenztransformation transformierte Referenzdatei.

In Block 232 werden Unterschiede zwischen den aus den transformierten Datenblöcken der zu prüfenden Datei resultierenden Koeffizientenmatrizen und der unter Verwendung der diskreten Frequenztransformation transformierten Referenzdatei bestimmt. In Block 234 wird das in die zu prüfende Datei eingebettete Wasserzeichen unter Verwendung der bestimmten Unterschiede bestimmt. In Block 236 wird unter Verwendung des bestimmten Wasserzeichens der Ursprung identifiziert, welcher der zu prüfenden Datei zugeordnet ist.

Beispielsweise umfasst ein Verfahren zunächst ein Sichern der Datei unter Verwendung des Wasserzeichens, etwa mit dem Verfahren gemäß Fig. 1. Beispielsweise umfasst das Verfahren ferner ein Prüfen der Datei unter Verwendung des in die gesicherte Datei eingebetteten Wasserzeichens. Die Prüfung umfasst ein Identifizieren des Ursprungs der Datei unter Verwendung des eingebettete Wasserzeichens bzw. anhand des eingebetteten Wasserzeichens. Dieses Identifizieren des Ursprungs der zu prüfenden Datei erfolgt beispielsweise mit dem Verfahren gemäß Fig. 4.

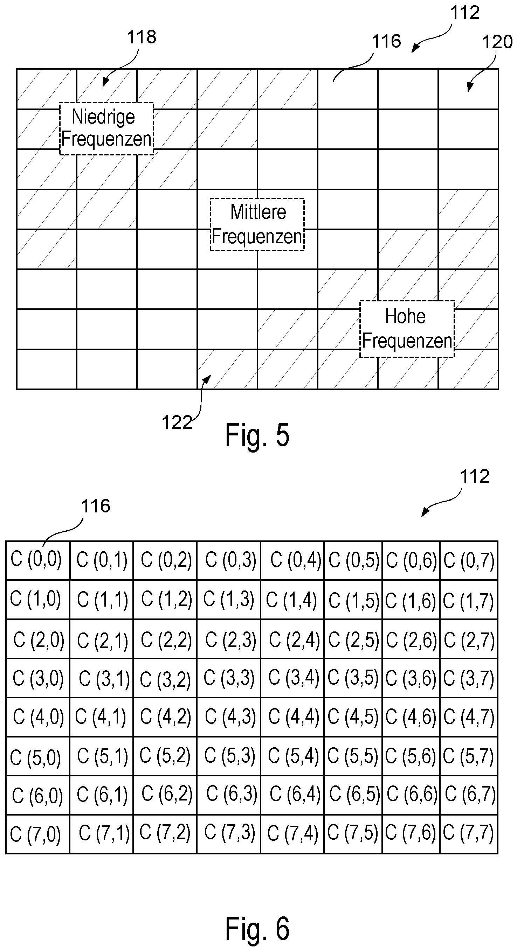

Fig. 5 veranschaulicht eine exemplarische Koeffizientenmatrix 112. Die Koeffizientenmatrix 112 resultiert aus einer diskreten Frequenztransformation eines Datenblocks. Bei der diskreten Frequenztransformation handelt es sich beispielsweise um eine diskrete Kosinustransformation oder ein diskrete Sinustransformation des Datenblocks. Die Koeffizientenmatrix 112 umfasst eine Mehrzahl von Koeffizienten 116. Diese aus der diskreten Frequenztransformation resultierenden Koeffizienten 116 beschreiben Frequenzanteile des ursprünglichen Datenblocks bei einer Zerlegung in eine endliche Summe von gewichteten trigonometrischen Funktionen mit unterschiedlichen Frequenzen. Im Falle einer diskreten Kosinustransformation handelt es sich bei den entsprechenden trigonometrischen Funktionen um Kosinusfunktionen. Im Falle einer diskrete Sinusfunktion handelt es sich bei den entsprechenden trigonometrischen Funktionen um Sinusfunktionen.

Ein diskrete Kosinustransformation ist eine reellwertige, diskrete, lineare, orthogonale Transformation, die ein zeitdiskretes Signal im Falle eines Zeitsignals von einem Zeitbereich in einen Frequenzbereich oder ein ortsdiskretes Signal im Falle eines räumlichen Signals von einem Ortsbereich in den Frequenzbereich transformiert. Ein diskrete Sinustransformation ist ebenfalls eine reellwertige, diskrete, lineare, orthogonale Transformation, die ein zeitdiskretes Signal im Falle eines Zeitsignals von einem Zeitbereich in einen Frequenzbereich oder ein ortsdiskretes Signal im Falle eines räumlichen Signals von einem Ortsbereich in den Frequenzbereich transformiert.

Eine diskrete Frequenztransformation, beispielsweise eine diskrete Kosinus- oder Sinustransformation, bildet ein diskretes reellwertiges Eingabesignal in Form eines Datenblocks, beispielsweise im Orts- oder Zeitbereich, mit N Datenelementen x[n] auf ein diskretes reellwertiges Ausgabesignal in Form einer Koeffizientenmatrix mit N Koeffizienten C[n] im Frequenzbereich ab, d.h. $x[n] = x_0, ..., x_{n-1} \rightarrow C[n] = C(0), ..., C(n-1)$.

Im Falle einer Kosinustransformation wird beispielsweise eine diskrete Kosinustransformation der Form

$$C(k)=\sum_{n=0}^{N-1} x_n \cos\left[\frac{\pi}{N}\left(n+\frac{1}{2}\right)k\right]$$

mit k = 0, ..., N-1 für einen Datenblock eines diskreten linearen Signals verwendet, welches N Datenelemente umfasst. Diese Kosinustransformation ist bezüglich ihrer Randwerte gerade am Anfang um $x_{-1/2}$ und gerade am Ende um $x_{N-1/2}$. Die hierzu inverse Kosinustransformation hat beispielsweise die Form

$$x_n = \frac{2}{N}\left\{\frac{1}{2}C(0)+\sum_{k=1}^{N-1} C(k) \cos\left[\frac{\pi}{N}k\left(n+\frac{1}{2}\right)\right]\right\}$$

mit n = 0, ..., N-1.

Eine Erweiterung auf mehrere Dimensionen kann beispielsweise durch eine mehrdimensionale Anwendung erfolgen. So kann etwa ein zweidimensionaler Datenblock der Größe $N_1$ x $N_2$ durch eine spalten- oder zeilenweise Anwendung der Kosinustransformation transformiert werden, beispielsweise mit einer diskreten Kosinustransformation der Form

$$C(k_1,k_2)=\sum_{n_1=0}^{N_1-1}\sum_{n_2=0}^{N_2-1} x_{n_1,n_2} \cos\left[\frac{\pi}{N_1}\left(n_1+\frac{1}{2}\right)k_1\right] \cos\left[\frac{\pi}{N_2}\left(n_2+\frac{1}{2}\right)k_2\right]$$

mit $k_1$ = 0, ..., $N_1$-1 und $k_2$ = 0, ..., $N_2$-1. Die hierzu inverse Kosinustransformation hat beispielsweise die Form mit $n_1$ = 0, ..., $N_1$-1 und $n_2$ = 0, ..., $N_2$-1.

Im Falle einer Sinustransformation wird beispielsweise eine diskrete Sinustransformation der Form

$$C(k)=\sum_{n=0}^{N-1} x_n \sin\left[\frac{\pi}{N}\left(n+\frac{1}{2}\right)(k+1)\right]$$

mit k = 0, ..., N-1 für einen Datenblock eines diskreten linearen Signals verwendet, welches N Datenelemente umfasst. Diese Sinustransformation ist bezüglich ihrer Randwerte ungerade am Anfang um $x_{-1/2}$ und gerade am Ende um $x_{N-1/2}$. Die hierzu inverse Sinustransformation hat beispielsweise die Form

$$x_n = \frac{(-1)^n}{2}C(N-1) + \sum_{k=0}^{N-2} C(k) \sin\left[\frac{\pi}{N}(k+1)\left(n+\frac{1}{2}\right)\right]$$

mit n = 0, ..., N-1.

Eine Erweiterung auf mehrere Dimensionen kann beispielsweise durch eine mehrdimensionale Anwendung erfolgen. So kann etwa ein zweidimensionaler Datenblock der Größe $N_1$ x $N_2$ durch eine spalten- oder zeilenweise Anwendung der Sinustransformation transformiert werden, beispielsweise mit einer diskreten Sinustransformation der Form

$$C(k_1,k_2)=\sum_{n_1=0}^{N_1-1}\sum_{n_2=0}^{N_2-1} x_{n_1,n_2} \sin\left[\frac{\pi}{N_1}\left(n_1+\frac{1}{2}\right)(k_1+1)\right] \sin\left[\frac{\pi}{N_2}\left(n_2+\frac{1}{2}\right)(k_2+1)\right]$$

mit $k_1 = 0, ..., N_1-1$ und $k_2 = 0, ..., N_2-1$. Die hierzu inverse Sinustransformation hat beispielsweise die Form

$$x_{n_1,n_2} = \frac{(-1)^{n_1}(-1)^{n_2}}{2N} C(N_1-1, N_2-1)$$

$$+ \frac{2}{N} \sum_{k_1=0}^{N_1-2} \sum_{k_2=0}^{N_2-2} C(k_1,k_2) \sin\left[\frac{\pi}{N_1}(k_1+1)\left(n_1+\frac{1}{2}\right)\right] \sin\left[\frac{\pi}{N_2}(k_2+1)\left(n_2+\frac{1}{2}\right)\right]$$

mit $n_1 = 0, ..., N_1-1$ und $n_2 = 0, ..., N_2-1$.

Eine Größe der Koeffizientenmatrix 112 entspricht beispielsweise einer Größe des zu transformierenden Datenblocks. Fig. 5 ist eine exemplarische zweidimensionale Koeffizientenmatrix 112 mit beispielsweise $8 \times 8$ Koeffizienten gezeigt, welche aus einer diskreten Frequenztransformation eines zweidimensionale Datenblocks mit beispielsweise 8x8 Datenelementen resultiert. Die Koeffizienten 116 der Koeffizientenmatrix 112 sind unterschiedlichen Frequenzen zugeordnet bzw. beschreiben unterschiedliche Frequenzanteile des zugrundeliegenden Datenblocks.

Fig. 6 zeigt eine exemplarische Anordnung der Koeffizienten 116 für eine exemplarische Koeffizientenmatrix 112. Eine N x N Koeffizientenmatrix umfasst $N^2$ Koeffizienten 116 $C(k_1,k_2)$ mit $k_1 = 0, ..., N-1$ und $k_2 = 0, ..., N-1$. Hierbei gilt grundsätzlich, je weiter rechts und je weiter unten ein Koeffizient116 in der Koeffizientenmatrix 112 angeordnet ist desto höher ist die jeweilige Frequenz.

Beispielsweise können die Koeffizienten 116 der Koeffizientenmatrix 112 einem niedrigen Frequenzbereich 118, einem mittleren Frequenzbereich 120 und/oder einem hohen Frequenzbereich 122 zugeordnet werden. Beispielsweise umfasst die Koeffizientenmatrix 112 Koeffizienten 116 eines niedrigen Frequenzbereichs 118, welche niedrigen Frequenzen zugeordnet sind. Beispielsweise umfasst die Koeffizientenmatrix 112 Koeffizienten 116 eines mittleren Frequenzbereichs 120, welche mittleren Frequenzen zugeordnet sind. Beispielsweise umfasst die Koeffizientenmatrix 112 Koeffizienten 116 eines hohen Frequenzbereichs 122, welche hohen Frequenzen zugeordnet sind.

Im Falle einer 8 x 8 Koeffizientenmatrix, wie in Fig. 5 exemplarisch gezeigt, umfasst der niedrige Frequenzbereich 118 beispielsweise die Koeffizienten C(0,0) bis C(0,4), C(1,0) bis C(1,3), C(2,0) bis C(2,2), C(3,0) bis C(3,1) und C(4,0). Der mittlere Frequenzbereich 120 umfasst beispielsweise die Koeffizienten C(0,5) bis C(0,7), C(1,4) bis C(1,7), C(2,3) bis C(2,7), C(3,2) bis C(3,6), C(4,1) bis C(4,5), C(5,0) bis C(5,4), C(6,0) bis C(6,3) und C(7,0) bis C(7,2). Der hohe Frequenzbereich 122 umfasst beispielsweise die Koeffizienten C(3,7), C(4,6) bis C(4,7), C(5,5) bis C(5,7), C(6,4) bis C(6,7) und C(7,3) bis C(7,7).

Alternativer Weise umfasst im Falle einer 8 x 8 Koeffizientenmatrix der niedrige Frequenzbereich 118 beispielsweise die Koeffizienten C(0,0) bis C(0,3), C(1,0) bis C(1,2), C(2,0) bis C(2,1) und C(3,0). Der mittlere Frequenzbereich 120 umfasst beispielsweise die Koeffizienten C(0,4) bis C(0,7), C(1,3) bis C(1,7), C(2,2) bis C(2,7), C(3,1) bis C(3,7), C(4,0) bis C(4,6), C(5,0) bis C(5,5), C(6,0) bis C(6,4) und C(7,0) bis C(7,3). Der hohe Frequenzbereich 122 umfasst beispielsweise die Koeffizienten C(4,7), C(5,6) bis C(5,7), C(6,5) bis C(6,7), und C(7,4) bis C(7,7).

Alternativer Weise umfasst im Falle einer 8 x 8 Koeffizientenmatrix der niedrige Frequenzbereich 118 beispielsweise die Koeffizienten C(0,0) bis C(0,2), C(1,0) bis C(1,1) und C(2,0). Der mittlere Frequenzbereich 120 umfasst beispielsweise die Koeffizienten C(0,3) bis C(0,7), C(1,2) bis C(1,7), C(2,1) bis C(2,7), C(3,0) bis C(3,7), C(4,0) bis C(4,7), C(5,0) bis C(5,6), C(6,0) bis C(6,5) und C(7,0) bis C(7,4). Der hohe Frequenzbereich 122 umfasst beispielsweise die Koeffizienten C(5,7), C(6,6) bis C(6,7), und C(7,5) bis C(7,7).

Im Falle einer N x N Koeffizientenmatrix, wobei N eine gerade natürliche Zahl ist, umfasst der niedrige Frequenzbereich 118 beispielsweise die Koeffizienten C(0,0) bis C(0,N/2), C(1,0) bis C(1,N/2-1), ..., C(N/2-1,0) bis C(N/2-1,1) und C(N/2,0). Der mittlere Frequenzbereich 120 umfasst beispielsweise die Koeffizienten C(0,N/2+1) bis C(0,N-1), C(1,N/2) bis C(1,N-1), ..., C(N-2,0) bis C(N-2,N/2-1) und C(N-1,0) bis C(N-1,N/2-2).Der hohe Frequenzbereich 122 umfasst beispielsweise die Koeffizienten C(N/2-1, N-1), C(N/2,N-2) bis C(N/2,N-1), ..., C(N-2,N/2-1) bis C(N-2,N-1) und C(N-1,N/2-2) bis C(N-1,N-1).

Im Falle einer N x N Koeffizientenmatrix, wobei N eine gerade natürliche Zahl ist, umfasst der niedrige Frequenzbereich 118 beispielsweise die Koeffizienten C(0,0) bis C(0,N/2-1), C(1,0) bis C(1,N/2-2), ..., C(N/2-2,0) bis C(N/2-2,1) und C(N/2-1,0). Der mittlere Frequenzbereich 120 umfasst beispielsweise die Koeffizienten C(0,N/2) bis C(0,N-1), C(1,N/2-1) bis C(1,N-1), ..., C(N-2,0) bis C(N-2,N/2) und C(N-1,0) bis C(N-1,N/2-1).Der hohe Frequenzbereich 122 umfasst beispielsweise die Koeffizienten C(N/2, N-1), C(N/2+1,N-2) bis C(N/2+1,N-1), ..., C(N-2,N/2) bis C(N-2,N-1) und C(N-1,N/2-1) bis C(N-1,N-1).

Im Falle einer N x N Koeffizientenmatrix, wobei N eine gerade natürliche Zahl ist, umfasst der niedrige Frequenzbereich 118 beispielsweise die Koeffizienten C(0,0) bis C(0,N/2-2), C(1,0) bis C(1,N/2-3), ..., C(N/2-3,0) bis C(N/2-3,1) und C(N/2-2,0). Der mittlere Frequenzbereich 120 umfasst beispielsweise die Koeffizienten C(0,N/2-1) bis C(0,N-1), C(1,N/2-2) bis C(1,N-1), ..., C(N-2,0) bis C(N-2,N/2+1) und C(N-1,0) bis C(N-1,N/2).Der hohe Frequenzbereich 122 umfasst beispielsweise die Koeffizienten C(N/2+1, N-1), C(N/2+2,N-2) bis C(N/2+2,N-1), ..., C(N-2,N/2+1) bis C(N-2,N-1) und C(N-1,N/2) bis C(N-1,N-1).

Im Falle einer N x N Koeffizientenmatrix, wobei N eine ungerade natürliche Zahl ist, umfasst der niedrige Frequenzbereich 118 beispielsweise die Koeffizienten C(0,0) bis C(0,(N+1)/2-1), C(1,0) bis C(1,(N+1)/2-2), ..., C((N+1)/2-2,0) bis C((N+1)/2-2,1) und C((N+1)/2-1,0). Der mittlere Frequenzbereich 120 umfasst beispielsweise die Koeffizienten C(0,(N+1)/2) bis C(0,N-1), C(1,(N+1)/2-1) bis C(1,N-1), ..., C(N-2,0) bis C(N-2,(N-1)/2-1) und C(N-1,0) bis C(N-1,(N-1)/2-2).Der hohe Frequenzbereich 122 umfasst beispielsweise die Koeffizienten C((N+1)/2-2, N-1), C((N+1)/2-1,N-2) bis C((N+1)/2-1,N-1), ..., C(N-2,(N-1)/2) bis C(N-2,N-1) und C(N-1,(N-1)/2-1) bis C(N-1,N-1).

Im Falle einer N x N Koeffizientenmatrix, wobei N eine ungerade natürliche Zahl ist, umfasst der niedrige Frequenzbereich 118 beispielsweise die Koeffizienten C(0,0) bis C(0,(N-1)/2-1), C(1,0) bis C(1,(N-1)/2-2), ..., C((N-1)/2-2,0) bis C((N-1)/2-2,1) und C((N-1)/2-1,0). Der mittlere Frequenzbereich 120 umfasst beispielsweise die Koeffizienten C(0,(N-1)/2) bis C(0,N-1), C(1,(N-1)/2-1) bis C(1,N-1), ..., C(N-2,0) bis C(N-2,(N-1)/2) und C(N-1,0) bis C(N-1,(N-1)/2-1).Der hohe Frequenzbereich 122 umfasst beispielsweise die Koeffizienten C((N-1)/2-2, N-1), C((N-1)/2-1,N-2) bis C((N+1)/2-1,N-1), ..., C(N-2,(N-1)/2+1) bis C(N-2,N-1) und C(N-1,(N-1)/2) bis C(N-1,N-1).

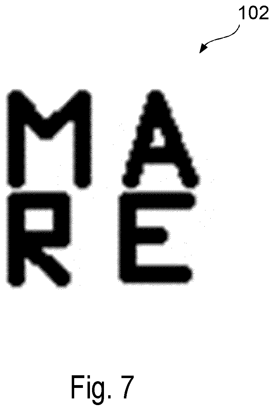

Fig. 7 zeigt ein exemplarisches digitales Wasserzeichen 102 in Form eines Bildes, welches beispielsweise als Bilddatei bereitgestellt wird. Hierbei handelt es sich beispielsweise um ein Schwarzweißbild. Dabei können die Werte der einzelnen Pixel des Wasserzeichens 102 entweder weiß oder schwarz sein. Im Falle eines Binärbildes werden den Pixeln beispielsweise die Pixelwerte 1 oder 0 für Weiß und Schwarz zugeordnet. In diesem Fall handelt es sich bei den Bitsequenzen, welche zuzuordnen sind, beispielsweise um einzelne Bits, welche jeweils einen Pixelwert definieren. Beispielsweise kann es sich bei dem Schwarzweißbild auch um ein Schwarzweißbild handeln, welches eine Graustufenformatierung verwendet. In diesem Fall werden beispielsweise nur die Pixelwerte 255 für Weiß und 0 für Schwarz verwendet. In diesem Fall handelt es sich bei den Bitsequenzen, welche zuzuordnen sind, zum Beispiel um Sequenzen aus 8 Bits, welche jeweils einen Pixelwert definieren.

Beispielsweise entspricht die Größe des Wasserzeichens 102, d.h. die Anzahl der Pixel, der Größe der Gruppen von Koeffizientenmatrizen, d.h. der Anzahl an Koeffizientenmatrizen in den Gruppen. Mithin kann jedem Pixel des Bildes, d.h. jeder Bitsequenz, eine Koeffizientenmatrix pro vollständiger Gruppe zugeordnet werden. Falls eine Aufteilung der Koeffizientenmatrizen in die Gruppen nicht aufgeht, kann eine unvollständige Restgruppe verbleiben. Beispielsweise können in dieser Restgruppe die Koeffizientenmatrizen Pixeln des Bildes zugeordnet werden, wobei aber nicht jedem Pixel eine Koeffizientenmatrix zugeordnet wird. Dies bedeutet, dass das Wasserzeichen 102 beispielsweise unvollständig in die unvollständige Restgruppe eingebettet wird.

Zum Einbetten des Wasserzeichens 102 werden in den einzelnen Gruppen von Koeffizientenmatrizen die Koeffizientenmatrizen geändert. Dabei hängt die Änderung der Koeffizientenmatrizen jeweils von dem Wert des zugeordneten Pixels bzw. der entsprechenden zugeordneten Bitsequenz des Wasserzeichens ab. So kann das Wasserzeichen wird in jede Gruppe der Mehrzahl von Gruppen und damit in die zu sichernde Datei eingebettet werden.

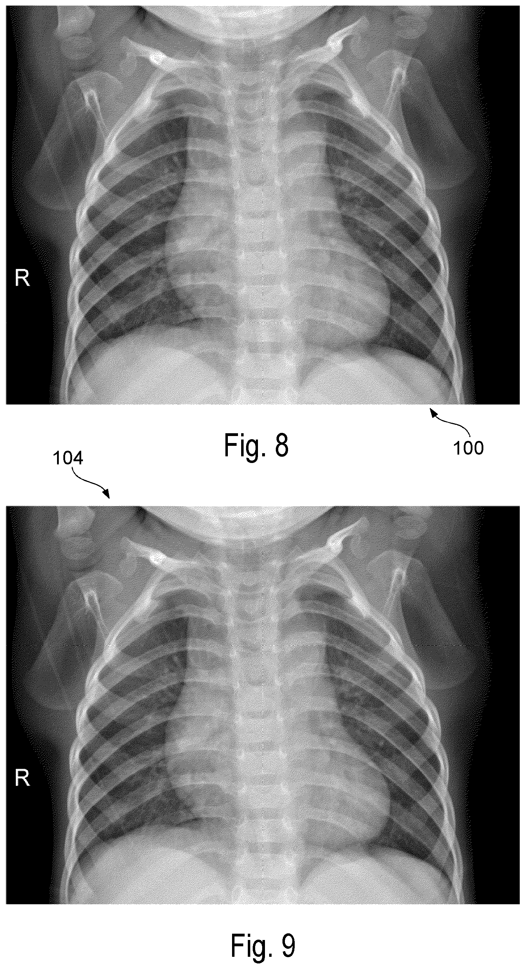

Fig. 8 und 9 zeigen zwei exemplarische Bilddatei 100, 104 jeweils in Form eines Thoraxröntgenbildes. Bei den Bildern handelt es sich beispielsweise jeweils um das gleiche Thoraxröntgenbild, wobei der einzige Unterschied zwischen den Bildern darin besteht, dass es sich bei der in Fig. 8 zeigte Bilddatei 100 um die unveränderte Originalbilddatei handelt, während in die geänderte Bilddatei 104 das Wasserzeichen 102 aus Fig. 7 eingebettet wurde. Das Thoraxröntgenbild der beiden exemplarischen Bilddateien 100, 104 kann beispielsweise eine Röntgenaufnahme eines Thorax darstellen. Die Bilddateien 100, 104 können beispielsweise als JPEG-Dateien vorliegen. Bei einer visuellen Betrachtung der beiden Bilder ist beispielsweise kein Unterschied zwischen diesen zu erkennen.

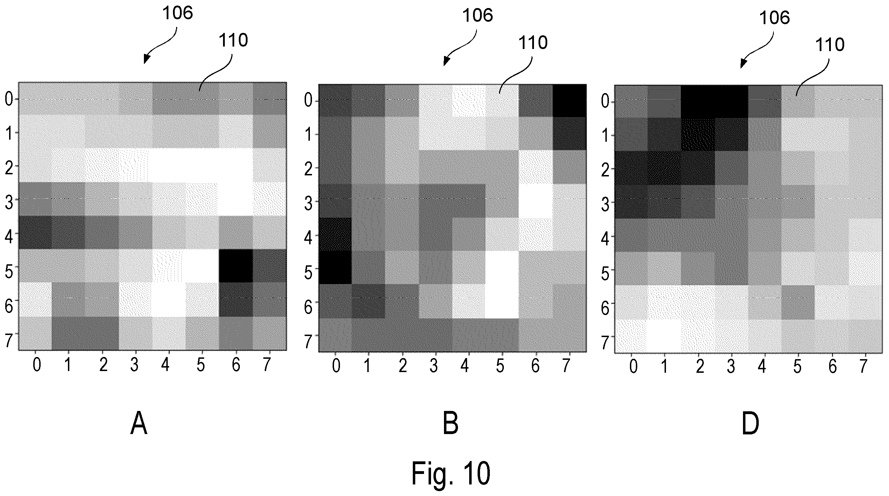

Fig. 10 zeigt drei exemplarische Datenblöcke 106 einer zu sichernden Datei in Form einer Bilddatei. Die drei Datenblöcke sind mit den Buchstaben A, B und C durchnummeriert. Bei der zugrundeliegenden Bilddatei handelt es sich beispielsweise um ein Graustufenbild. Bei den drei Datenblöcke 106 handelt es sich jeweils mithin ebenfalls um Graustufenbilder bzw. Bildausschnitte des zugrundeliegenden Graustufenbildes. Die entsprechenden Datenblöcke 106 haben beispielsweise jeweils eine Größe von 8 x 8 Pixeln.

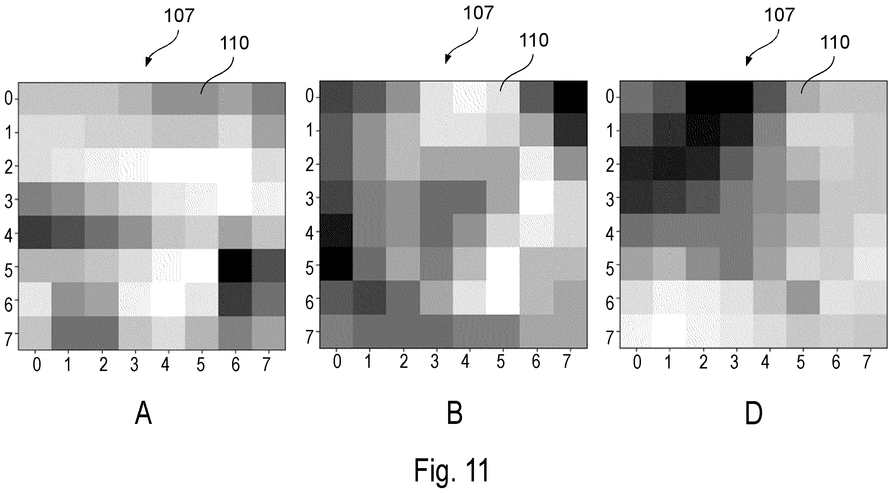

Fig. 11 zeigt drei exemplarische geänderte Datenblöcke 107 einer gesicherten Datei. Diese drei geänderten Datenblöcken 107 entsprechen den drei Datenblöcken 106 aus Fig. 10, in welche jeweils ein Pixel eines Wasserzeichens eingebettet wurde. In den in Fig. 11 gezeigten Datenblöcken 107 wurde jeweils der Koeffizient [0,0] der zugehörigen Koeffizientenmatrix geändert. Dies bedeutet, dass der entsprechende Originaldatenblock 106 aus Fig. 10 mittels diskreter Kosinustransformation in eine Koeffizientenmatrix transformiert wurde, der Koeffizient [0,0] der resultierenden Koeffizientenmatrix in Abhängigkeit von dem der entsprechenden Koeffizientenmatrix bzw. dem zugrundeliegenden Datenblock 106 zugeordneten Pixel des Wasserzeichens geändert wurde und die so geänderte Koeffizientenmatrix mittels einer inversen diskreten Kosinustransformation aus dem Frequenzraum in den Bildraum zurücktransformiert wurde. Das Ergebnis dieser Rücktransformation sind die in Fig. 11 gezeigten geänderten Datenblöcke 107.

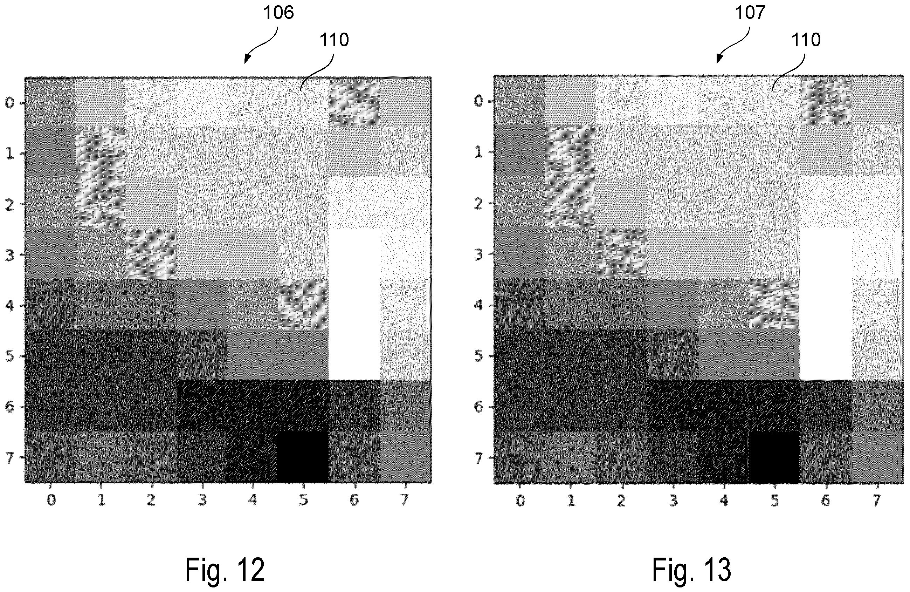

Die Fig. 12 und 13 zeigen ebenfalls jeweils einen Originaldatenblock 106 und einen zugehörigen geänderten Datenblock 107, in welchen ein Pixel des Wasserzeichens eingebettet wurde, indem der Koeffizient [0,0] der zugehörigen Koeffizientenmatrix geändert wurde. Eine Änderung des Koeffizienten [0,0] der zugehörigen Koeffizientenmatrix führt dazu, dass die Helligkeit der einzelnen Datenblöcke geändert wird. Somit wird die Helligkeit bzw. Belichtung der einzelnen Datenblöcke bzw. Bildausschnitte jeweils in Abhängigkeit von dem Wert des zugeordneten Pixels bzw. der entsprechenden zugeordneten Bitsequenz des Wasserzeichens variiert.

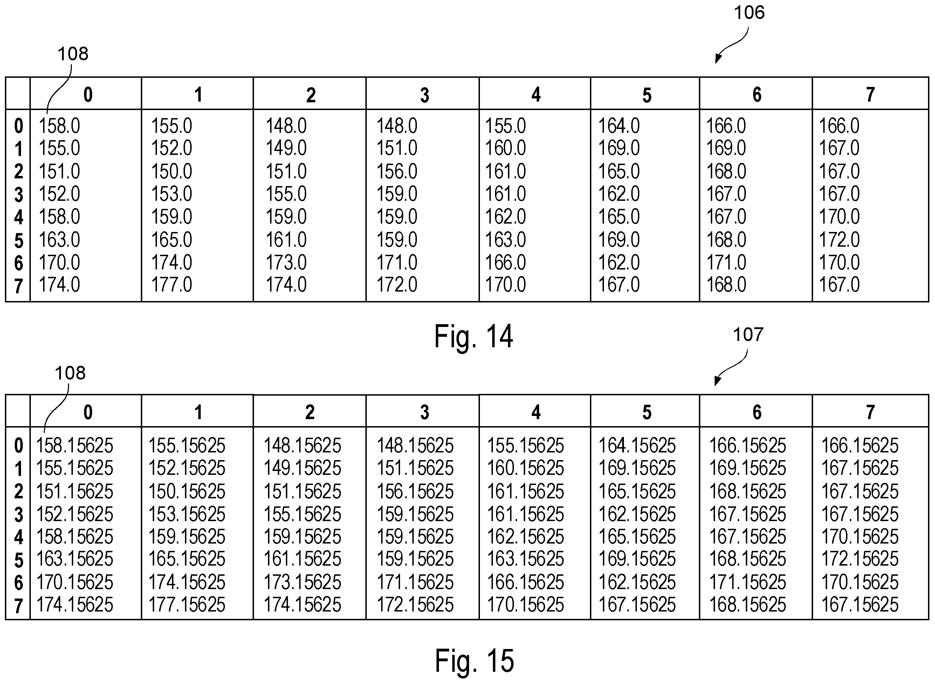

Fig. 14 zeigt einen exemplarischen Datenblock 106 mit Datenelementen 108 einer zu sichernden Datei in Form eines Graustufenbildes. Der Datenblock 106 entspricht einem Bildausschnitt aus dem Graustufenbild, beispielsweise einem 8 x 8 Pixel großen Ausschnitt. Die Datenelemente 108 des Datenblocks 106 geben dabei Graustufenwerte der entsprechenden Pixel des Bildausschnitts in Form von Bitsequenzen an.

Fig. 15 zeigt einen exemplarischen geänderten Datenblock 107 einer gesicherten Datei. Dieser geänderte Datenblock 107 entspricht dem Datenblocken 106 aus Fig. 14, in welchen ein Pixel des Wasserzeichens eingebettet wurde. In dem in Fig. 15 gezeigten Datenblock 107 wurde die Koeffizient [0,0] der zugehörigen Koeffizientenmatrix geändert. Dies bedeutet, dass der entsprechende Originaldatenblock 106 aus Fig. 14 mittels diskreter Kosinustransformation in eine Koeffizientenmatrix transformiert wurde, der Koeffizient [0,0] der resultierenden Koeffizientenmatrix in Abhängigkeit von dem der entsprechenden Koeffizientenmatrix bzw. dem zugrundeliegenden Datenblock 106 zugeordneten Pixel des Wasserzeichens geändert wurde und die so geänderte Koeffizientenmatrix mittels einer inversen diskreten Kosinustransformation aus dem Frequenzraum in den Bildraum zurücktransformiert wurde. Das Ergebnis dieser Rücktransformation ist der in Fig. 15 gezeigte geänderte Datenblöcke 107. Aus der Änderung des Koeffizienten [0,0] der zugehörigen Koeffizientenmatrix resultiert eine einheitliche Änderung der Werte der Datenelemente 108 des geänderten Datenblocks 107. In dem gezeigten Beispiel wird ein einheitlicher Offset in Höhe von 0.15625 jeweils zu den Datenelemente 108 des geänderten Datenblocks 107 hinzuaddiert.

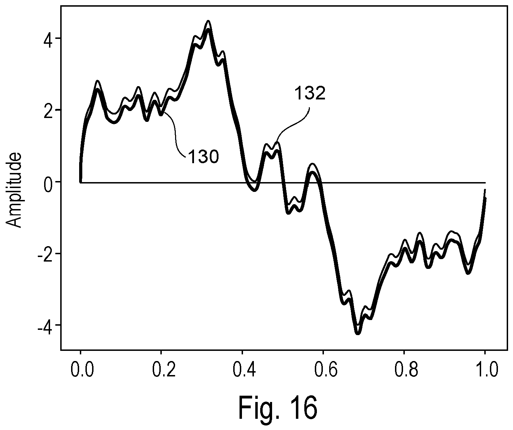

Fig. 16 zeigt eine exemplarische Amplitudenverteilungen 130, 132 für normalisierte Pixelwerte eines Datenblocks einer Originaldatei und eines geänderten Datenblocks einer geänderten Datei. In dem geänderten Datenblock wurde der Koeffizienten [0,0] der zugehörigen Koeffizientenmatrix in Abhängigkeit von dem einzubettenden Pixelwert geändert. Dies resultiert in einer einheitlichen Änderung der Werte der Datenelemente des geänderten Datenblocks bzw. in einem Offset der Amplitudenverteilung 132 des geänderten Datenblocks gegenüber der Amplitudenverteilung des Originaldatenblocks. Der Verlauf der beiden Amplitudenverteilungen 130, 132 ist identisch. Sie sind lediglich um einen Offset relativ zueinander verschoben.

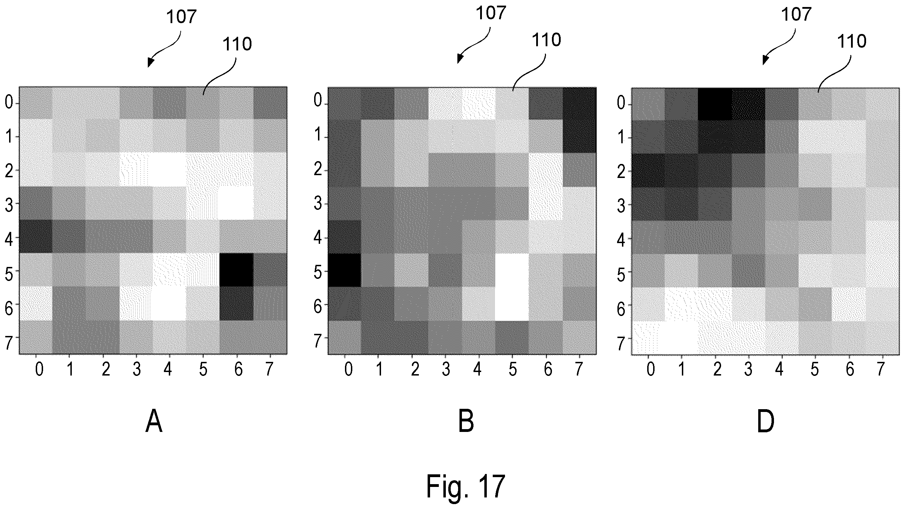

Fig. 17 zeigt drei weitere exemplarische geänderte Datenblöcke 107 einer gesicherten Datei. Diese drei geänderten Datenblöcken 107 der Fig. 17 entsprechen ebenfalls den drei Datenblöcken 106 aus Fig. 10, in welche jeweils ein Pixel eines Wasserzeichens eingebettet wurde. In den in Fig. 17 gezeigten Datenblöcken 107 wurde allerdings jeweils der Koeffizient [4,4] der zugehörigen Koeffizientenmatrix geändert. Dies bedeutet, dass der entsprechende Originaldatenblock 106 aus Fig. 10 mittels diskreter Kosinustransformation in eine Koeffizientenmatrix transformiert wurde, der Koeffizient [4,4] der resultierenden Koeffizientenmatrix in Abhängigkeit von dem der entsprechenden Koeffizientenmatrix bzw. dem zugrundeliegenden Datenblock 106 zugeordneten Pixel des Wasserzeichens geändert wurde und die so geänderte Koeffizientenmatrix mittels einer inversen diskreten Kosinustransformation aus dem Frequenzraum in den Bildraum zurücktransformiert wurde. Das Ergebnis dieser Rücktransformation sind die in Fig. 17 gezeigten geänderten Datenblöcke 107. Aufgrund der Änderung des Koeffizient [4,4] werden innerhalb der Datenblöcke 107 Pixelwerte der Pixel 110 relativ zueinander verändert, d.h. es werden alle Pixel 110 geändert, allerdings unterschiedlich stark.

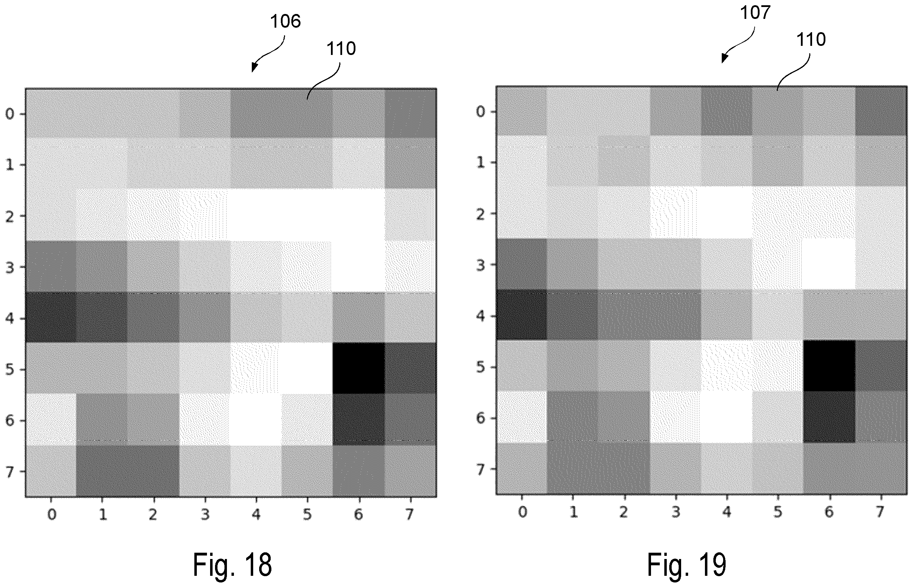

Die Fig. 18 und 19 zeigen einen Originaldatenblock 106 und einen zugehörigen geänderten Datenblock 107, in welchen ein Pixel des Wasserzeichens eingebettet wurde, indem ebenfalls der Koeffizient [4,4] der zugehörigen Koeffizientenmatrix geändert wurde. Eine Änderung des Koeffizienten [4,4] der zugehörigen Koeffizientenmatrix führt dazu, dass innerhalb der Datenblöcke 107 Pixelwerte der Pixel 110 relativ zueinander verändert. Mithin verändert sich eine Verteilung der Pixelwerte innerhalb der Datenblöcke.

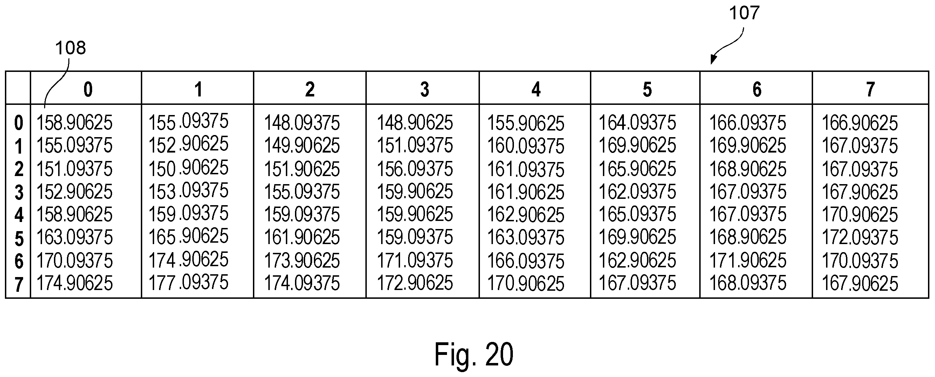

Fig. 20 zeigt einen exemplarischen geänderten Datenblock 107 einer gesicherten Datei. Dieser geänderte Datenblock 107 entspricht dem Datenblocken 106 aus Fig. 14, in welchen ein Pixel des Wasserzeichens eingebettet wurde. In dem in Fig. 20 gezeigten Datenblock 107 wurde die Koeffizient [4,4] der zugehörigen Koeffizientenmatrix geändert. Dies bedeutet, dass der entsprechende Originaldatenblock 106 aus Fig. 14 mittels diskreter Kosinustransformation in eine Koeffizientenmatrix transformiert wurde, der Koeffizient [4,4] der resultierenden Koeffizientenmatrix in Abhängigkeit von dem der entsprechenden Koeffizientenmatrix bzw. dem zugrundeliegenden Datenblock 106 zugeordneten Pixel des Wasserzeichens geändert wurde und die so geänderte Koeffizientenmatrix mittels einer inversen diskreten Kosinustransformation aus dem Frequenzraum in den Bildraum zurücktransformiert wurde. Das Ergebnis dieser Rücktransformation ist der in Fig. 20 gezeigte geänderte Datenblöcke 107. Aus der Änderung des Koeffizienten [4,4] der zugehörigen Koeffizientenmatrix ergibt sich eine Veränderung der Pixelwerte bzw. Datenelemente 108 innerhalb des Datenblocks 107 relativ zueinander verändert. Mithin verändert sich eine Verteilung der Pixelwerte innerhalb des Datenblock 107 relativ zu dem zugrundeliegenden Datenblock 106 aus Fig. 14.

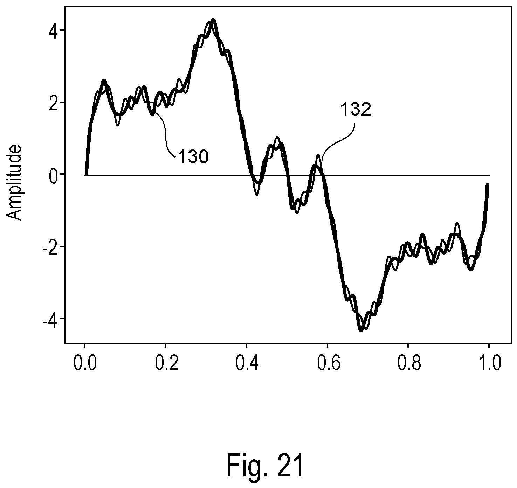

Fig. 21 zeigt eine exemplarische Amplitudenverteilungen 130, 132 für normalisierte Pixelwerte eines Datenblocks eines Originaldatei und eines geänderten Datenblocks einer geänderten Datei. In dem geänderten Datenblock wurde der Koeffizienten [4,4] der zugehörigen Koeffizientenmatrix in Abhängigkeit von dem einzubettenden Pixelwert geändert. Dies resultiert in einer Änderung der Verteilung der Pixelwerte und damit in einer Änderung der Amplituden. Es ist kein Offset gegeben. Vielmehr unterscheidet sich der Verlauf der beiden Amplitudenverteilungen 130, 132 voneinander.

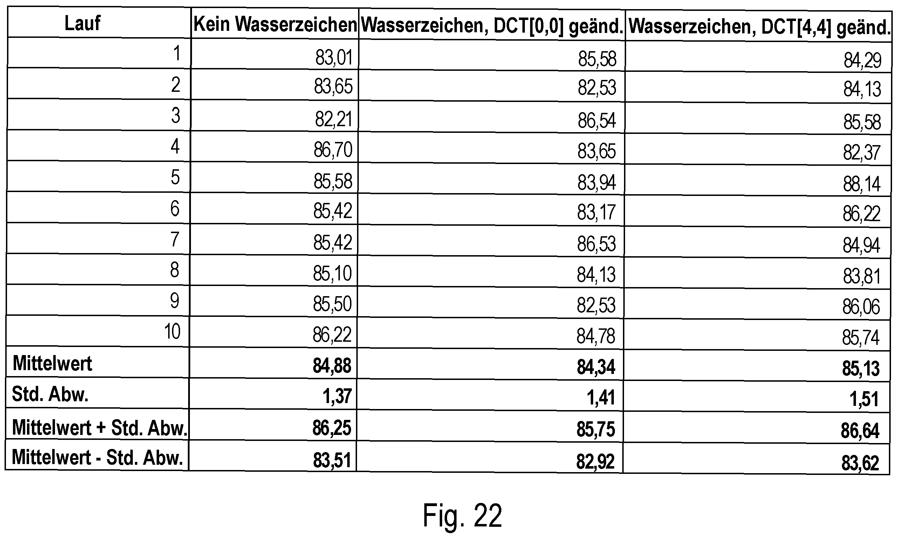

Fig. 22 zeigt eine exemplarische Übersicht über eine Auswirkung einer Einbettung eines digitalen Wasserzeichens auf eine Analyse von Dateien unter Verwendung eines Moduls zum maschinellen Lernen. Die Übersicht zeigt die Ergebnisse für einen Test mit einem Modul in Form eines Pytorch ANN-Modells und etwa 6000 Thoraxröntgenbildern. Dabei umfasst ein Trainingsset 5232 Thoraxröntgenbilder, während ein Testest 624 Bilder umfasst. Das Modul wurde mit den Trainingssets dazu trainiert in den Thoraxröntgenbilder entweder einen positiven Pneumoniebefund zu identifizieren oder diese als befundfrei zu kennzeichnen. Beispielsweise ist das Modul dazu trainiert die Thoraxröntgenbilder entsprechend zu labeln.

Beispielsweise betrug eine Laufzeit eines Trainings- und Testlaufs des entsprechenden Neuronalen Netzes mit allen 6000 Thoraxröntgenbildern auf einem herkömmlichen Notebook 6 Minuten. Zum Einbetten des Wasserzeichens wurden beispielsweise 13,6 Minuten benötigt.

Es wurden 10 vollständige Trainings- und Testläufe mit unterschiedlichen Zusammensetzungen der Trainings- und Testsets durchgeführt. Dabei wurden einmal die Thoraxröntgenbilder ohne Wasserzeichen für die Trainings- und Testläufe verwendet. Einmal wurden Thoraxröntgenbilder mit eingebettetem Wasserzeichen für die Trainings- und Testläufe verwendet, wobei das Einbetten des Wasserzeichens durch Änderung der Koeffizienten [0,0] in den kosinustransformierten Koeffizientenmatrizen der Thoraxröntgenbilder erfolgt. Schließlich wurden Thoraxröntgenbilder mit eingebettetem Wasserzeichen für die Trainings- und Testläufe verwendet, bei denen das Wasserzeichens durch Änderung der Koeffizienten [4,4] in den kosinustransformierten Koeffizientenmatrizen der Thoraxröntgenbilder eingebettet wurde.

Die Übersicht zeigt, dass es keine signifikanten Unterschiede in den Ergebnissen für die Testsets ohne Wasserzeichen und den Ergebnissen für die Testsets mit Wasserzeichen gibt. Die in der Übersicht angeführten Werte für die korrekte Zuordnung der Bilder weisen keine signifikanten Unterschiede für Thoraxröntgenbilder mit und ohne Wasserzeichen auf. Dies gilt insbesondere für die Mittelwerte der Testläufe. Wird die Standartabweichung berücksichtigt, zeigt sich, dass die Mittelwerte und damit die Ergebnisse der Testläufe innerhalb der Standardabweichungen übereinstimmen. Mithin ergeben sich aus einem Einbetten eines Wasserzeichens in der hier beschriebenen Form, etwa unter Verwendung einer diskreten Kosinustransformation, keine negativen Einflüsse auf eine Verwendung entsprechend geänderter Bilddateien im Zuge einer Analyse mit einem Modul zum maschinellen Lernen. Dies bedeutet, dass die entsprechend geänderten Bilder zur Verwendung im Bereich des maschinellen Lernens geeignet sind.

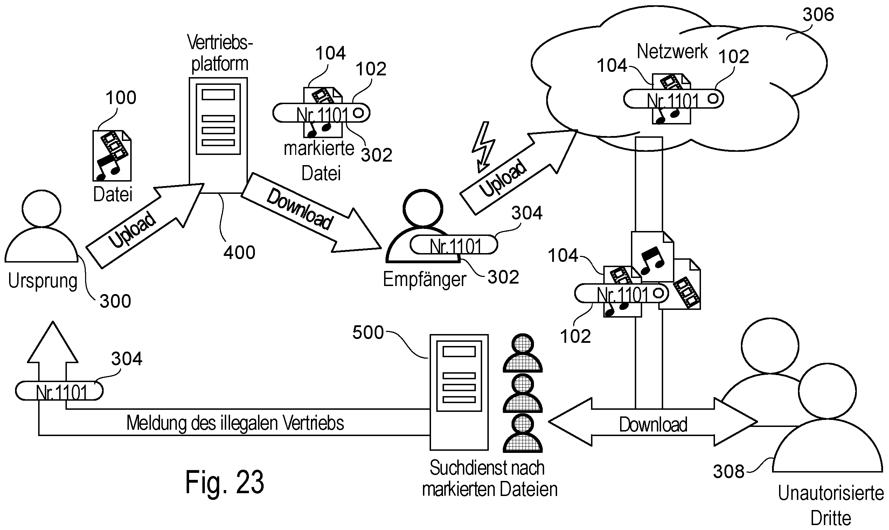

Fig. 23 zeigt ein exemplarisches System zum Sichern von Dateien und zum Identifizieren von Ursprüngen der gesicherten Dateien. Eine Computervorrichtung 400 zum Sichern von Dateien unter Verwendung von digitalen Wasserzeichen empfängt beispielsweise eine zu sichernde Datei 100. Bei dieser Computervorrichtung 400 handelt es sich beispielsweise um einen Server. Beispielsweise handelt es sich um eine Computervorrichtung bzw. einen Server einer Vertriebsplattform für die entsprechende Datei 100. Beispielsweise wird die Datei 100 von einem Rechteinhaber bzw. Ursprung an die Computervorrichtung 400 gesendet bzw. hochgeladen. Die Datei 100 wird durch Einbetten eines Wasserzeichens gesichert. Hierzu wird beispielsweise das Verfahren gemäß Fig. 1 verwendet. Das Ergebnis ist eine gesicherte Datei 104 mit einem eingebetteten Wasserzeichen 102. Beispielsweise erfolgt eine Sicherung der Datei 104 vor einem Herunterladen. Dabei umfasst das eingebettete Wasserzeichen 102 beispielsweise eine Empfänger-ID 304 eines Empfängers 302, welcher das Herunterladen der gesicherte Datei 104 anfragt. Die dem Empfänger 302 mittels Download bzw. zum Herunterladen bereitgestellte Datei 104 ist somit beispielsweise in einer Art markiert, dass sie sich eindeutig dem entsprechenden Empfänger 302 zuordnen lässt.

Sollte der Empfänger 302 die heruntergeladenen Datei 104 im Folgenden widerrechtlich verbreiten, beispielsweise in einem Netzwerk 306, wie etwa dem Internet, hochladen, lässt sich die Datei 104 anhand des Wasserzeichens 102 eindeutig dem Empfänger 302 zuordnen. Beispielsweise ist die Datei 104 aus dem Netzwerk 306 herunterladbar, sodass etwa unautorisierte Dritte 308 die Datei 104 herunterladen und für ihre Zwecke verwenden können.

Beispielsweis ist ein Suchdienst nach markierten Dateien, wie etwa der Datei 104 eingerichtet. Dieser Suchdienst umfasst beispielsweise eine Computervorrichtung 500, welche zum Identifizieren von Ursprüngen von gesicherten Dateien unter Verwendung von Wasserzeichen konfiguriert ist. Die Computervorrichtung 500 ist beispielsweise dazu konfiguriert Ähnlichkeitsvergleiche von Kopien, wie etwa der aus dem Netzwerk 306 heruntergeladenen Datei 104, mit der Originaldatei 104 oder der Originaldatei 100 durchzuführen. Hierzu kann die Computervorrichtung 500 im Falle einer Bilddatei beispielsweise einen Hashing-Algorithmus für Bilder, insbesondere das sog. Perzeptuelle Hashing-Verfahren, verwenden. Diese sind dazu konfiguriert wesentliche visuellen Merkmale eines Bildes in einen kompakten numerischen Fingerabdruck oder Hash umzuwandeln. Hierbei führen ähnliche Bilder zu ähnlichen Hashes, während unterschiedliche Bilder deutlich verschiedene Hashes erzeugen. Dies ermöglicht beispielsweise eine schnelle und effiziente Ähnlichkeitsanalyse von Bildern.

Anhand des Wasserzeichens kann das Computersystem 500 den Ursprung der gesicherten Datei 104 identifizieren. Hierzu verwendet das Computersystem 500 beispielsweise eines der Verfahren gemäß den Fig. 2 bis 4. Ferner kann das Computersystem anhand der von dem Wasserzeichen umfassten Empfänger-ID 302 den Empfänger 304 identifizieren, welcher die gesicherte Datei 104 weiterverbreitet hat. Mithin kann das Computersystem 500 dem Rechteinhaber 300 eine Meldung des illegalen Vertriebs der gesicherten Datei 104 zusenden. Insbesondere kann eine solche Meldung die Empfänger-ID 302 umfassen, anhand derer der Rechteinhaber 300 den Empfänger 304 identifizieren kann.

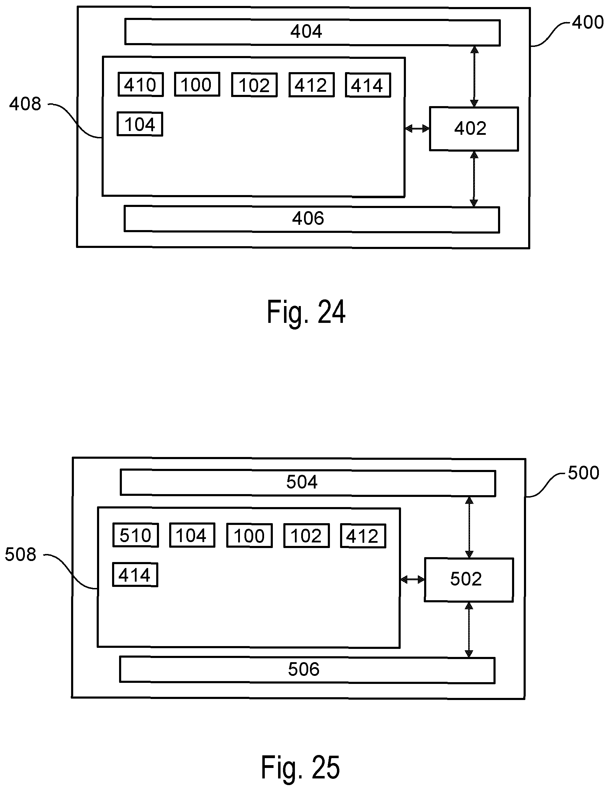

Fig. 24 zeigt eine exemplarische Computervorrichtung 400 zum Sichern einer Datei 100 unter Verwendung eines digitalen Wasserzeichens 102. Die Computervorrichtung 400 umfasst beispielsweise eine Hardwareschnittstelle 404, welche insbesondere als Kommunikationsschnittstelle zur Kommunikation über ein Netzwerk konfiguriert sein kann. Über die Hardwareschnittstelle 404 kann die Computervorrichtung 400 beispielsweise die zu sichernde Datei 100 empfangen und diese in gesicherter Form, d.h. als geänderte Datei 104 mit eingebettetem Wasserzeichen 102 etwa zu einem Download bereitstellen. Ferner umfasst die Computervorrichtung 400 beispielsweise eine optionale Nutzerschnittstelle 406, welche einem Nutzer ermöglicht mit der Computervorrichtung 400 zu interagieren. Insbesondere ermöglicht es die Nutzerschnittstelle 406 dem Nutzer das Sichern des Datei 100 zu überwachen und/oder zu steuern. Die Nutzerschnittstelle 406 kann beispielsweise Eingabe- und Ausgabemittel umfassen, wie etwa ein Display, einen Touchscreen, eine Tastatur, eine Maus etc.

Die dargestellte Computervorrichtung 400 umfasst ferner eine Prozessoreinheit bzw. Recheneinheit 402 und eine Speichereinheit 408. Bei der Prozessoreinheit 402 kann es sich beispielsweise um eine integrierte Schaltung in Form eines Mikroprozessors oder eines Mikrocontrollers in einem eingebetteten System handeln. Die dargestellte Prozessoreinheit 402 repräsentiert dabei ein oder mehrere Prozessoreinheiten.

Die Speichereinheit 408 umfasst maschinenlesbare bzw. maschinenausführbare Programminstruktionen 410. Die maschinelesbaren Programminstruktionen 410 können die Prozessoreinheit 402 dazu in die Lage versetzen, verschiedene numerische und rechnerische Aufgaben auszuführen. Die maschinelesbaren Programminstruktionen 410 können es der Prozessoreinheit 402 auch ermöglichen, mit anderen Komponenten und/oder Computervorrichtungen über die Hardwareschnittstelle 404 zu kommunizieren und diese gegebenenfalls zu steuern und/oder zu bedienen.

Die maschinelesbaren Programminstruktionen 410 können ferner dazu konfiguriert sein eine zu sichernde Datei 100 unter Verwendung eines Wasserzeichens 102 zu sichern, indem das Wasserzeichen in die zu sichernde Datei 100 eingebettet wird. Beispielsweise sich die Programminstruktionen 410 dazu konfiguriert bei einem Ausführen durch die Prozessoreinheit 402 die Prozessoreinheit 402 dazu zu steuern das Verfahren nach Fig. 1 auszuführen. Im Zuge des Einbettens des Wasserzeichens in die Datei 100, wird diese beispielsweise unter Verwendung einer diskreten Frequenztransformation, wie etwa einer diskreten Kosinus- oder Sinustransformation, transformiert. Das Ergebnis dieser Transformation ist eine transformierte Datei 412, welche eine Mehrzahl von Koeffizientenmatrizen umfasst. Diese Koeffizientenmatrizen werden in Abhängigkeiten von Bitsequenzen der zu sichernden Datei 100 geändert. Die resultierende geänderte transformierte Datei 414 wird unter Verwendung einer inversen diskreten Frequenztransformation, wie etwa einer inversen diskreten Kosinus- oder Sinustransformation zurücktransformiert. Das Ergebnis ist die gesicherte Datei 104, in welche das Wasserzeichen 102 mehrfach in redundanter Form eingebettet ist.

Das eingebettete Wasserzeichen 102 gibt beispielsweise den Ursprung der Datei 104 an. Beispielsweise gibt das Wasserzeichen zudem einen Empfänger an, welchem die Datei 104 zur Verfügung gestellt wird.

Fig. 25 zeigt eine exemplarische Computervorrichtung 500 zum Identifizieren eines Ursprungs einer zu prüfenden Datei 104 unter Verwendung eines digitalen Wasserzeichens 102. Die Computervorrichtung 500 umfasst beispielsweise eine Hardwareschnittstelle 504, welche insbesondere als Kommunikationsschnittstelle zur Kommunikation über ein Netzwerk konfiguriert sein kann. Über die Hardwareschnittstelle 504 kann die Computervorrichtung 500 beispielsweise die zu prüfende Datei 104 empfangen.

Ferner umfasst die Computervorrichtung 500 beispielsweise eine optionale Nutzerschnittstelle 506, welche einem Nutzer ermöglicht mit der Computervorrichtung 500 zu interagieren. Insbesondere ermöglicht es die Nutzerschnittstelle 506 dem Nutzer das Prüfen der zu prüfenden Datei 104 zu überwachen und/oder zu steuern. Die Nutzerschnittstelle 506 kann beispielsweise Eingabe- und Ausgabemittel umfassen, wie etwa ein Display, einen Touchscreen, eine Tastatur, eine Maus etc.

Die dargestellte Computervorrichtung 500 umfasst ferner eine Prozessoreinheit bzw. Recheneinheit 502 und eine Speichereinheit 508. Bei der Prozessoreinheit 502 kann es sich beispielsweise um eine integrierte Schaltung in Form eines Mikroprozessors oder eines Mikrocontrollers in einem eingebetteten System handeln. Die dargestellte Prozessoreinheit 502 repräsentiert dabei ein oder mehrere Prozessoreinheiten.

Die Speichereinheit 508 umfasst maschinenlesbare bzw. maschinenausführbare Programminstruktionen 510. Die maschinelesbaren Programminstruktionen 510 können die Prozessoreinheit 502 dazu in die Lage versetzen, verschiedene numerische und rechnerische Aufgaben auszuführen. Die maschinelesbaren Programminstruktionen 510 können es der Prozessoreinheit 502 auch ermöglichen, mit anderen Komponenten und/oder Computervorrichtungen über die Hardwareschnittstelle 504 zu kommunizieren und diese gegebenenfalls zu steuern und/oder zu bedienen.

Die maschinelesbaren Programminstruktionen 510 können ferner dazu konfiguriert sein einen Ursprung einer zu prüfenden Datei 104 unter Verwendung eines digitalen Wasserzeichens 102 zu identifizieren. Beispielsweise sich die Programminstruktionen 510 dazu konfiguriert bei einem Ausführen durch die Prozessoreinheit 502 die Prozessoreinheit 502 dazu zu steuern eines der Verfahren nach einer der Fig. 2 bis 4 auszuführen. Im Zuge des Identifizierens des Ursprungs wird die zu prüfende Datei 104 beispielsweise unter Verwendung einer diskreten Frequenztransformation, wie etwa einer diskreten Kosinus- oder Sinustransformation, transformiert. Das Ergebnis dieser Transformation ist eine transformierte Datei 414, welche eine Mehrzahl von Koeffizientenmatrizen umfasst, in die das Wasserzeichen 102 eingebettet ist. Beispielsweise kann anhand der Werte von Koeffizienten der Koeffizientenmatrizen, etwa daran, ob diese gerade oder ungerade sind, das Wasserzeichen 102 abgelesen bzw. aus der transformierten Datei 414 extrahiert werden. Alternativer Weise kann die unter Verwendung einer Kopie der Datei 102, welche kein Wasserzeichen umfasst, eine transformierte Datei 412 ohne eingebettetes Wasserzeichen 102 erzeugt werden. Diese transformierte Datei 412 ist beispielsweise das Ergebnis einer diskreten Frequenztransformation, wie etwa einer diskreten Kosinus- oder Sinustransformation, der Date 102. Aus einem Vergleich zwischen den Dateien 414 und 412 können beispielsweise die Änderungen der Datei 414 gegenüber der Datei 412 bestimmt werden. in diesen Änderungen ist beispielsweise das Wasserzeichen kodiert.

Das extrahierte Wasserzeichen 102 gibt beispielsweise den Ursprung der Datei 104 an. Beispielsweise gibt das Wasserzeichen zudem einen Empfänger an, welchem die Datei 104 zur Verfügung gestellt wurde.

Obwohl die Erfindung in den Zeichnungen und der vorstehenden Beschreibung ausführlich veranschaulicht und beschrieben ist, ist diese Veranschaulichung und Beschreibung als beispielhaft und nicht einschränkend zu betrachten; die Erfindung ist nicht auf die offenbarten Ausführungsformen beschränkt.

Andere Variationen der offengelegten Beispiele können von den Fachleuten bei der Ausführung der beanspruchten Erfindung anhand der Zeichnungen, der Beschreibung und der beigefügten Ansprüche verstanden und ausgeführt werden. In den Ansprüchen schließt das Wort "umfassend" andere Elemente oder Schritte nicht aus und der unbestimmte Artikel "ein" schließt eine Mehrzahl nicht aus. Die bloße Tatsache, dass bestimmte Merkmale in voneinander abweichenden abhängigen Ansprüchen genannt werden, bedeutet nicht, dass eine Kombination dieser Merkmale nicht vorteilhaft sein kann. Etwaige Bezugszeichen in den Ansprüchen sollten nicht als Einschränkung des Schutzbereichs ausgelegt werden.

Ein einzelner Prozessor oder eine andere Einheit kann die Funktionen mehrerer in den Ansprüchen genannter Elemente erfüllen. Ein Computerprogramm kann auf einem geeigneten Medium gespeichert/verteilt werden, beispielsweise auf einem optischen Speichermedium oder einem Festkörpermedium, das zusammen mit oder als Teil anderer Hardware geliefert wird, es kann aber auch in anderer Form verteilt werden, beispielsweise über das Internet oder andere drahtgebundene oder drahtlose Telekommunikationssysteme.

Wie der Fachmann verstehen wird, können Aspekte der vorliegenden Erfindung in Form einer Vorrichtung, eines Verfahrens oder eines Computerprogrammprodukts verkörpert werden. Dementsprechend können Aspekte der vorliegenden Erfindung die Form einer reinen Hardware-Variante, einer reinen Software-Variante (einschließlich Firmware, residenter Software, Mikrocode usw.) oder einer Variante annehmen, die Software- und Hardware-Aspekte kombiniert, die hier allgemein als "Schaltung", "Modul" oder "System" bezeichnet werden können. Darüber hinaus können Aspekte der vorliegenden Erfindung die Form eines Computerprogrammprodukts annehmen, das in einem oder mehreren computerlesbaren Medium(en) mit darauf verkörpertem computerausführbarem Code verkörpert ist.

Es kann eine beliebige Kombination aus einem oder mehreren computerlesbaren Medien verwendet werden. Das computerlesbare Medium kann ein computerlesbares Signalmedium oder ein computerlesbares Speichermedium sein. Ein "computerlesbares Speichermedium", wie es hier verwendet wird, umfasst jedes greifbare Speichermedium, das Befehle speichern kann, die von einem Prozessor oder einem Rechensystem einer Computereinheit ausführbar sind. Das computerlesbare Speichermedium kann als computerlesbares nichttransitorisches Speichermedium bezeichnet werden. Das computerlesbare Speichermedium kann auch als greifbares computerlesbares Medium bezeichnet werden. In einigen Ausführungsformen kann ein computerlesbares Speichermedium auch in der Lage sein, Daten zu speichern, auf die das Prozessor- bzw. Rechensystem der Computereinheit zugreifen kann. Beispiele für computerlesbare Speichermedien sind unter anderem: eine Diskette, ein magnetisches Festplattenlaufwerk, eine Solid-State-Festplatte, ein Flash-Speicher, ein USB-Stick, ein Direktzugriffsspeicher (engl.: Random Access Memory/RAM), ein Festwertspeicher (engl.: Read Only Memory/ROM), eine optische Disk, eine magneto-optische Disk und die Registerdatei des Prozessor- bzw. Rechensystems. Beispiele für optische Disks sind Compact Disks (CD) und Digital Versatile Disks (DVD), beispielsweise CD-ROM-, CD-RW-, CD-R-, DVD-ROM-, DVD-RW- oder DVD-R-Disks. Der Begriff "computerlesbares Speichermedium" bezieht sich auch auf verschiedene Arten von Aufzeichnungsmedien, auf die die Computereinheit über ein Netzwerk oder eine Kommunikationsverbindung zugreifen kann. Beispielsweise können Daten über ein Modem, über das Internet oder über ein lokales Netzwerk abgerufen werden. Computerlesbarer bzw. computerausführbarer Code, der auf einem computerlesbaren Medium verkörpert ist, kann über jedes geeignete Medium übertragen werden, einschließlich, aber nicht beschränkt auf drahtlose Übertragung, drahtgebundene Übertragung, Glasfaserkabel, Hochfrequenzübertragung usw., oder über eine geeignete Kombination der vorgenannten Medien.

Ein computerlesbares Signalmedium kann ein sich ausbreitendes Datensignal mit einem darin verkörperten computerausführbaren Code enthalten, beispielsweise in einem Basisband oder als Teil einer Trägerwelle. Ein solches übertragenes Signal kann eine beliebige Form annehmen, einschließlich, aber nicht beschränkt auf, elektromagnetische oder optische Signale oder eine geeignete Kombination davon. Ein computerlesbares Signalmedium kann ein beliebiges computerlesbares Medium sein, das kein computerlesbares Speichermedium ist und das ein Programm zur Verwendung durch oder in Verbindung mit einem Befehlsausführungssystem, - apparat oder -gerät übermitteln, verbreiten oder transportieren kann.

Ein "Computerspeicher", "Speichereinheit" oder "Speicher" ist ein Beispiel für ein computerlesbares Speichermedium. Ein Computerspeicher ist jeder Speicher, auf den ein Prozessor- bzw. Rechensystem direkt zugreifen kann.

Ein "Prozessorsystem", eine "Prozessoreinheit", ein "Rechensystem" oder eine "Recheneinheit", wie hier verwendet, umfasst eine elektronische Komponente, die in der Lage ist, ein Programm oder einen maschinenausführbaren Befehl oder einen computerausführbaren Code auszuführen. Verweise auf das Prozessorsystem bzw. Rechensystem, das ein Beispiel "ein Prozessorsystem" oder "ein Rechensystem" umfasst, sind so zu verstehen, dass das Beispiel möglicherweise mehr als ein Prozessorsystem, eine Prozessoreinheit, ein Rechensystem, eine Recheneinheit oder einen Prozessorkern umfasst. Bei dem Prozessorsystem bzw. Rechensystem kann es sich zum Beispiel um einen Mehrkernprozessor handeln. Ein Prozessorsystem, eine Prozessoreinheit, ein Rechensystem, eine Recheneinheit kann sich auch auf eine Ansammlung von Prozessoreinheiten bzw. Recheneinheiten innerhalb eines einzigen Computersystems oder verteilt auf mehrere Computersysteme beziehen. Der Begriff "Prozessorsystem", "Prozessoreinheit", "Rechensystem" oder "Recheneinheit" sollte auch so interpretiert werden, dass er sich möglicherweise auf eine Ansammlung oder ein Netz von Rechenvorrichtungen bezieht, die jeweils einen Prozessor oder ein Rechensystem umfassen. Der maschinenausführbare Code oder die Anweisungen können von mehreren Rechnersystemen oder Prozessoren ausgeführt werden, die sich innerhalb derselben Rechenvorrichtung befinden oder sogar über mehrere Rechenvorrichtungen verteilt sein können.

Maschinenlesbare bzw. maschinenausführbare Instruktionen oder computerlesbarer Code bzw. computerausführbarer Code können Anweisungen oder ein Programm umfassen, das einen Prozessor oder ein anderes Rechensystem veranlasst, einen Aspekt der vorliegenden Erfindung auszuführen. Computerausführbarer Code zur Durchführung von Operationen für Aspekte der vorliegenden Erfindung kann in einer beliebigen Kombination aus einer oder mehreren Programmiersprachen, einschließlich einer objektorientierten Programmiersprache wie Java, Smalltalk, C++ oder ähnlichen und herkömmlichen prozeduralen Programmiersprachen wie der Programmiersprache "C" oder ähnlichen Programmiersprachen, geschrieben und in maschinenausführbare Anweisungen kompiliert werden. In einigen Fällen kann der computerausführbare Code in Form einer Hochsprache oder in vorkompilierter Form vorliegen und in Verbindung mit einem Interpreter verwendet werden, der die maschinenausführbaren Befehle im laufenden Betrieb erzeugt. In anderen Fällen können die maschinenausführbaren Befehle oder der computerausführbare Code in Form einer Programmierung für programmierbare Logikgatter-Arrays vorliegen.

Der ausführbare Computercode kann vollständig auf der Computereinheit des Nutzers, teilweise auf der Computereinheit des Nutzers, als eigenständiges Softwarepaket, teilweise auf der Computereinheit des Nutzers und teilweise auf einer entfernten Computereinheit oder vollständig auf der entfernten Computereinheit oder Server ausgeführt werden. Im letztgenannten Fall kann die entfernte Computereinheit mit der Computereinheit des Nutzers über ein beliebiges Netz verbunden sein, einschließlich eines lokalen Netzes (LAN) oder eines Weitverkehrsnetzes (WAN), oder die Verbindung kann mit einer externen Computereinheit hergestellt werden (beispielsweise über das Internet mit Hilfe eines Internetdienstanbieters).

Aspekte der vorliegenden Erfindung werden unter Bezugnahme auf Flussdiagrammabbildungen und/oder Blockdiagramme von Verfahren, Vorrichtungen (Systemen) und Computerprogrammprodukten gemäß den Ausführungsformen der Erfindung beschrieben. Es versteht sich, dass jeder Block oder ein Teil der Blöcke des Flussdiagramms, der Abbildungen und/oder der Blockdiagramme durch Computerprogrammanweisungen in Form von computerlesbarem bzw. computerausführbarem Code implementiert werden kann, wenn dies anwendbar ist. Es versteht sich ferner, dass Kombinationen von Blöcken in verschiedenen Flussdiagrammen, Illustrationen und/oder Blockdiagrammen kombiniert werden können, wenn sie sich nicht gegenseitig ausschließen. Diese Computerprogramminstruktionen können einem Rechensystem eines Allzweckcomputers, eines Spezialcomputers oder eines anderen programmierbaren Datenverarbeitungsgeräts zur Verfügung gestellt werden, um eine Maschine zu erzeugen, so dass die Anweisungen, die über das Rechensystem des Computers oder eines anderen programmierbaren Datenverarbeitungsgeräts ausgeführt werden, Mittel zur Implementierung der in dem Flussdiagramm und/oder dem Blockdiagrammblock oder den Blöcken angegebenen Funktionen/Aktionen schaffen.

Diese maschinenausführbaren Anweisungen oder Computerprogrammanweisungen können auch in einem computerlesbaren Medium gespeichert werden, das einen Computer, ein anderes programmierbares Datenverarbeitungsgerät oder andere Vorrichtungen anweisen kann, in einer bestimmten Weise zu funktionieren, so dass die in dem computerlesbaren Medium gespeicherten Instruktionen einen Herstellungsgegenstand erzeugen, der Anweisungen enthält, die die in dem Flussdiagramm und/oder dem Blockdiagrammblock oder den Blöcken angegebene Funktion/-Aktion ausführen.

Die maschinenlesbaren bzw. maschinenausführbaren Anweisungen oder Computerprogramminstruktionen können auch auf einen Computer, ein anderes programmierbares Datenverarbeitungsgerät oder andere Geräte geladen werden, um eine Reihe von Verfahrensschritten zu veranlassen, die auf dem Computer, einem anderen programmierbaren Gerät oder anderen Geräten ausgeführt werden, um einen computerimplementierten Prozess zu erzeugen, so dass die Anweisungen, die auf dem Computer oder einem anderen programmierbaren Gerät ausgeführt werden, Prozesse zur Implementierung der im Flussdiagramm und/oder Blockdiagrammblock oder den Blöcken angegebenen Funktionen/Aktionen bereitstellen.

Eine "Nutzerschnittstelle", wie sie hier verwendet wird, ist eine Schnittstelle, die es einem Nutzer oder Bediener ermöglicht, mit einem Computer oder Computersystem zu interagieren. Eine "Nutzerschnittstelle" kann auch als "menschliche Schnittstellenvorrichtung" bezeichnet werden. Eine Nutzerschnittstelle kann dem Nutzer Informationen oder Daten zur Verfügung stellen und/oder Informationen oder Daten von dem Nutzer empfangen. Eine Nutzerschnittstelle kann es ermöglichen, dass der Computer Eingaben des Nutzers empfängt und Ausgaben des Computers für den Nutzer bereitstellt. Mit anderen Worten, die Nutzerschnittstelle kann es einem Nutzer ermöglichen, einen Computer zu steuern oder zu manipulieren, und die Schnittstelle kann es dem Computer ermöglichen, die Auswirkungen der Steuerung oder Manipulation durch den Nutzer anzuzeigen. Die Anzeige von Daten oder Informationen auf einem Display oder einer grafischen Benutzeroberfläche ist ein Beispiel für die Bereitstellung von Informationen für einen Nutzer. Der Empfang von Daten über eine Tastatur, eine Maus, einen Trackball, ein Touchpad, einen Zeigestock, ein Grafiktablett, einen Joystick, ein Gamepad, eine Webcam, ein Headset, Pedale, einen kabelgebundenen Handschuh, eine Fernbedienung und einen Beschleunigungsmesser sind alles Beispiele für Nutzerschnittstellenkomponenten, die den Empfang von Informationen oder Daten von einem Nutzer ermöglichen.

Eine "Hardwareschnittstelle", wie sie hier verwendet wird, umfasst eine Schnittstelle, die es dem Prozessorsystem bzw. Rechensystem einer Computereinheit bzw. eines Computersystems ermöglicht, mit einem externen Computergerät und/oder einer externen Vorrichtung zu interagieren und/oder diese zu steuern. Eine Hardwareschnittstelle kann es eiern Computereinheit ermöglichen, Steuersignale oder -befehle an ein externes Computergerät und/oder einen externen Apparat zu senden. Eine Hardwareschnittstelle kann es einer Computereinheit auch ermöglichen, Daten mit einer externen Datenverarbeitungsanlage und/oder einem externen Gerät auszutauschen. Beispiele für eine Hardwareschnittstelle sind unter anderem: ein universeller serieller Bus, ein IEEE-1394-Anschluss, ein paralleler Anschluss, ein IEEE-1284-Anschluss, ein serieller Anschluss, ein RS-232-Anschluss, ein IEEE-488-Anschluss, eine Bluetooth-Verbindung, eine drahtlose lokale Netzwerkverbindung, eine TCP/IP-Verbindung, eine Ethernet-Verbindung, eine Steuerspannungsschnittstelle, eine MIDI-Schnittstelle, eine analoge Eingangsschnittstelle und eine digitale Eingangsschnittstelle.

Ein "Display", eine "Anzeige" oder ein "Anzeigegerät", wie hier verwendet, umfasst ein Ausgabegerät oder eine Nutzerschnittstelle, die zur Anzeige von Bildern oder Daten geeignet ist. Eine Anzeige kann visuelle, akustische und/oder taktile Daten ausgeben. Beispiele für eine Anzeige sind unter anderem: ein Computermonitor, ein Fernsehbildschirm, ein Touchscreen, eine taktile elektronische Anzeige, ein Braille-Bildschirm,

Kathodenstrahlröhre (engl.: Cathode Ray Tube/CRT), Speicherröhre, bi-stabiles Display, elektronisches Papier, Vektordisplay, Flachbildschirm, Vakuum-Fluoreszenz-Display (engl.: Vacuum Fluorescent display/VF-Display), Leuchtdioden-Display (engl.: Light Emitting Diode/LED), Elektrolumineszenz-Display (engl.: Electroluminescent Display/ELD), Plasma-Display-Panel (engl.: Plasma Display Panels/PDP), Flüssigkristall-Display (engl.: Liquid Crystal Display/LCD), organisches Leuchtdioden-Display (engl.: Organic Light-Emitting Diode Displays/OLED), Projektor und Head-Mounted Display.

## LISTE DER BEZUGSZEICHEN

| | |
|---|---|
| 100 | zu sichernde digitale Datei |
| 102 | digitales Wasserzeichen |
| 104 | geänderte digitale Datei |
| 106 | Datenblock |
| 107 | geänderter Datenblock |
| 108 | Datenelement |
| 110 | Pixel |
| 112 | Koeffizientenmatrix |
| 114 | geänderte Koeffizientenmatrix |
| 116 | Koeffizient |
| 118 | niedriger Frequenzbereich |
| 120 | mittlerer Frequenzbereich |
| 122 | hoher Frequenzbereich |
| 130 | Amplitude |
| 132 | Amplitude |

| | |
|---|---|
| 300 | Ursprung |
| 302 | Empfänger |
| 304 | Empfänger-ID |
| 306 | Netzwerk |
| 308 | unautorisierte Dritte |
| 400 | Computervorrichtung |
| 402 | Prozessoreinheit |
| 404 | Hardwareschnittstelle |
| 406 | Nutzerschnittstelle |
| 408 | Speichereinheit |
| 410 | maschinenlesbare Programminstruktionen |
| 412 | transformierte Datei |
| 414 | geänderte transformierte Datei |
| 500 | Computervorrichtung |
| 502 | Prozessoreinheit |
| 504 | Hardwareschnittstelle |
| 506 | Nutzerschnittstelle |
| 508 | Speichereinheit |
| 510 | maschinenlesbare Programminstruktionen |

**Patentansprüche**

1. Computerimplementiertes Verfahren zum Sichern einer Datei (100) unter Verwendung eines digitalen Wasserzeichens (102), wobei das Verfahren umfasst:

   Empfangen der zu sichernden Datei (100),
   Empfangen des in die zu sichernde Datei (100) einzubettenden Wasserzeichens (102), welches als ein Herkunftsnachweis der zu sichernden Datei (100) konfiguriert ist und einen der zu sichernden Datei (100) zugeordneten Ursprung (300) identifiziert, wobei das Wasserzeichen (102) eine Mehrzahl von Bitsequenzen umfasst,
   Aufteilen der gesamten zu sichernden Datei (100) in eine Mehrzahl von Datenblöcke (106),
   Transformieren und Gruppieren der Datenblöcke (106) in eine Mehrzahl von Gruppen, wobei das Transformieren ein Transformieren der Datenblöcke (106) jeweils in eine Koeffizientenmatrix (112) mit einer Mehrzahl von Koeffizienten einer auf den entsprechenden Datenblock (106) angewendeten diskreten Frequenztransformation umfasst, wobei es sich bei der diskreten Frequenztransformation um eine der folgenden diskreten Transformationen handelt: eine diskrete Kosinustransformation, eine diskrete Sinustransformation; wobei allen Gruppen jeweils für jede Bitsequenz des Wasserzeichens (102) eine Koeffizientenmatrix (112) zugeordnet wird,
   Einbetten des Wasserzeichens (102) in jede Gruppe der Mehrzahl von Gruppen, wobei in jeder Gruppe der Mehrzahl von Gruppen jeweils ein Koeffizient pro zugeordneter Koeffizientenmatrix (112) in Abhängigkeit von einem Wert der der entsprechenden Koeffizientenmatrix (112) zugeordneten Bitsequenzen des Wasserzeichens (102) geändert wird,
   Rücktransformation der geänderten Koeffizientenmatrizen (114) jeweils in einen geänderten Datenblock (107) unter Verwendung einer auf die entsprechende Koeffizientenmatrix (114) angewendeten inversen diskreten Frequenztransformation,
   Bereitstellen der resultierenden geänderten Datei (104).

2. Verfahren nach Anspruch 1, wobei die Mehrzahl von Bitsequenzen ein oder mehrere Kennungen in Form von ein oder mehreren Sätzen von ein oder mehreren vorbestimmten Bitsequenzen, welche das Wasserzeichen (102) einrahmen und einen Anfang sowie ein Ende des Wasserzeichens (102) kennzeichnen.

3. Verfahren nach einem der vorangehenden Ansprüche, wobei innerhalb der Gruppen jeweils diejenigen Koeffizienten der Koeffizientenmatrizen (112) der entsprechenden Gruppe, welche in Abhängigkeit von dem Wert der der entsprechenden Koeffizientenmatrix (112) zugeordneten Bitsequenzen des Wasserzeichens (102) geändert werden, gemäß einer vordefinierten ersten Verteilung variiert werden.

4. Verfahren nach Anspruch 3, wobei es sich bei der vordefinierten ersten Verteilung um eine unter Verwendung jeweils derselben ersten Initialisierungsdaten reproduzierbare erste Zufallsverteilung handelt.

5. Verfahren nach einem der vorangehenden Ansprüche, wobei innerhalb der Gruppen jeweils eine Art der Änderung der Koeffizienten der Koeffizientenmatrizen (112) der entsprechenden Gruppe, welche in Abhängigkeit von dem Wert der der entsprechenden Koeffizientenmatrix (112) zugeordneten Bitsequenzen des Wasserzeichens (102) geändert werden, gemäß einer vordefinierten zweiten Verteilung variiert wird.

6. Verfahren nach Anspruch 5, wobei es sich bei der vordefinierten zweiten Verteilung um eine unter Verwendung jeweils derselben zweiten Initialisierungsdaten reproduzierbare zweite Zufallsverteilung handelt.

7. Verfahren nach einem der vorangehenden Ansprüche, wobei die Koeffizienten der Koeffizientenmatrizen (112) unterschiedlichen Frequenzen zuordnet sind, wobei die Frequenzen jeweils zumindest in Frequenzen eines niedrigen Frequenzbereichs (118) und eines hohen Frequenzbereichs (122) aufgeteilt sind, wobei Koeffizienten (116) der Koeffizientenmatrizen (112), welche Frequenzen des hohen Frequenzbereichs (122) zugeordnet sind, jeweils von dem Ändern in Abhängigkeit von dem Wasserzeichen (102) ausgeschlossen werden.

8. Verfahren nach einem der vorangehenden Ansprüche, wobei das Wasserzeichen (102) ferner einem bestimmungsmäßigen Empfänger (302) der zu sichernden Datei (100) zugeordnet und dazu konfiguriert ist, den bestimmungsmäßigen Empfänger (302) zu identifizieren.

9. Verfahren nach einem der vorangehenden Ansprüche, wobei Parameter in einem Register gespeichert werden, welche das Einbetten des Wasserzeichens (102) in die zu sichernde Datei (100) beschreiben und dazu konfiguriert sind, eine Prüfung der resultierenden geänderten Datei (104) auf ein Vorhandensein des Wasserzeichens (102) in der entsprechenden Datei (104) zu ermöglichen.

10. Verfahren nach einem der vorangehenden Ansprüche, wobei das Ändern der Koeffizienten (116) der Koeffizientenmatrizen (112) in Abhängigkeit von den Bitsequenzen des Wasserzeichens (102) ein oder mehrere der folgenden Arten von Änderungen umfasst: ein bitsequenzabhängiges Ändern eines Bits der Koeffizienten (116), eine bitsequenzabhängige Auswahl einer zu ändernden Dezimalstelle der Koeffizienten (116), ein bitsequenzabhängiges Hinzuaddieren und Subtrahieren eines vordefinierten Werts von den Koeffizienten (116), ein bitsequenzabhängiges Aufrunden und Abrunden der Koeffizienten (116), ein bitsequenzabhängiges Aufrunden der Koeffizienten (116) auf gerade und ungerade Werte, ein bitsequenzabhängiges Abrunden der Koeffizienten (116) auf gerade und ungerade Werte.

11. Verfahren nach einem der vorangehenden Ansprüche, wobei es sich bei der zu sichernden Datei (100) um eine der folgenden Arten von Dateien handelt: eine Bilddatei, eine Audiodatei, eine Videodatei, und/oder wobei es sich bei dem Wasserzeichen (102) um eines der folgenden Arten handelt: eine Zeichenfolge, eine Textdatei, eine Bilddatei, eine Audiosequenz.

12. Computerimplementiertes Verfahren zum Identifizieren eines Ursprungs (300) einer zu prüfenden Datei (104) unter Verwendung eines digitalen Wasserzeichens (102), welches unter Verwendung eines Verfahrens nach einem der vorangehenden Ansprüche mehrfach in redundanter Form in die Datei (104) eingebettet ist und den zu identifizierenden Ursprung (300) angibt, wobei das Verfahren umfasst:

Empfangen der zu prüfenden Datei (104),
Aufteilen der zu prüfenden Datei (104) in eine Mehrzahl von Datenblöcke (107),
Transformieren zumindest eines Teils der Datenblöcke (107) jeweils in eine Koeffizientenmatrix (114) mit einer Mehrzahl von Koeffizienten (116) einer auf den entsprechenden Datenblock (107) angewendeten diskreten Frequenztransformation wobei es sich bei der diskreten Frequenztransformation um eine der folgenden diskreten Transformationen handelt: eine diskrete Kosinustransformation, eine diskrete Sinustransformation,
Bestimmen des in die zu prüfende Datei (104) eingebetteten Wasserzeichens (102) unter Verwendung der aus den transformierten Datenblöcken (107) resultierenden Koeffizientenmatrizen (114), wobei in den Koeffizientenmatrizen (114) jeweils ein in Abhängigkeit von einem Wert einer der entsprechenden Koeffizientenmatrix (114) zugeordneten Bitsequenz des Wasserzeichens (102) geänderter Koeffizient (116) bestimmt wird, wobei unter Verwendung des entsprechenden Koeffizienten (116) die jeweilige zugeordnete Bitsequenz bestimmt wird,
Identifizieren des der zu prüfenden Datei (104) zugeordneten Ursprungs (300) unter Verwendung des bestimmten Wasserzeichens (102).

13. Gesicherte Datei (104), in welche zur Sicherung ein Wasserzeichen (102), das als Herkunftsnachweis einen der Datei (104) zugeordneten Ursprung (300) identifiziert, mehrfach in redundanter Form unter Verwendung des Verfahrens nach einem der vorangehenden Ansprüche 1 bis 12 eingebettet ist.

14. Computerprogramm zum Sichern einer Datei (100) unter Verwendung eines digitalen Wasserzeichens (102), wobei das Computerprogramm maschinenlesbare Programminstruktionen (410) umfasst, wobei ein Ausführen der maschinenlesbaren Programminstruktionen (410) durch eine Prozessoreinheit (402) einer Computervorrichtung (400) die Computervorrichtung (400) veranlasst zum:

Empfangen der zu sichernden Datei (100),
Empfangen des in die zu sichernde Datei (100) einzubettenden Wasserzeichens (102), welches als ein Herkunftsnachweis der zu sichernden Datei (100) konfiguriert ist und einen der zu sichernden Datei (100) zugeordneten Ursprung (300) identifiziert, wobei das Wasserzeichen (102) eine Mehrzahl von Bitsequenzen umfasst,
Aufteilen der gesamten zu sichernden Datei (100) in eine Mehrzahl von Datenblöcke (106),
Transformieren und Gruppieren der Datenblöcke (106) in eine Mehrzahl von Gruppen, wobei das Transformieren ein Transformieren der Datenblöcke (106) jeweils in eine Koeffizientenmatrix (112) mit einer Mehrzahl von Koeffizienten (116) einer auf den entsprechenden Datenblock (106) angewendeten diskreten Frequenztransformation umfasst, wobei es sich bei der diskreten Frequenztransformation um eine der folgenden diskreten Transformationen handelt: eine diskrete Kosinustransformation, eine diskrete Sinustransformation; wobei allen Gruppen jeweils für jede Bitsequenz des Wasserzeichens (102) eine Koeffizientenmatrix (112) zugeordnet wird,
Einbetten des Wasserzeichens (102) in jede Gruppe der Mehrzahl von Gruppen, wobei in jeder Gruppe der Mehrzahl von Gruppen jeweils ein Koeffizient (116) pro zugeordneter Koeffizientenmatrix (112) in Abhängigkeit von einem Wert der der entsprechenden Koeffizientenmatrix (112) zugeordneten Bitsequenzen des Wasserzeichens (102) geändert wird,
Rücktransformation der geänderten Koeffizientenmatrizen (114) jeweils in einen geänderten Datenblock (107) unter Verwendung einer auf die entsprechende Koeffizientenmatrix (114) angewendeten inversen diskreten Frequenztransformation,
Bereitstellen der resultierenden geänderten Datei (104).

15. Computervorrichtung (400) zum Sichern einer Datei (100) unter Verwendung eines digitalen Wasserzeichens (102), wobei die Computervorrichtung (400) eine Prozessoreinheit (402) und eine Speichereinheit (408) mit maschinenlesbare Programminstruktionen (410) umfasst, wobei ein Ausführen der maschinenlesbaren Programminstruktionen (410) durch die Prozessoreinheit (402) die Computervorrichtung (400) veranlasst zum:

Empfangen der zu sichernden Datei (100),
Empfangen des in die zu sichernde Datei (100) einzubettenden Wasserzeichens (102), welches als ein Herkunftsnachweis der zu sichernden Datei (100) konfiguriert ist und einen der zu sichernden Datei (100) zugeordneten Ursprung (300) identifiziert, wobei das Wasserzeichen (102) eine Mehrzahl von Bitsequenzen umfasst,
Aufteilen der gesamten zu sichernden Datei (100) in eine Mehrzahl von Datenblöcke (106),
Transformieren und Gruppieren der Datenblöcke (106) in eine Mehrzahl von Gruppen, wobei das Transformieren ein Transformieren der Datenblöcke (106) jeweils in eine Koeffizientenmatrix (112) mit einer Mehrzahl von Koeffizienten (116) einer auf den entsprechenden Datenblock (106) angewendeten diskreten Frequenztransformation umfasst, wobei es sich bei der diskreten Frequenztransformation um eine der folgenden diskreten Transformationen handelt: eine diskrete Kosinustransformation, eine diskrete Sinustransformation; wobei allen Gruppen jeweils für jede Bitsequenz des Wasserzeichens (102) eine Koeffizientenmatrix (112) zugeordnet wird,
Einbetten des Wasserzeichens (102) in jede Gruppe der Mehrzahl von Gruppen, wobei in jeder Gruppe der Mehrzahl von Gruppen jeweils ein Koeffizient (116) pro zugeordneter Koeffizientenmatrix (112) in Abhängigkeit von einem Wert der der entsprechenden Koeffizientenmatrix (112) zugeordneten Bitsequenzen des Wasserzeichens (102) geändert wird,
Rücktransformation der geänderten Koeffizientenmatrizen (114) jeweils in einen geänderten Datenblock (107) unter Verwendung einer auf die entsprechende Koeffizientenmatrix (114) angewendeten inversen diskreten Frequenztransformation,
Bereitstellen der resultierenden geänderten Datei (104).

**Geänderte Patentansprüche gemäss Regel 137(2) EPÜ.**

1. Computerimplementiertes Verfahren zum Sichern einer Datei (100) unter Verwendung eines digitalen Wasserzeichens (102), wobei das Verfahren umfasst:

Empfangen der zu sichernden Datei (100),

Empfangen des in die zu sichernde Datei (100) einzubettenden Wasserzeichens (102), welches als ein Herkunftsnachweis der zu sichernden Datei (100) konfiguriert ist und einen der zu sichernden Datei (100) zugeordneten Ursprung (300) identifiziert, wobei das Wasserzeichen (102) eine Mehrzahl von Bitsequenzen umfasst,

Aufteilen der gesamten zu sichernden Datei (100) in eine Mehrzahl von Datenblöcken (106),

Transformieren und Gruppieren der Datenblöcke (106) in eine Mehrzahl von Gruppen, wobei das Transformieren ein Transformieren der Datenblöcke (106) jeweils in eine Koeffizientenmatrix (112) mit einer Mehrzahl von Koeffizienten einer auf den entsprechenden Datenblock (106) angewendeten diskreten Frequenztransformation umfasst, wobei es sich bei der diskreten Frequenztransformation um eine der folgenden diskreten Transformationen handelt: eine diskrete Kosinustransformation, eine diskrete Sinustransformation; wobei allen Gruppen jeweils für jede Bitsequenz des Wasserzeichens (102) eine Koeffizientenmatrix (112) zugeordnet wird,

Einbetten des Wasserzeichens (102) in jede Gruppe der Mehrzahl von Gruppen, wobei in jeder Gruppe der Mehrzahl von Gruppen jeweils ein Koeffizient pro zugeordneter Koeffizientenmatrix (112) in Abhängigkeit von einem Wert der der entsprechenden Koeffizientenmatrix (112) zugeordneten Bitsequenz des Wasserzeichens (102) geändert wird,

Rücktransformation der geänderten Koeffizientenmatrizen (114) jeweils in einen geänderten Datenblock (107) unter Verwendung einer auf die entsprechende Koeffizientenmatrix (114) angewendeten inversen diskreten Frequenztransformation,

Bereitstellen der resultierenden geänderten Datei (104).

2. Verfahren nach Anspruch 1, wobei die Mehrzahl von Bitsequenzen ein oder mehrere Kennungen in Form von ein oder mehreren Sätzen von ein oder mehreren vorbestimmten Bitsequenzen, welche das Wasserzeichen (102) einrahmen und einen Anfang sowie ein Ende des Wasserzeichens (102) kennzeichnen.

3. Verfahren nach einem der vorangehenden Ansprüche, wobei innerhalb der Gruppen jeweils diejenigen Koeffizienten der Koeffizientenmatrizen (112) der entsprechenden Gruppe, welche in Abhängigkeit von dem Wert der der entsprechenden Koeffizientenmatrix (112) zugeordneten Bitsequenz des Wasserzeichens (102) geändert werden, gemäß einer vordefinierten ersten Verteilung variiert werden.

4. Verfahren nach Anspruch 3, wobei es sich bei der vordefinierten ersten Verteilung um eine unter Verwendung jeweils derselben ersten Initialisierungsdaten reproduzierbare erste Zufallsverteilung handelt.

5. Verfahren nach einem der vorangehenden Ansprüche, wobei innerhalb der Gruppen jeweils eine Art der Änderung der Koeffizienten der Koeffizientenmatrizen (112) der entsprechenden Gruppe, welche in Abhängigkeit von dem Wert der der entsprechenden Koeffizientenmatrix (112) zugeordneten Bitsequenz des Wasserzeichens (102) geändert werden, gemäß einer vordefinierten zweiten Verteilung variiert wird.

6. Verfahren nach Anspruch 5, wobei es sich bei der vordefinierten zweiten Verteilung um eine unter Verwendung jeweils derselben zweiten Initialisierungsdaten reproduzierbare zweite Zufallsverteilung handelt.

7. Verfahren nach einem der vorangehenden Ansprüche, wobei die Koeffizienten der Koeffizientenmatrizen (112) unterschiedlichen Frequenzen zugeordnet sind, wobei die Frequenzen jeweils zumindest in Frequenzen eines niedrigen Frequenzbereichs (118) und eines hohen Frequenzbereichs (122) aufgeteilt sind, wobei Koeffizienten (116) der Koeffizientenmatrizen (112), welche Frequenzen des hohen Frequenzbereichs (122) zugeordnet sind, jeweils von dem Ändern in Abhängigkeit von dem Wasserzeichen (102) ausgeschlossen werden.

8. Verfahren nach einem der vorangehenden Ansprüche, wobei das Wasserzeichen (102) ferner einem bestimmungsmäßigen Empfänger (302) der zu sichernden Datei (100) zugeordnet und dazu konfiguriert ist, den bestimmungsmäßigen Empfänger (302) zu identifizieren.

9. Verfahren nach einem der vorangehenden Ansprüche, wobei Parameter in einem Register gespeichert werden, welche das Einbetten des Wasserzeichens (102) in die zu sichernde Datei (100) beschreiben und dazu konfiguriert sind, eine Prüfung der resultierenden geänderten Datei (104) auf ein Vorhandensein des Wasserzeichens (102) in der entsprechenden Datei (104) zu ermöglichen.

10. Verfahren nach einem der vorangehenden Ansprüche, wobei das Ändern der Koeffizienten (116) der Koeffizientenmatrizen (112) in Abhängigkeit von den Bitsequenzen des Wasserzeichens (102) ein oder mehrere der folgenden Arten von Änderungen umfasst: ein bitsequenzabhängiges Ändern eines Bits der Koeffizienten (116), eine bitsequenzabhängige Auswahl einer zu ändernden Dezimalstelle der Koeffizienten (116), ein bitsequenzabhängiges Hinzuaddieren und Subtrahieren eines vordefinierten Werts von den Koeffizienten (116), ein bitsequenzabhängiges Aufrunden und Abrunden der Koeffizienten (116), ein bitsequenzabhängiges Aufrunden der Koeffizienten (116) auf gerade und ungerade Werte, ein bitsequenzabhängiges Abrunden der Koeffizienten (116) auf gerade und ungerade Werte.

11. Verfahren nach einem der vorangehenden Ansprüche, wobei es sich bei der zu sichernden Datei (100) um eine der folgenden Arten von Dateien handelt: eine Bilddatei, eine Audiodatei, eine Videodatei, und/oder wobei es sich bei dem Wasserzeichen (102) um eines der folgenden Arten handelt: eine Zeichenfolge, eine Textdatei, eine Bilddatei, eine Audiosequenz.

12. Computerimplementiertes Verfahren zum Identifizieren eines Ursprungs (300) einer zu prüfenden Datei (104) unter Verwendung eines digitalen Wasserzeichens (102), welches unter Verwendung eines Verfahrens nach einem der vorangehenden Ansprüche mehrfach in redundanter Form in die Datei (104) eingebettet ist und den zu identifizierenden Ursprung (300) angibt, wobei das Verfahren umfasst:

Empfangen der zu prüfenden Datei (104),
Aufteilen der zu prüfenden Datei (104) in eine Mehrzahl von Datenblöcken (107),
Transformieren zumindest eines Teils der Datenblöcke (107) jeweils in eine Koeffizientenmatrix (114) mit einer Mehrzahl von Koeffizienten (116) einer auf den entsprechenden Datenblock (107) angewendeten diskreten Frequenztransformation wobei es sich bei der diskreten Frequenztransformation um eine der folgenden diskreten Transformationen handelt: eine diskrete Kosinustransformation, eine diskrete Sinustransformation,
Bestimmen des in die zu prüfende Datei (104) eingebetteten Wasserzeichens (102) unter Verwendung der aus den transformierten Datenblöcken (107) resultierenden Koeffizientenmatrizen (114), wobei in den Koeffizientenmatrizen (114) jeweils ein in Abhängigkeit von einem Wert einer der entsprechenden Koeffizientenmatrix (114) zugeordneten Bitsequenz des Wasserzeichens (102) geänderter Koeffizient (116) bestimmt wird, wobei unter Verwendung des entsprechenden Koeffizienten (116) die jeweilige zugeordnete Bitsequenz bestimmt wird,
Identifizieren des der zu prüfenden Datei (104) zugeordneten Ursprungs (300) unter Verwendung des bestimmten Wasserzeichens (102).

13. Gesicherte Datei (104), in welche zur Sicherung ein Wasserzeichen (102), das als Herkunftsnachweis einen der Datei (104) zugeordneten Ursprung (300) identifiziert, mehrfach in redundanter Form unter Verwendung des Verfahrens nach einem der vorangehenden Ansprüche 1 bis 12 eingebettet ist.

14. Computerprogramm zum Sichern einer Datei (100) unter Verwendung eines digitalen Wasserzeichens (102), wobei das Computerprogramm maschinenlesbare Programminstruktionen (410) umfasst, wobei ein Ausführen der maschinenlesbaren Programminstruktionen (410) durch eine Prozessoreinheit (402) einer Computervorrichtung (400) die Computervorrichtung (400) veranlasst zum:

Empfangen der zu sichernden Datei (100),
Empfangen des in die zu sichernde Datei (100) einzubettenden Wasserzeichens (102), welches als ein Herkunftsnachweis der zu sichernden Datei (100) konfiguriert ist und einen der zu sichernden Datei (100) zugeordneten Ursprung (300) identifiziert, wobei das Wasserzeichen (102) eine Mehrzahl von Bitsequenzen umfasst,
Aufteilen der gesamten zu sichernden Datei (100) in eine Mehrzahl von Datenblöcken (106),
Transformieren und Gruppieren der Datenblöcke (106) in eine Mehrzahl von Gruppen, wobei das Transformieren ein Transformieren der Datenblöcke (106) jeweils in eine Koeffizientenmatrix (112) mit einer Mehrzahl von Koeffizienten (116) einer auf den entsprechenden Datenblock (106) angewendeten diskreten Frequenztransformation umfasst, wobei es sich bei der diskreten Frequenztransformation um eine der folgenden diskreten Transformationen handelt: eine diskrete Kosinustransformation, eine diskrete Sinustransformation; wobei allen Gruppen jeweils für jede Bitsequenz des Wasserzeichens (102) eine Koeffizientenmatrix (112) zugeordnet wird,
Einbetten des Wasserzeichens (102) in jede Gruppe der Mehrzahl von Gruppen, wobei in jeder Gruppe der Mehrzahl von Gruppen jeweils ein Koeffizient (116) pro zugeordneter Koeffizientenmatrix (112) in Abhängigkeit von einem Wert der der entsprechenden Koeffizientenmatrix (112) zugeordneten Bitsequenz des Wasserzeichens (102) geändert wird,
Rücktransformation der geänderten Koeffizientenmatrizen (114) jeweils in einen geänderten Datenblock (107) unter Verwendung einer auf die entsprechende Koeffizientenmatrix (114) angewendeten inversen diskreten Frequenztransformation,
Bereitstellen der resultierenden geänderten Datei (104).

15. Computervorrichtung (400) zum Sichern einer Datei (100) unter Verwendung eines digitalen Wasserzeichens (102), wobei die Computervorrichtung (400) eine Prozessoreinheit (402) und eine Speichereinheit (408) mit maschinenlesbare Programminstruktionen (410) umfasst, wobei ein Ausführen der maschinenlesbaren Programminstruktionen (410) durch die Prozessoreinheit (402) die Computervorrichtung (400) veranlasst zum:

Empfangen der zu sichernden Datei (100),
Empfangen des in die zu sichernde Datei (100) einzubettenden Wasserzeichens (102), welches als ein Herkunftsnachweis der zu sichernden Datei (100) konfiguriert ist und einen der zu sichernden Datei (100) zugeordneten Ursprung (300) identifiziert, wobei das Wasserzeichen (102) eine Mehrzahl von Bitsequenzen umfasst,
Aufteilen der gesamten zu sichernden Datei (100) in eine Mehrzahl von Datenblöcken (106),
Transformieren und Gruppieren der Datenblöcke (106) in eine Mehrzahl von Gruppen, wobei das Transformieren ein Transformieren der Datenblöcke (106) jeweils in eine Koeffizientenmatrix (112) mit einer Mehrzahl von Koeffizienten (116) einer auf den entsprechenden Datenblock (106) angewendeten diskreten Frequenztransformation umfasst, wobei es sich bei der diskreten Frequenztransformation um eine der folgenden diskreten Transformationen handelt: eine diskrete Kosinustransformation, eine diskrete Sinustransformation; wobei allen Gruppen jeweils für jede Bitsequenz des Wasserzeichens (102) eine Koeffizientenmatrix (112) zugeordnet wird,
Einbetten des Wasserzeichens (102) in jede Gruppe der Mehrzahl von Gruppen, wobei in jeder Gruppe der Mehrzahl von Gruppen jeweils ein Koeffizient (116) pro zugeordneter Koeffizientenmatrix (112) in Abhängigkeit von einem Wert der der entsprechenden Koeffizientenmatrix (112) zugeordneten Bitsequenz des Wasserzeichens (102) geändert wird,
Rücktransformation der geänderten Koeffizientenmatrizen (114) jeweils in einen geänderten Datenblock (107) unter Verwendung einer auf die entsprechende Koeffizientenmatrix (114) angewendeten inversen diskreten Frequenztransformation,
Bereitstellen der resultierenden geänderten Datei (104).

| Empfangen zu sichernder Datei | 200 |
| Empfangen einzubettendes Wasserzeichen | 202 |
| Aufteilen in Datenblöcke | 204 |
| Transformieren der Datenblöcke in Koeffizientenmatrizen | 206 |
| Gruppieren der Koeffizientenmatrizen | 208 |
| Einbetten des Wasserzeichens | 210 |
| Rücktransformation geänderter Koeffizientenmatrizen | 212 |
| Bereitstellen resultierender geänderter Datei | 214 |

## Fig. 1

| Empfangen zu prüfender Datei | <u>220</u> |

↓

| Aufteilen in Datenblöcke | <u>222</u> |

↓

| Transformieren der Datenblöcke in Koeffizientenmatrizen | <u>224</u> |

↓

| Bestimmen Wasserzeichen | <u>234</u> |

↓

| Identifizieren Ursprung | <u>236</u> |

Fig. 2

| Empfangen zu prüfender Datei | 220 |
| Aufteilen in Datenblöcke | 222 |
| Transformieren der Datenblöcke in Koeffizientenmatrizen | 224 |
| Empfangen transformierte Referenzdatei | 225 |
| Bestimmen Unterschiede | 232 |
| Bestimmen Wasserzeichen | 234 |
| Identifizieren Ursprung | 236 |

Fig. 3

| Empfangen zu prüfender Datei | 220 |
|---|---|

↓

| Aufteilen in Datenblöcke | 222 |
|---|---|

↓

| Transformieren der Datenblöcke in Koeffizientenmatrizen | 224 |
|---|---|

↓

| Empfangen Referenzdatei | 226 |
|---|---|

↓

| Aufteilen in Datenblöcke | 228 |
|---|---|

↓

| Transformieren der Datenblöcke in Koeffizientenmatrizen | 230 |
|---|---|

↓

| Bestimmen Unterschiede | 232 |
|---|---|

↓

| Bestimmen Wasserzeichen | 234 |
|---|---|

↓

| Identifizieren Ursprung | 236 |
|---|---|

Fig. 4

118                116   112   120

Niedrige Frequenzen

Mittlere Frequenzen

Hohe Frequenzen

122

## Fig. 5

112

116

| C (0,0) | C (0,1) | C (0,2) | C (0,3) | C (0,4) | C (0,5) | C (0,6) | C (0,7) |
|---------|---------|---------|---------|---------|---------|---------|---------|
| C (1,0) | C (1,1) | C (1,2) | C (1,3) | C (1,4) | C (1,5) | C (1,6) | C (1,7) |
| C (2,0) | C (2,1) | C (2,2) | C (2,3) | C (2,4) | C (2,5) | C (2,6) | C (2,7) |
| C (3,0) | C (3,1) | C (3,2) | C (3,3) | C (3,4) | C (3,5) | C (3,6) | C (3,7) |
| C (4,0) | C (4,1) | C (4,2) | C (4,3) | C (4,4) | C (4,5) | C (4,6) | C (4,7) |
| C (5,0) | C (5,1) | C (5,2) | C (5,3) | C (5,4) | C (5,5) | C (5,6) | C (5,7) |
| C (6,0) | C (6,1) | C (6,2) | C (6,3) | C (6,4) | C (6,5) | C (6,6) | C (6,7) |
| C (7,0) | C (7,1) | C (7,2) | C (7,3) | C (7,4) | C (7,5) | C (7,6) | C (7,7) |

## Fig. 6

102

Fig. 7

Fig. 8

Fig. 9

Fig. 10

Fig. 11

Fig. 12

Fig. 13

106 / 108

| | 0 | 1 | 2 | 3 | 4 | 5 | 6 | 7 |
|---|---|---|---|---|---|---|---|---|
| 0 | 158.0 | 155.0 | 148.0 | 148.0 | 155.0 | 164.0 | 166.0 | 166.0 |
| 1 | 155.0 | 152.0 | 149.0 | 151.0 | 160.0 | 169.0 | 169.0 | 167.0 |
| 2 | 151.0 | 150.0 | 151.0 | 156.0 | 161.0 | 165.0 | 168.0 | 167.0 |
| 3 | 152.0 | 153.0 | 155.0 | 159.0 | 161.0 | 162.0 | 167.0 | 167.0 |
| 4 | 158.0 | 159.0 | 159.0 | 159.0 | 162.0 | 165.0 | 167.0 | 170.0 |
| 5 | 163.0 | 165.0 | 161.0 | 159.0 | 163.0 | 169.0 | 168.0 | 172.0 |
| 6 | 170.0 | 174.0 | 173.0 | 171.0 | 166.0 | 162.0 | 171.0 | 170.0 |
| 7 | 174.0 | 177.0 | 174.0 | 172.0 | 170.0 | 167.0 | 168.0 | 167.0 |

Fig. 14

107 / 108

| | 0 | 1 | 2 | 3 | 4 | 5 | 6 | 7 |
|---|---|---|---|---|---|---|---|---|
| 0 | 158.15625 | 155.15625 | 148.15625 | 148.15625 | 155.15625 | 164.15625 | 166.15625 | 166.15625 |
| 1 | 155.15625 | 152.15625 | 149.15625 | 151.15625 | 160.15625 | 169.15625 | 169.15625 | 167.15625 |
| 2 | 151.15625 | 150.15625 | 151.15625 | 156.15625 | 161.15625 | 165.15625 | 168.15625 | 167.15625 |
| 3 | 152.15625 | 153.15625 | 155.15625 | 159.15625 | 161.15625 | 162.15625 | 167.15625 | 167.15625 |
| 4 | 158.15625 | 159.15625 | 159.15625 | 159.15625 | 162.15625 | 165.15625 | 167.15625 | 170.15625 |
| 5 | 163.15625 | 165.15625 | 161.15625 | 159.15625 | 163.15625 | 169.15625 | 168.15625 | 172.15625 |
| 6 | 170.15625 | 174.15625 | 173.15625 | 171.15625 | 166.15625 | 162.15625 | 171.15625 | 170.15625 |
| 7 | 174.15625 | 177.15625 | 174.15625 | 172.15625 | 170.15625 | 167.15625 | 168.15625 | 167.15625 |

Fig. 15

Fig. 16

A                    B                    D

Fig. 17

EP 4 715 639 A1

Fig. 18

Fig. 19

EP 4 715 639 A1

| | 0 | 1 | 2 | 3 | 4 | 5 | 6 | 7 |
|---|---|---|---|---|---|---|---|---|
| 0 | 158.90625 | 155.09375 | 148.09375 | 148.90625 | 155.90625 | 164.09375 | 166.09375 | 166.90625 |
| 1 | 155.09375 | 152.90625 | 149.90625 | 151.09375 | 160.09375 | 169.90625 | 169.90625 | 167.09375 |
| 2 | 151.09375 | 150.90625 | 151.90625 | 156.09375 | 161.09375 | 165.90625 | 168.90625 | 167.09375 |
| 3 | 152.90625 | 153.09375 | 155.09375 | 159.90625 | 161.90625 | 162.09375 | 167.09375 | 167.90625 |
| 4 | 158.90625 | 159.09375 | 159.09375 | 159.90625 | 162.90625 | 165.09375 | 167.09375 | 170.90625 |
| 5 | 163.09375 | 165.90625 | 161.90625 | 159.09375 | 163.09375 | 169.90625 | 168.90625 | 172.09375 |
| 6 | 170.09375 | 174.90625 | 173.90625 | 171.09375 | 166.09375 | 162.90625 | 171.90625 | 170.09375 |
| 7 | 174.90625 | 177.09375 | 174.09375 | 172.90625 | 170.90625 | 167.09375 | 168.09375 | 167.90625 |

Fig. 20

EP 4 715 639 A1

Fig. 21

| Lauf | Kein Wasserzeichen | Wasserzeichen, DCT[0,0] geänd. | Wasserzeichen, DCT[4,4] geänd. |
|---|---|---|---|
| 1 | 83,01 | 85,58 | 84,29 |
| 2 | 83,65 | 82,53 | 84,13 |
| 3 | 82,21 | 86,54 | 85,58 |
| 4 | 86,70 | 83,65 | 82,37 |
| 5 | 85,58 | 83,94 | 88,14 |
| 6 | 85,42 | 83,17 | 86,22 |
| 7 | 85,42 | 86,53 | 84,94 |
| 8 | 85,10 | 84,13 | 83,81 |
| 9 | 85,50 | 82,53 | 86,06 |
| 10 | 86,22 | 84,78 | 85,74 |
| Mittelwert | 84,88 | 84,34 | 85,13 |
| Std. Abw. | 1,37 | 1,41 | 1,51 |
| Mittelwert + Std. Abw. | 86,25 | 85,75 | 86,64 |
| Mittelwert - Std. Abw. | 83,51 | 82,92 | 83,62 |

Fig. 22

Fig. 23

Fig. 24

Fig. 25

**EUROPÄISCHER RECHERCHENBERICHT**

Europäisches Patentamt
European Patent Office
Office européen des brevets

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | EP 1 589 475 A1 (FRAUNHOFER GES FORSCHUNG [DE]) 26. Oktober 2005 (2005-10-26) | 1,2,5-15 | INV. G06F21/16 |
| Y | * Absatz [0001] - Absatz [0023]; Abbildung 1 * | 3,4 | |
| | ----- | | |
| Y | US 6 983 057 B1 (HO ANTHONY TUNG SHUEN [SG] ET AL) 3. Januar 2006 (2006-01-03) | 3,4 | |
| A | * Spalte 7, Zeile 45 - Spalte 11, Zeile 24; Abbildung 7 * | 1,2,5-15 | |
| | ----- | | |
| A | US 2012/093356 A1 (SESHADRI VIVEK [IN] ET AL) 19. April 2012 (2012-04-19) * Absatz [0035] - Absatz [0081] * | 1-15 | |
| | ----- | | |

**RECHERCHIERTE SACHGEBIETE (IPC)**

G06F

Der vorliegende Recherchenbericht wurde für alle Patentansprüche erstellt

| Recherchenort | Abschlußdatum der Recherche | Prüfer |
|---|---|---|
| München | 25. Februar 2025 | Tenbieg, Christoph |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
...............................................................................
& : Mitglied der gleichen Patentfamilie, übereinstimmendes Dokument

EPO FORM 1503 03.82 (P04C03)

## ANHANG ZUM EUROPÄISCHEN RECHERCHENBERICHT
## ÜBER DIE EUROPÄISCHE PATENTANMELDUNG NR.

**EP 24 20 2084**

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

**25-02-2025**

| Im Recherchenbericht angeführtes Patentdokument | Datum der Veröffentlichung | Mitglied(er) der Patentfamilie | | Datum der Veröffentlichung |
|---|---|---|---|---|
| EP 1589475 A1 | 26-10-2005 | AT | E343826 T1 | 15-11-2006 |
| | | EP | 1589475 A1 | 26-10-2005 |
| US 6983057 B1 | 03-01-2006 | AU | 7683398 A | 20-12-1999 |
| | | EP | 1103026 A1 | 30-05-2001 |
| | | JP | 2002517920 A | 18-06-2002 |
| | | TW | 468344 B | 11-12-2001 |
| | | US | 6983057 B1 | 03-01-2006 |
| | | WO | 9963443 A1 | 09-12-1999 |
| US 2012093356 A1 | 19-04-2012 | AU | 2010204612 A1 | 04-08-2011 |
| | | CA | 2749625 A1 | 22-07-2010 |
| | | CN | 102282834 A | 14-12-2011 |
| | | CN | 104112249 A | 22-10-2014 |
| | | EP | 2387846 A1 | 23-11-2011 |
| | | JP | 5568097 B2 | 06-08-2014 |
| | | JP | 2012515513 A | 05-07-2012 |
| | | KR | 20110103468 A | 20-09-2011 |
| | | US | 2010177977 A1 | 15-07-2010 |
| | | US | 2012093356 A1 | 19-04-2012 |
| | | WO | 2010083407 A1 | 22-07-2010 |

EPO FORM P0461

Für nähere Einzelheiten zu diesem Anhang : siehe Amtsblatt des Europäischen Patentamts, Nr.12/82